(19) Europäisches Patentamt
European Patent Office
Office européen des brevets

(11) Publication number: **0 238 626 B1**

# (12) EUROPEAN PATENT SPECIFICATION

(45) Date of publication of patent specification: **03.05.95 Bulletin 95/18**

(51) Int. Cl.$^6$: **G02F 1/13**

(21) Application number: **86906094.7**

(22) Date of filing: **16.09.86**

(86) International application number: **PCT/US86/01927**

(87) International publication number: **WO 87/01822 26.03.87 Gazette 87/07**

## (54) LIQUID CRYSTAL LIGHT-MODULATING MATERIALS.

(30) Priority: **17.09.85 US 776831**
**22.05.86 US 866216**
**27.06.86 US 879269**
**27.06.86 US 879327**

(43) Date of publication of application: **30.09.87 Bulletin 87/40**

(45) Publication of the grant of the patent: **03.05.95 Bulletin 95/18**

(84) Designated Contracting States: **AT BE CH DE FR GB IT LI LU NL SE**

(56) References cited:
**EP-A- 0 004 464**
**EP-A- 0 205 261**
**US-A- 3 935 337**
**US-A- 4 182 700**

(73) Proprietor: **KENT STATE UNIVERSITY**
**East Main & Lincoln Streets**
**Kent, OH 44242 (US)**

(72) Inventor: **DOANE, J., William**
**1618 South Lincoln Street**
**Kent, OH 44240 (US)**
Inventor: **WEST, John, L.**
**5050 Fish Creek Road**
**Stow, OH 44224 (US)**
Inventor: **CHIDICHIMO, Giuseppe**
**Villaggio EuropaöVia Belgrado, 13**
**I-87030 Rende (IT)**
Inventor: **VAZ, Nuno, A., P.**
**29710 Farmbrook Villa Lane**
**Southfield, MI 48034 (US)**
Inventor: **WU, Bao-Gang**
**967 Allerton Street**
**Kent, OH 44240 (US)**
Inventor: **GOLEMME, Attilio**
**350 Silver Oaks Drive**
**Kent, OH 44240 (US)**
Inventor: **ZUMAR, Slobodan**
**917 Allerton Street**
**Kent, OH 44240 (US)**

(74) Representative: **Adams, William Gordon et al**
**RAWORTH, MOSS & COOK**
**36 Sydenham Road**
**Croydon Surrey CR0 2EF (GB)**

EP 0 238 626 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates generally to liquid crystal light control technology and, more specifically, to the manufacture of new liquid crystal materials comprising a light modulating dispersion of liquid crystal microdroplets spontaneously formed and retained in synthetic polymeric matrix, e.g. for use in displays.

### Background Art

Recent developments in commercial fabrication of liquid crystal display devices have been directed toward materials which display images by exploiting the light scattering properties of liquid crystals that are incorporated variously into or onto a plastic sheet or the like, to avoid the sealing problems encountered in conventional cell-type displays. The display characteristics of these materials depend on the size and morphology of the entrapped liquid crystals. Characteristics such as scattering efficiency and switching time between ON and OFF states are affected by the diameter and density of the discrete quantities of liquid crystal.

Proposed types of materials include materials containing encapsulated liquid crystals, and materials with micropores into which liquid crystals are imbibed.

One prior proposal for encapsulating liquid crystals is disclosed in French Patent No. 2,139,537 and involves forming an aqueous emulsion of nematic or cholesteric liquid crystal material with an immiscible binder such a polyvinyl alcohol. The mixture is emulsified in a high speed blender or the like to form droplets of the liquid crystal that are encapsulated by the binder. The encapulated droplets are then coated onto a clear plastic substrate having the usual conducting electrodes. A similar technique is described in U.S. Patent No. 4,435,047. Both these disclosures correspond to the preamble of claims 1, 2, 14 and 15.

Another prior proposal involving filling the open or connected micropores of a plastic sheet with a nematic of other type of liquid crystal is disclosed in U.S. Patent No. 4,048,358. Furthermore, Applied Physics Letters 40(1), 1982, pages 22 to 24 describes the formation of an light modulation device based on controlled refractive match/mismatch between a porous matrix and liquid crystal material within the pores of the matrix.

These prior art techniques involving the mechanical entrapment of liquid crystals have some drawbacks. Encapsulation by emulsification can yield a relatively broad spectrum of capsule diameters which can necessitate size classifying. Entrapment by imbibing into microporous plastic presents the problem of sealing the micropores to prevent leakage of the liquid crystals.

In a similar manner, EP-A-0205261 discloses the preparation of a dispersion of microdroplets of a liquid crystal material in a polymer film. In this case the preparation involves the mixing of the liquid crystal material with a particular type of ultraviolet curable film-forming material, allowing the mixture to stand until microdroplets of a desired size are formed in the mixture, and then rapidly curing the film-forming material to maintain the microdroplet size. In that application there is no teaching or suggestion that the liquid crystal material dissolves in the film-forming material to form a homogeneous solution, and the curing is effected to "freeze" microdroplets already formed. This should be contrasted with the present invention in which the liquid crystal material is dissolved in the matrix precursor, and solidification of the matrix precursor is the cause of microdroplet formation.

Electrical manipulation of these light scattering devices between light scattering and light transmissive modes causes the devides, or imaging-forming segments thereof, to appear opaque in one state and transparent in another state. Thermal manipulation of such device by the application of sufficient heat to induce a transition from the liquid crystalline, light scattering state to the isotropic, light transmissive state causes the materials to switch from an opaque to a clear state.

The operation of most of these types of liquid crystal displays depends upon a constant application of an external field, either electric or thermal, to maintain an image. While this mode of operation is desirable for displays of, for example, time and temperature in which sundry alphanumeric characters are created and subsequently erased by the constant energizing and de-energizing of various picture elements, it would be advantageous in many instances to have a display technology characterized not only by greater ease of preparation but also by image display not dependent upon the constant presence of an applied field. It would also be advantageous to have liquid crystal displays characterized by faster switching times and greater transparencies than previously achievable.

Thus, to be distinguished from the instant invention are prior art teachings of mechanically subdividing a body of liquid crystal into a profusion of particles that are either: (a) individually enrobed or encapsulated in a polymeric sheath (and can be aggregated subsequently to form a coherent, often supported, sheet or the like); or (b) embedded as a batch in a matrix-forming material (that then may be converted into polymeric sheet or the like). Advantages of the instant invention over such teachings include simplicity of preparation, ease of control over the size of the liquid crystal domains and their discontinuity, and theoretically unlimited display

size. Other advantages will be evident hereinafter.

Our copending application WO 85/04262, which designates the states CH, DE, FR, GB and SE under the EPC, and which was published 26th September 1985, relates to the formation of a light modulating material comprising microdroplets of liquid crystal material in a solid, cured, light transmission epoxy resin matrix. Although it does not explicitly disclose or suggest the present invention, and does not enable the skilled reader to practise the present invention in its generality, nevertheless it has now been found that the working of the Examples thereof involves the dissolving of the liquid crystal material in a precursor of the solid epoxy matrix to form a homogeneous solution, and that the subsequent curing of the epoxy resin to form the matrix induces phase separation of the liquid crystal material to provide said microdroplets.

## Disclosure of the Invention

Accordingly the present invention provides a light modulating material as defined in claims 1 and 2, a method of making light modulating material as defined in claims 14 and 15, and a light modulating device as defined in claims 24 and 29.

All aspects of the instant invention that follow involve the spontaneous formation of liquid crystal microdroplets from a solution of a liquid crystal in a synthetic resin matrix-providing composition during the solidifying of the matrix, which is to be light transmissive. Such formation tends to yield microdroplets that are substantially evenly spaced and substantially uniform in size. For simplicity we refer to such formation as one of "phase separation". The matrix can be thermoset or thermoplastic resin (polymer).

An aspect here is a material containing light scattering liquid crystal microdroplets; it is capable of being thermally, electrically, magnetically and electromagnetically addressed to cause the material to be reversibly switched between a light scattering mode and a light transmissive mode. Furthermore, such material is optically responsive to strain, whereby under tension it acts as a polarizer that transmits one component of plane polarized light while scattering the other component. Additionally, its phase separating in the presence of an electric or magnetic field can cause such material to act as an electrically addressable polarizer.

The new light scattering material, if thermoplastic, is characterized by ease of fabrication and the ability to be reworked by simple heating and cooling. Another aspect of the invention is a material fabricated from a thermoplastic resin and a liquid crystal having a liquid crystalline phase to isotropic phase transition temperature above the softening temperature of the matrix; it exhibits a reversible field-independent memory (thermoplastic image memory).

Still another aspect of the invention is a thermoplastic display material having an especially close match of the ordinary index of refraction of the liquid crystal with the matrix that contains some of the crystal dissolved in it, such material can be made to have sub-millisecond switching times, transparencies on the order of 90%, and an electrooptic memory. Such material can be fabricated with high electrical resistivity and permittivity so that it acts as a capacitor to retain a charge when charged between two electrodes, whereby the optic axes of the liquid crystal microdroplets will remain aligned and an image will be retained after the voltage has been turned off (electrostatic image memory).

Yet another aspect of the invention is a light modulating material wherein microdroplet size is regulated by controlling the growth rate of the liquid crystal microdroplets during the phase separation and microdroplet growth is arrested by solidification of the matrix when they have reached a selected average diameter. When prepared in the manner described, the liquid crystal microdroplets have been observed to be of uniform size and spacing and to have a diameter ranging upward from about 0.2 microns. Temperature, relative concentration, and choice of materials determine the growth rate and the resultant microdroplet size and population density. Controlling growth rate allows for fabrication of liquid crystal display devices with optimized display characteristics such as contrast and response times.

In addition to the foregoing light modulating materials, yet further aspects of this invention are electrically responsive and electrically addressable devices for light switching and light polarizing which have in their structure a light modulating material, e.g. a sheet or film of this invention; and yet still further aspects of this invention are broadly the phase separation method for making the inventive, light modulating materials, specific phase separation techniques, and the improvements therein for control of microdroplet size, choice of constituents, reworking of the materials, rendering them light polarizing or especially transparent to light from various directions, and solidifying the matrices in an aligning electric or magnetic field as already discussed above and discussed hereinafter in connection with the light modulating materials themselves.

Still other features and advantages will become apparent to those skilled in the art from the following description of the best modes of the invention and the accompanying drawings.

Brief Description of the Drawings

In Figures 1, 2, 4, 5(a), 6(a), 6(b), 9, 10, 11, 13A and 13B a fragment of three dimensional sheet material of the invention is depicted schematically in cross sectional elevation with a few representative microdroplets of liquid crystal contained in the resin (polymer) matrix providing the continuum of the inventive sheet.

In Figures 3, 5(b), 7(a), 7(b) and 8 such sheet material forms an element of the device depicted.

More particulary Figure 1 illustrates a clear sheet with the microdroplets in the isotropic phase.

Figure 2 illustrates an opaque sheet with the liquid crystal microdroplets in the liquid crystalline phase.

Figure 3 illustrates an electrically actuated device incorporating the sheet in the clear state.

Figure 4 illustrates the sheet in a stretched condition.

Figure 5(a) illustrates the sheet phase separated in an applied field directed in the plane of the sheet.

Figure 5(b) illustrates an electrically actuated device incorporating the sheet of Figure 5(a).

Figure 6(a) illustrates a sheet cured in a field normal to the plane of the film.

Figure 6(b) illustrates the sheet of Figure 6(a) in an applied field directed in the plane of the film.

Figure 7(a) illustrates the sheet in a stressed condition.

Figure 7(b) illustrates an electrically actuated device incorporated the sheet of Figure 7(a).

Figure 8 illustrates a thermoplastic sheet with a portion between electrically actuated electrodes.

Figure 9 illustrates the sheet of Figure 8 with the electric field removed.

Figure 10 illustrates the sheet containing micro-droplets of smectic A liquid crystal in the opaque, focal conic texture state.

Figure 11 illustrates the sheet of Figure 10 in the transparent state.

Figure 12 is a photomicrograph of the material of the invention.

Figures 13A and 13B diagrammatically illustrate scattering or viewing angles of light incident on a microdroplet of liquid crystal.

Figure 14 illustrates an equilibrium phase diagram of a binary mixture of liquid crystal and matrix-producing composition.

Figure 15 illustrates an equilibrium phase diagram of a ternary mixture of liquid crystal and matrix producing composition.

Figure 16 is a schematic of the sequence of steps in the preparation of the material of the invention; and

Figure 17 is a graph of average microdroplet diameter versus rate of cooling of the material of the invention.

Best Mode for Carrying Out the Invention

As used in the specification and the claims, the term "synthetic resin matrix-producing composition" or "matrix-producing composition" is intended to define the material which supplies the solidified resin (polymer) of the product. Prefered matrix-producing compositions with or without dissolved liquid crystal and the resulting solid light modulating material all appear to be fairly hydrophobic.

Such solid resin, for the instant purposes, can be supplied by a matrix-producing composition such as:

i) a mixture of resin and agent that is polymerizable with it to a useful solid (set) condition (that is, whereby the size and position of the microdroplets are fixed in the optical device in the absence of further imposed stress), e.g., by addition or condensation polymerization, typically a fluid mixture of epoxy or polyurethane resin and a curing agent therefor. Preferred polyurethane resins have high tensile and tear strength, A suitable polyurethane producing composition is a mixture based on toluene diisocyanate, polyether glycols, methylenebisisoorthochloroaniline, and various polyols. A solution of unsaturated polyester resin in a polymerizable monomer like styrene, also can provide a thermoset matrix;

ii) a thermoplastic resin (polymer) that can be warmed to dissolve the liquid crystal without degrading it, then cast it out in microdroplets upon cooling to useful solid condition. Typically these include certain thermoplastic epoxy resins, various polymers or copolymers containing vinyl butyral, alkylacrylates, styrene and alkyl substituted styrenes, isobutylene, vinyl chloride, butadiene, methylbutene and vinyl acetate;

iii) a thermoplastic resin (polymer) that can be put into homogeneous solution with the liquid crystal and a volatile solvent at a temperature that will not degrade the liquid crystal, then be solidified to cast it out in microdroplets by driving off the solvent, as by evaporation, (again without such degradation) using if necessary or desirable warming and possibly eventual cooling; and

iv) polymerizable monomers, dimers, oligomers and prepolymers and their mixtures that in liquid state will dissolve the liquid crystal, then cast it out as microdroplets when polymerized to form a useful solid under conditions that preclude degradation of the liquid crystal. Such polymerizable matrix-producing compositions include styrene, alkyl acrylates, butadiene, and various dimers, oligomers and prepolymers containing monomer units of one or more of such monomers.

A volatile solvent here, as a practical matter, should have a normal boiling point at atmospheric pressure preferably no higher than about 100°C, but in some instances a higher B.P., e.g., 150°C, could be tolerated. Such volatile solvent also can be useful in controlling the temperature of and assisting in the dissolving of liquid crystal in operations involving a polymerization for the instant purpose, particularly in making thermoplastic matrices.

"Phase separation" has been defined above. It is a convenient way to refer succinctly to the spontaneous appearance of anisotropic liquid crystal microdroplets from the homogeneous dissolution in and existence as an isotropic phase in a synthetic resin matrix-producing composition upon the solidification of the matrix. Regulated phase separation can be effected in several ways depending upon how such solidified polymeric matrix can be produced from such solution, using one or more of the following methods:

i) by polymerizing one or a mixture of components of the matrix-producing composition, typically using heat, catalysis including but not limited to ultraviolet light, electron beam or the introduction of free radical catalyst or other effective catalytic substance;

ii) by cooling a thermoplastic matrix-producing composition (thermal gelation);

iii) by evaporating volatile solvent from a matrix-producing composition of a solution of a normally solid thermoplastic synthetic resin in such solvent, which solution will dissolve the liquid crystal, the evaporation optionally being aided or controlled by warming and/or cooling; such resin can be obtained in preformed state or made by polymerization for the purpose.

Prior to phase separating, the dissolved liquid crystals do not appear to scatter incident light and the solution appears clear.

A "solidified synthetic resin (polymer) matrix" is one that fixes, in the absence of subsequent mechanical or electrical stress on the matrix, the size and shape of the liquid crystal microdroplets for some practical use in the light modulating device. After such solidification the application of special mechanical or electrical stress to the matrix can be used for providing particular operating characteristics. Clearly a high temperature of use could preclude the employment of low-temperature softening thermoplastic matrices and call for another type, such as a thermoset. The solidification of the synthetic resin (polymer) matrix here also can be termed "curing," "setting," or "hardening." The resulting solid matrix can be flexible or elastic or rigid, in other words solid enough to fix for use the microdroplets in size and space in such matrix.

As used in the specification and claims, the term "thermoplastic resin" is used in its usual sense and includes any synthetic resin or polymer which can be heat softened and then resolidified by cooling. It is to be understood that "heat softening" of a thermoplastic resin upon the application of heat can occur over a transition temperature range and is not necessarily characterized by a sharp demarcation.

The term "homogeneous solution" or "single phase" solution refers to a miscible mixture of liquid crystal and matrix-producing composition macroscopically appearing clear and homogeneous. The solution may be a liquid solution, a solid solution or in between. During phase separation the homogeneous solution phase separates when at least some of the liquid crystal appears as microdroplets. As phase separation proceeds, the matrix hardens. This halts the phase separation process and results in a stable liquid-crystal-rich phase in the form of microdroplets and a polymer-rich-phase in the form of a matrix in which the microdroplets are embedded. A "plasticizing effect" refers to the lowering of the transition or softening temperature of a thermoplastic resin caused by liquid crystal which remains in solution in such resin after phase separation of part of the liquid crystal as microdroplets. A "plasticized" resin may exhibit physical properties, such as refractive index $n_s$ and softening temperature, and electrical properties, such as resistivity and permittivity, which may be altered from those of the corresponding polymer alone due to the presence of dissolved liquid crystals.

"Resistivity" and "permittivity" refer to the electrical properties of the liquid crystalline-plastic material of the invention and are used in the generally understood sense without regard to systems of measurement. The value of the product of the resistivity and the permittivity of the material of the invention is expressed in units of time and represents the memory time of the material. "Electrostatic image memory material" refers to a material of the invention having a memory time of approximately a second or greater so that the material, when charged by conducting electrodes, will act as a capacitor to retain the charge when the voltage is removed. "Electrostatic image memory" refers to the image memory of the material of the invention wherein the material or selected areas of the material are driven to the clear, transmitting state by the application of a voltage across transparent conducting electrodes applied to the material and wherein the material or selected areas remain clear and transparent upon the removal of the voltage for the memory time of the material unless switched to the opaque non-transmitting state by short circuiting, where upon the material remains opaque until driven clear.

"Switching time" refers to the time for the material of the invention to respond to an applied voltage pulse by clearing and to the time for the material to turn opaque by short circuiting. Switching time to the ON (clear) state is generally shorter than the switching time to the OFF (opaque) state by short circuiting. In the electrostatic memory image materials of this invention, the switching time is very short compared to the memory time.

The "transparency" or "transparency coefficient" refers to the ratio of light passing through the material when switched to its clear state to the light passing through electrodes in the absence of the material. The physical principle of operation of the invention is based on the ability of the birefringent liquid crystal microdroplets to scatter or transmit light depending upon the relationship of the indicies of optical refraction of the liquid crystal and the matrix. Light scattering liquid crystals have an extraordinary index of refraction $n_e$ measured along their long axis which is greater than their ordinary index of refraction $n_o$ measured in a plane perpendicular to that axis. The long axis defines the optic axis of the liquid crystal. Light scattering liquid crystals having positive dielectric anisotropy respond to an applied electric field by aligning their optic axes parallel to the direction of the field; those having negative dielectric anisotropy respond by aligning their optic axes perpendicular to the field direction.

Light incident upon materials containing discrete areas of liquid crystals is either scattered or transmitted depending upon the relationship among the indices. For example, in devices employing nematic liquid crystals with positive dielectric anisotropy, the matrix is formed from a resin having an index of refraction ns substantially equal to the ordinary index of refraction $n_o$ of the liquid crystal. In the absence of an applied field, the liquid crystals entrapped in the generally spherical microdroplets have no preferred direction in which to align so that incident light encounters a mismatch between the index $n_s$ of the resin and the extraordinary index $n_e$ of the liquid crystal and is scattered. Application of a field causes alignment of the molecules with a resultant alignment of the extraordinary indices (optic) axes for each discrete quantity of liquid crystal. Alignment of the optic axes normal to a surface upon which light is incident causes the microdroplets to present a refractive index of $n_o$ for that light; since $n_o$ is essentially equal to $n_s$, the incident light detects no mismatch between the indices and is transmitted so that the material appears clear. When the optic axes of the liquid crystals are aligned, such as by stretching the material, the component of plane polarized incident light perpendicular to the direction of strain is transmitted, while the other component is scattered by the extraordinary index of refraction to achieve a light polarizing effect.

The liquid crystal may have an ordinary index of refraction $n_o$ matching the index of refraction $n_s$ of the matrix in the sense that incident light which encounters no effective difference between $n_s$ and $n_o$ will not be visually perceptibly scattered. To improve contrast between the light transmitting and scattering state, a slight difference between $n_o$ and $n_s$ may be desirable.

Efficient scattering useful for light scattering displays occurs as long as the size of the liquid crystal droplet is on the order of the wavelength of the incident light, e.g., about 0.2-10 microns, as long as the difference between $n_e$ and $n_s$ or $n_o$ is large enough to be an effective difference as long as the difference between $n_e$ and $n_s$ or $n_o$ is large enough to be an effective difference so as to cause optical inhomogeneity with visually perceptible scattering.

In temperature responsive displays, the index of refraction of the liquid crystal in its isotropic phase is matched or similar to that of the matrix so that the material will transmit incident light, while an index of refraction in the liquid crystalline phase, usually the extraordinary index, is mismatched with respect to the refractive index of the matrix so that incident light is scattered and the material is opaque.

Temperature responsive material can be prepared in accordance with the invention using nematic, cholesteric or many different kinds of smectic liquid crystals, as well as mixtures thereof. A thermo-optic response at any particular temperature can be obtained by the use of a liquid crystal that transforms at that temperature from the liquid crystalline phase to the isotropic phase. The process is reversible so that when the temperature of the material is decreased through the isotropic to liquid crystalline phase transition, the material switches from the clear to the opaque state. Thermo-optic devices that respond to different temperatures can be made using liquid crystals having different isotropic-liquid crystalline phase transition temperatures.

As a temperature responsive material, there are several features of the invention that differ significantly from prior art materials and devices and provide important advantages. The operation of prior art cholesteric liquid crystal devices such as disclosed, for example, in Patent No. 3,872,050, is based upon the Bragg scattering of light when the temperature dependent pitch length of the cholesteric helix becomes comparable to the wavelength of the incident light. The operation of those prior art devices which depend on phase changes of liquid crystal material, such as disclosed in Patent No. 4,279,152, requires altering the ordering of dye molecules in order to change light absorption properties. In the material of this invention, the temperature resolution between the white opaque and clear states is governed by the width of the isotropic to liquid crystalline phase transition and as such is an improvement over the temperature resolution of conventional cholesteric devices which depend upon the width of the visible spectrum and the temperature dependence of the pitch length of the cholesteric helix. Another advantage of the invention is that visual contrast between the on and off states is controlled by the contrasting light scattering properties of the dispersed liquid crystal in the isotropic phase relative to that in the liquid crystalline phase, whereas in the cholesteric liquid crystal temperature

indicators of the prior art, the visual contrast is governed by the Bragg scattering properties of the twisted cholesteric material relative to a background substrate.

The present invention also permits the use of a wide variety of liquid crystals and phases, including those which have high thermal stability and lifetime. The cholesteric liquid crystal indicators of the prior art have been restricted to cholesteric or chiral materials which have the appropriate temperature dependence of the pitch length. Such liquid crystals can have poor stability so that displays constructed with them have limited lifetime.

Electrically or magnetically responsive material is prepared using nematic liquid crystal, or mixtures that behave as a nematic, and smectic liquid crystals including ferro-electric liquid crystals. Most preferably, the liquid crystals comprise cyanobiphenyl and may be mixed with cyanoterphenyls and esters. As used herein, the term "nematic" means nematic liquid crystal and liquid crystal mixtures having the properties of a nematic liquid crystal. The dispersed liquid crystal in its resin matrix is placed between two conducting surfaces, one or both of which are transparent. When a voltage of the appropriate magnitude is applied to the conducting surfaces, the material will switch from a white opaque state to a clear state. The process is reversible upon removal of the voltage. If desired, a pleochroic dye can be incorporated into the liquid crystal to enhance the visual contrast between the clear and opaque states of the electrically responding material. By using a black dye, for example, the material will appear black in the opaque state.

As an electrically responsive material, the invention has features and advantages different from other known voltage or current responsive materials involving liquid crystals. With the material of the invention, an electric field from an a.c. or d.c. voltage source applied to the conductors on the surfaces of the material aligns the optic axes of the nematic liquid crystal microdroplets exhibiting positive dielectric anisotropy and the extraordinary index of refraction of the liquid crystal parallel to the electric field so that light is transmitted. Upon removal of the applied electric field, the surface interactions between the resin matrix and the dispersed nematic liquid crystal rapidly restore the random alignment of the optic axes to the condition existing prior to the application of the electric field to achieve light scattering by the extraordinary index of refraction. The large number and small size of the dispersed liquid crystal droplets provide for a large surface area to volume ratio between the matrix and the liquid crystal to bring about the switching effect. An important characteristic of the invention is that the droplets can be readily shaped to yield fast switching times. With the-material of the invention, the clear state to the opaque state response time can be made in approximately 1-10 milliseconds. When a pleochroic dye is incorporated into the liquid crystal the principle of operation remains different from other guest-host displays incorporating pleochroic dyes in that it is the matrix-liquid crystal surface interactions and the large surface-to-volume ratio of the dispersed liquid crystal that restores the nematic directors and hence the guest dye component to its random opaque state orientation upon removal of an applied electric field. This is in contrast to knows "phase change" dichroic display cells in which a cholesteric component is added to the liquid crystal to cause or induce random alignment of the dye in the opaque state.

One specific embodiment of an electrically responsive display cell incorporates a strained sheet or film. In the presence of an electric field which aligns the extraordinary index of refraction normal to the surfaces of the sheet or film, unpolarized incident light is transmitted through the cell. In the absence of an electric field, the extraordinary index of refraction is parallel to the direction of strain, with the result that one component of plane polarized incident light is transmitted and the other component is scattered. The switch time of the stretched material is about 1 millisecond compared to 10-100 milliseconds with unstretched material. Such a cell can act as a light switch when incorporated with a second polarizer.

Another embodiment of an electrically responsive polarizing material may be made with liquid crystal microdroplets in a cured flexible thermoset polyurethane film sandwiched between glass slides. Translating the slides relative to one another in the opposite directions (in shear) strains the film. The strained film scatters light polarized along the axis of strain and is transparent to light polarized perpendicular to the axis of strain. Application of an electric field will switch the film to a non-polarizing transmitting state. Unstrained film may be switched from a non-polarizing scattering state to a non-polarizing transmitting state by the application of an electric field.

An important feature of the present invention is the novel technique of phase separating the matrix-producing composition with dissolved liquid crystals in the presence of an applied magnetic or electric field of sufficient strength to cause the liquid crystals in the microdroplets to align. The liquid crystals within the microdroplets are aligned during phase separation. Once the process is complete, the alignment becomes permanent and persists upon removal of the applied field. This field-alignment phenomenon allows the fabrication of switchable light polarizers. A switchable light polarizer which polarizes light in the absence of an applied voltage is made by selecting a liquid crystal with a positive anisotropy in the dielectric as well as diamagnetic susceptibility. A film of the liquid crystal dissolved in matrix-producing composition is phase separated in the presence of a magnetic field directed in the plane of the film. When the matrix is hardened, the optic axes of the liquid crystal microdroplets are aligned in the plane of the film. The material, e.g. a film, polarizes light.

Placing the cured film between transparent electrodes and applying a voltage of sufficient strength causes the polarizing effect to be switched off.

A switchable polarizer which polarizes light in the presence of an applied field is made by selecting liquid crystals having a positive dielectric anisotropy and phase separating in an a.c. field created by applying voltage to conducting surfaces on a film. When the film is hardened, the optic axes of the liquid crystal droplets are aligned in a direction normal to the film surface. The film is clear and non-polarizing. Application of an electric or magnetic field in the plane of the film causes the film to switch to a polarizing state.

Optically switchable polarizers can be fabricated by phase separating a film of dissolved nematic liquid crystal and matrix-producing composition in the presence of an applied electric or magnetic field strong enough to cause the optic axis of the liquid crystal microdroplets to align normal to the film surface. The product film is clear and non-polarizing. High intensity electromagnetic radiation can cause the optic axes of the droplets to reorient so that the film becomes opaque and light scattering.

Display materials with improved light scattering properties can be fabricated with films containing microdroplets exhibiting positive dielectric anisotropy and distorted by a compressive strain applied to the film. The distortion aligns the extraordinary index of the refraction of the liquid crystals parallel to the surface of the film, but random in the plane of the film. In the absence of an applied field, this film scatters light and appears opaque; it can be switched to a clear state by the application of voltage e.g. a.c. voltage, of sufficient strength to switch the optic axes of the liquid crystals to a direction normal to the surface. A display formed from this material would be expected to have improved contrast over displays made with spherical microdroplets in that the index mismatch is maximized in such films in the scattering state. A compressive strain can be conveniently made with a thermosettable solution between stiff electrodes of a cell containing same by suitable adjustment of the curing temperature such that contrasting thermal expansivities between such cell walls and the substances undergoing phase separation induce the compressive strain.

For electrically responsive uses the switching time of the material is affected by the microdroplet size and by the relative values of $n_s$, the resin matrix with residual liquid crystal still as solute in isotropic phase, and $n_o$, the ordinary index of refraction of the liquid crystal. For instance, large microdroplet sizes and values of $n_s$ greater than $n_o$ generally yield longer switching times. Normally, the indices of refraction of liquid crystals cannot be altered without significantly altering their other properties and rendering them less useful for display purposes. The present invention allows for the fine adjustment of the index of refraction of the matrix in which the liquid crystal is entrapped. The index of refraction $n_s$ can be adjusted to match, or to mismatch in a specified way, the ordinary index of refraction $n_o$ of the liquid crystal. This adjustment regulates transparencies and switching times of the materials to optimize materials for specific applications.

For instance, flat panel displays, such as television, where images on the display screen are updated at a rate the human eye cannot detect, require switching times on the order of about a millisecond. Such displays also require high transparency in the ON or clear state in order to achieve a high degree of brightness or contrast in the displayed images. Flat panel displays utilizing the light scattering material of the present invention can exhibit these desired features because the value of the refractive index of the matrix is adjustable relative to the ordinary index of refraction of the liquid crystal.

Other applications, such as alphanumeric time-temperature displays where the image does not need to be updated at a high switching speed, may require a larger viewing angle so that the image may be read from the side of the display in preference to straight on. Large viewing angles are exhibited by the light scattering material of the present invention when the relative value of the refractive index of the matrix is altered to match an effective index of refraction presented by the aligned liquid crystal microdroplet at an angle from the optic axis, that is, an index somewhere between the ordinary and extraordinary indices.

The discovery that the novel liquid crystalline-thermoplastic material may exhibit altered electrical properties makes possible the fabrication of liquid crystal devices which combine fast switching times and high transparency with electrostatic image memory. Such devices simplify the fabrication of flat panel displays by providing less complicated and expensive manufacturing procedures, and provide for new types of optical processing devices in which the memory can be periodically refreshed to maintain an image indefinitely.

The preferred types of liquid crystals will align in their preferred direction upon the application of an electric or magnetic energy field. Orientation of the optic axes of the liquid crystal microdroplets is achieved when the long axes of all the microdroplets point in the same direction within the sheet or film; this, in turn is achieved when the individual liquid crystal molecules point in generally the same direction (orientational order). In a sheet or film of microdroplets of nematic liquid crystal in the unoriented state, the individual molecules within a given microdroplet point in generally the same direction, but the direction of pointing varies from droplet to droplet. The individual molecules of smectic liquid crystal droplets in the unoriented state do not point in the same direction, but are gathered into focal conic domains; each microdroplet exhibits an overall focal conic texture. Oriented liquid crystals in the smectic phase, however, have partial positional order in addition to orientational

order in that not only do they point in generally the same direction, but they do so positioned in layers. Oriented liquid crystal molecules in the smectic A phase are generally parallel to one another within a given layer and perpendicular to the layers. Liquid crystal molecules in the smectic C phase are longer than the thickness of the layer so that the molecules may be described as tilted at a characteristic angle relative to the layer; oriented smectic C liquid crystals have positional order in that the molecules within the layers tilt at generally the same angle relative to one another and from layer to layer.

Application of an electric field to microdroplets of nematic liquid crystals having positive dielectric anisotropy causes the molecules to reorient parallel to the field but does not effect positional order. Removal of the field results in the molecules returning to their original random orientation. Application of an electric field to droplets of smectic A liquid crystal in the unoriented or focal conic state causes orientation of the liquid crystal molecules parallel to the field and of the layers perpendicular to the field; the orientation persists upon field removal. Because smectic liquid crystals in layers are capable of memory without an applied field, a return to the focal conic orientation is achieved by the application of thermal energy. Thermoplastic image memory is achieved by the application of an energy field to the surface of thermoplastic material of this invention, e.g., a film, or to a selected area thereof. The area may be in any desired shape, such as an alphanumeric character or the like, or it may include the entire surface.

In the case of a film having microdroplets of nematic liquid crystals with positive dielectric anisotopy, thermoplastic image memory is achieved by selecting a nematic liquid crystal with a liquid crystalline to isotropic phase transition temperature above the softening point of the thermoplastic matrix, softening the matrix, applying a field to orient the liquid crystal microdroplets in the softened matrix, and then rehardening the matrix in the presence of the field so that the microdroplets in the hardened matrix remain oriented upon removal of the field. A field applied normal to the film surface aligns the optic axes of the liquid crystal microdroplets within the selected area in the direction of the field, i.e., normal to the surface. The aligned nematic liquid crystal interacts with the softened matrix in such a way that rehardening in the continued presence of the field results in the optic axes of the liquid crystal microdroplets within the selected area retaining their parallel alignment in the direction normal to the film's surface upon removal of the field.

In the case of a film having microdroplets of smectic liquid crystal, thermoplastic image memory may be achieved by simply applying a field to orient the randomly aligned, focal conic texture droplets within a selected area and thereafter removing the field. The droplets retain the orientation upon removal of the field. A field applied normal to the film surface aligns the droplets in the same direction, i.e., normal to the surface.

Light normally incident upon the areas of the material where the liquid crystals are aligned normal to the surface will not detect an effective difference between the ordinary index of refraction $n_o$ of the liquid crystal and that of the resin $n_s$; these areas will appear clear and will remain clear indefinitely. Conversely, light incident upon non-selected areas, where the droplets of liquid crystals are randomly aligned, will experience a large difference between the extraordinary index of refraction ne of the liquid crystal and that of the resin $n_s$; the non-selected areas will appear opaque and remain opaque indefinitely. Where the selected area is in the shape of an alphanumeric character, for instance, the character will appear clear and the area surrounding the character will be opaque. When the entire surface of the nematic liquid crystal softened film is exposed to an aligning electric or magnetic field and rehardened in the presence of the field, the entire film will remain clear. Similarly, exposing the entire surface of a smectic liquid crystal film to an aligning field causes the entire film to be clear. A clear smectic film can be further manipulated to achieve an opaque character on a clear background by the application of thermal energy to a selected area in the shape of the desired character. Application of heat causes the smectic liquid crystals in the selected area to return to the random, focal conic scattering state.

Thermoplastic images may be erased and the entire film returned to the scattering, opaque state by warming the film. For nematic films, the warming should be to a temperature above the softening point of the resin. Warming the film above the softening point reverses the conformational changes and causes the liquid crystal microdroplets to return to a random arrangement. Rehardening results in a material that will scatter incident light and appear opaque.

Microdroplets of nematic liquid crystal may be elongated by the application of mechanical stress, such as stretching or shearing, while the matrix is soft and by maintaining the stress while the film is rehardened. The stress may be removed once the film rehardens and the droplets will remain elongated along the direction of the mechanical stress. Where the mechanical stress aligns the droplets parallel to the surface of a sheet, for instance, the sheet will polarize incident light.

An electromagnetic beam may be used to switch a clear film to opaque. The electromagnetic beam incident on the film matrix causes it to soften so that the liquid crystals within the film return to the random, scattering state. A dye which absorbs electromagnetic radiation may be included in the film. For instance, a dye may be incorporated which absorbs in the infrared radiation range. A film having such a dye would be warmed by absorbing the infrared component of incident electromagnetic radiation while the electrical component of the incident electromagnetic radiation would align the optic axes of the droplets in the plane of the film. The film would then scatter and would remain in the scattering state when the source of radiation was removed.

Fabrication of display devices utilizing the techniques of the present invention to control the growth of micro-droplets results in liquid crystal display devices having optimized display characteristics, such as contrast and response times.

For truly rigid thermoset matrices there basically is but one time to control microdroplet size. For thermoplastic matrices that can be reworked with heat, either to redissolve the microdroplets and effect a phase separation again or simply to enlarge microdroplets without redissolving all of them, the initial microdroplet average diameter obtained upon first phase separation often is desirably changed by such reworking.

In general, smaller microdroplets yield faster switching times upon the application of an electric field, but require a greater threshold switching voltage than larger microdroplets. While not wishing to be bound by any particular theory of operation, this phenomena appears due to the competition between the surface interaction of the microdroplet and the external field: the smaller the microdroplet, the larger the surface to volume ratio and hence the more influential the surface. Larger microdroplet displays have a lower threshold voltage because there is less surface force to overcome.

The techniques of the present invention make possible the selection of switching times depending upon the ultimate application of the display device. Where fast switching times are needed, such as in flat panel displays which update images faster than detectable by the human eye, the techniques of the present invention allow for the fabrication of small microdroplets. Where fast switching times are not necessary, such as in various alphanumeric time and temperature displays, the present techniques permit the formation of larger microdroplets.

In general, light scattering efficiency increases as microdroplet diameter approaches the wavelength of the light being scattered; increased scattering efficiency increases the contrast between the ON and OFF electrical switching states. Where greater contrast is needed, such as in projection type displays employing a relatively narrow wavelength spectrum source, the techniques of the present invention enable the production of microdroplets approximating the wavelength of the source.

The present invention also allows for the fabrication of light shutters for regions of the electro-magnetic spectrum other than the visible, such as the infrared or ultraviolet regions, by enabling the formation of microdroplets having diameters approximately equal to the wavelength of infrared or ultraviolet radiation.

Fabrication of displays made in accordance with the method of the present invention is much easier than with previous methods. A display can be made from a piece of thermoplastic material by warming it above the softening point temperature and then sandwiching it between conductive glass or plastic plates spaced apart at a selected thickness. If a display of another shape or thickness is desired, the previous display may be disassembled and the liquid crystal-thermoplastic resin may be reshaped by heating it until it is soft, forming it into the desired shape and thickness and then cooling it to form a display with the desired characteristics. The material also lends itself to hot melt-type processing wherein hot thermoplastic resin and hot liquid crystal need merely be contacted to form a homogeneous solution, as by dipping a thin, heated sheet of resin into a hot liquid crystal bath. Displays may then be reworked simply by reheating above the softening point. The ability to be reworked and reused lessens waste and increases the efficiency of the manufacturing process.

Referring now to the drawings, Figure 1 illustrates a preferred display material of the invention consisting of solid, light transmissive matrix 10 which contains microdroplets 11 of liquid crystal. As shown in Figure 1, the liquid crystal component is at a temperature such that it is in a clear isotropic phase. The liquid crystal is selected so that its optical index of refraction in the isotropic phase, $n_i$, has a value similar to that of the clear resin, $n_s$, so that light, as at $I_o$, incident upon the material will pass readily through it unscattered, as at $I_T$. The material in the condition illustrated in Figure 1 is referred to as being in the clear state.

Figure 2 illustrates the same material except that the liquid crystal component 11′ is in a liquid crystalline phase. The liquid crystalline phase can be a nematic, cholesteric or smectic phase or mixtures thereof. When in the liquid crystalline phase, the index of optical refraction, i.e., the extraordinary index of refraction $n_e$, is different from that of the isotropic phase and that of the matrix 10 so that incident light, as at $I_o'$ will be scattered by the liquid crystal, as at $I_s$. The mismatch between the index of refraction of the resin matrix, $n_s$, and that of the liquid crystal, $n_e$, and the light scattering properties of the liquid crystal micro-droplets cause the material to scatter light. The material in the opaque state illustrated in Figure 2 appears as a white opaque texture. The matrix containing the liquid crystal switches from a clear state to a white opaque state as the temperature is decreased to change the liquid crystal from the isotropic to the liquid crystalline phase.

Thermally responsive materials that respond to different temperatures are easily prepared using liquid crystals with different isotropic-liquid crystalline phase transition temperatures. With currently existing nematic liquid crystals, it is possible to obtain a liquid crystal with an isotropic-nematic phase transition at any temperature within the range from -30°C to 250°C.

Figure 3 illustrates an electrically responsive device 15 capable of being reversibly switched between the opaque and clear states. A clear matrix 16 containing microdroplets 17 of liquid crystal having an ordinary index of refraction $n_o$ similar to the refractive index of the matrix is sandwiched between electrical conductors 18, one or both of which are transparent. A voltage source 19 is connected to the conductors 18 by a switch 20 having off and on positions 21, 22 respectively. As illustrated in Figure 3, when an electric field is applied across the liquid crystal-polymeric matrix material by closing the switch 20, the material appears in the light transmissive or clear state. The application of the electric field has the effect of aligning the extraordinary index of refraction ne of the liquid crystal in a direction normal to the surface of the film thereby allowing incident light as at $I_o$ to pass through the display device 15 unscattered to emerge as at $I_T$. When the voltage source 19 is disconnected by placing the switch 20 in its off position 21, surface interactions at the droplet wall between the liquid crystal and the resin return the droplets to their random orientation as illustrated in Figure 2 so that the liquid crystal-polymeric matrix material of the device appears as a white opaque texture.

Figure 4 illustrates the optical response that is obtained when the display material of the invention is stretched by creating a mechanical strain, as indicated by the arrows 30. The matrix is designated by reference numeral 32 and the microdroplets of liquid crystal that are elongated in the direction of stretch are designated by reference numeral 34. The liquid crystal can be nematic, smectic or cholesteric or a mixture thereof in the liquid crystalline phase. Preferably, the ordinary index of refraction $n_o$ of the liquid crystal is similar to the refractive index $n_s$ of the matrix.

Stretching of the material results in a distortion of the liquid crystal microdroplet. The spherical droplet adopts an elliptical shape with the long axis of the ellipse parallel to the direction of stretch. This distortion of the microdroplet results in the liquid crystal within the microdroplet aligning itself with the long axis of the ellipse. The result is that upon stretching all liquid crystal microdroplets will have their optic axes and hence their extraordinary index of refraction, $n_e$, aligned with the direction of stretch. Unpolarized incident light, as at $I_o$, will have components which are parallel to the stretch direction and parallel to the optic axes of the microdroplets. These components will experience a large difference between the refractive index of the liquid crystal microdroplet, $n_e$, and that of the surrounding matrix, $n_s$, and will be scattered. Components of the incident light in a direction orthogonal to the direction of stretch will encounter a refractive index within microdroplet that is similar to the matrix and will pass through the film unaffected. The film therefore acts as a light polarizer. In addition to the polarizing effect, it has been found that the application of mechanical stress to the liquid crystal-polymeric matrix material embodied in an electrically responsive cell as shown in Figure 3 decreases the switch time between the field-on and field-off states.

Figure 5(a) illustrates a scattering polarizer 50 that is obtained when the material of the invention is phase separated or hardened in the presence of a magnetic or electric field, as indicated by the arrow 52. The solid, clear matrix is designated by reference numeral 54 and the microdroplets of liquid crystal having their extraordinary index of refraction $n_e$ aligned in one direction in the plane of the film are designated by reference numeral 56. The liquid crystal has a positive anisotropy in the dielectric and diamagnetic susceptibility. When phase separated or hardened in the presence of an a.c. electric field or magnetic field of sufficient strength to orient the liquid crystal microdroplets during the process, the microdroplets will retain that orientation upon removal of the field. The film will serve as a light polarizer similar to that of the stretched film described above in connection with Figure 4.

Components of incident unpolarized light, as at $I_o$, which are parallel to the direction of alignment of the extraordinary index of refraction will be scattered, as at $I_s$, due to the mismatch between the index of refraction of the matrix $n_s$ and the aligned optical axes $n_e$ of the liquid crystal microdroplets. Incident light polarized orthogonal to the direction of alignment will encounter no difference between the ordinary index of refraction $n_o$ of the microdroplet 56 and that of the matrix $n_s$ and will be transmitted polarized as at $I_T$. The scattering polarizer 50 of Figure 5(a), as well as the stretched film of Figure 4, can be switched to a non-polarizing light transmissive state in a manner shown in Figure 5(b), where the matrix 54 containing the microdroplets as at 56′ is sandwiched between electrical conductors 58, both of which are preferably transparent. A voltage source 60 is connected to the conductors 58. The application of the electric field has the effect of aligning the extraordinary index of refraction normal to the surface of the film thereby allowing incident light to pass through unpolarized. When the voltage source 60 is disconnected by placing the switch 62 in its off position the microdroplets relax to their equilibrium orientation illustrated in Figure 4 and Figure 5(a) and the display material again polarizes incident light.

Figure 6(a) illustrates a film 70 that is obtained when the material of the invention is phase separated or hardened in the presence of a.c. electric or magnetic field as indicated by the arrow 72. The solid, matrix is designated by the reference numeral 74. The micro-droplets of liquid crystal having their extraordinary index of refraction ne aligned normal to the surface of the film are designated by the numeral 76. The liquid crystal has a positive dielectric or diamagnetic anisotropy. Incident light as at $I_o$ encounters no difference between

the extraordinary index of refraction $n_e$ of the micro-droplet and the refractive index $n_s$ of the matrix and is transmitted unscattered as at $I_T$. The film appears clear. Figure 6(b) illustrates the film of Figure 6(a) when subjected to an applied field in the plane of the film as indicated by the arrow 80. The field may be a magnetic field, an electric field or an electromagnetic field such as that created by a high intensity light source. The application of the field has the effect of aligning the extraordinary index of refraction ne in the plane of film. Components of unpolarized incident light in a direction parallel to the direction of alignment of the extraordinary index of refraction will encounter a mismatch between the extraordinary index of refraction of the microdroplet and the index of the matrix and will be scattered. Components of unpolarized incident light in a direction orthogonal to the direction of alignment of the extraordinary index of refraction will encounter no such mismatch and will pass through the device as polarized light, as at $I_T$.

Figure 7(a) illustrates a film 90 that is obtained when flexible thermoset material of the invention having nematic liquid crystal exhibiting positive dielectric anisotropy is strained by a squeezing which occurs when the material is phase separated or hardened at a temperature such that there is a mismatch between the thermal expansivity of the matrix 92 and that of constraining cell walls 94. The disk-like microdroplets of liquid crystal having their extraordinary index of refraction aligned parallel to the surface of the film but random in the plane of the film are designated by the numeral 96. Incident light will be scattered due to the mismatch between the extraordinary index of refraction of the microdroplets 96 and the matrix 92, and the device will appear opaque. The disk-like microdroplets of Figure 7(a) will have an enhanced scattering effect as compared to the spherical microdroplets of Figure 2, since ne lies in the plane of the film for all the microdroplets 96. Figure 7(b) shows the resin 92 containing microdroplets 96′ sandwiched between conducting electrodes 94′. Application of a voltage across electrodes 94′ causes the extraordinary index of refraction to align in a direction normal to the film surfaces. Light incident upon the device will detect no difference between the indices of refraction of the microdroplets 96′ and the matrix 92 and will be transmitted unscattered resulting in a clear device. Such films exhibit improved display contrast over films with spherical microdroplets.

The liquid crystal-polymeric matrix material is normally a flexible solid and can be cut, cast or reworked into films or large articles. The thermally responsive material has applicability in high resolution, high visual contrast thermometers or temperature indicators which can, for example, be used in medical or other technologies, cold food packaging, refrigeration, ice detection on road surfaces, and medical thermograms for the detection of breast cancer, the location of the placenta, etc. This material also can be used in thermally addressed high contrast, wide viewing angle, flat panel displays. Such displays can be electrically addressed by a resistant or Joule-Thomson effect device to locally change the temperature of the material. The material can also be addressed by a high intensity light beam to locally heat the material surface.

Electrically responsive and polarizing devices as illustrated in Figures 3, 5(b) and 7(b) can be constructed by deposition or painting of transparent conductive coatings on the surfaces of the material or by curing the resin while sandwiched between two plates containing transparent conductive coatings. The visual contrast between the opaque and clear states can be enhanced by a suitable background such as one which is dark or lighted.

Electro-optic displays that are black or colored in the opaque state can be constructed by the addition of a dichroic dye to the liquid crystal. For example, an electro-optic display as in Figures 3 or 7(b) which is black when no voltage is applied but white when a voltage is applied can be constructed by the use of nematic liquid crystal containing a black pleochroic dye. Such a liquid crystal when cured in a clear resin and placed on a white background can achieve a white on black display.

A scattering polarizer film as illustrated in Figure 4 can be used as a strain monitor. The direction of strain placed on the film controls the direction in which the film polarizes. A change in the direction or magnitude of the applied strain results in a change in the direction or degree of polarization. The change of polarization can be monitored by viewing the film through a polarized lens.

Electrically addressable scattering polarizers can be fabricated by stretching or by curing in the presence of a field as illustrated in Figures 4 and 5(b), respectively. A voltage of sufficient magnitude applied to transparent conductors on one of these films aligns the optic axes of the microdroplets normal to the surface of the film and causes the polarizing effect to be switched off and the film to appear transparent. Such a material is useful in display windows or other devices where it is desirable to switch the polarizing effect off and on.

Optically switchable materials can be fabricated with films prepared by curing in the presence of an applied field or by straining so that the extraordinary index of refraction, $n_e$, is aligned normal to the surface of the film. Such a film is clear and transmits light at normal light intensities. Incident light of sufficiently high intensity will cause the liquid crystals to reorient so that the optic axes of the microdroplets is switched to a direction in the plane of the film. This film will scatter light and appear opaque. The film acts as a non-linear optical device to be used as a protective coating to a high intensity electromagnetic source or as a device in optical computing. A non-linear optical response is also possible in which high intensity incident light changes the value of the

refractive indices of the liquid crystal relative to the index of the resin.

The material of the present invention when fabricated with thermoplastic resin offers the advantage of a memory feature. Figure 8 illustrates the preparation of a thermoplastic material which will exhibit contrasting opaque and clear areas, such as for alphanumeric displays. A sheet as shown in Figure 3, heated to a temperature above the softening point of the resin 130, but below the liquid crystalline phase to isotropic phase transition temperature of the liquid crystal, is exposed to an aligning electric field between electrodes 140, 142 laid out in a desired pattern. The sheet may also be heated to above the liquid crystalline to isotropic phase transition temperature and then allowed to cool to a temperature below the isotropic to liquid crystalline phase transition, but above the softening point of the matrix for the aligning step. The optic axes of the microdroplets 134 of the softened matrix 130 align in the direction of the electric field, i.e., normal to the surface of the sheet. The optical axes of microdroplets 138 not exposed to the field do not align. Subsequent cooling to a temperature below the softening point while the field is maintained yields the material illustrated in Figure 9.

Figure 9 shows the material of Figure 8 after the matrix 150 is rehardened and the electric field removed. Light incident on the material is either transmitted or scattered depending upon the match or mismatch of indices of refraction of the matrix and that of the liquid crystal as detected by the incident light. Light $I_o$ incident upon the matrix 150 with aligned optical axes of micro-droplets 154 experiences no mismatch of indices $n_s$, $n_o$ and is transmitted, causing the area containing micro-droplets 154 to appear clear. Light $I_o'$ incident upon the matrix 150 with randomly oriented microdroplets 152 experiences a large difference between the index $n_s$ and the overall randomly oriented extraordinary index ne and is scattered, as at $I_s'$, causing the area to appear opaque.

The material of Figures 8-9 has a number of applications. It can, for instance, act as a temperature monitor, signaling a visual alarm if the ambient temperature of the material has risen above a certain selected value. The alarm is visible even if the ambient temperature returns below the selected value. A matrix may be used, for example, with a softening temperature of 0°C. A film of the resin can be affixed to a frozen item, such as food package. The film can be prepared with a suitable image, such as "OK". The image "OK" will remain as long as the film is maintained below 0°C. If the temperature of the item is raised above 0°C, however, the image is erased and will not reappear even if the item is subsequently refrozen.

The material of the invention may be used as an erasable label. An image can be impressed upon the material with the application of a proper voltage and heat. The material will maintain the image until once again heated. Alphanumeric information can be written with patterned seven segment electrodes. A character is written by addressing the appropriate segments with a voltage while the film is heated and then cooled. Such labels would be useful for pricing labels on store shelves. The material could be sandwiched between plastic sheets with patterned conducting surfaces. An additional thin metallic layer on the plastic may be used for resistive heating. An image may be impressed on such a label by charging the appropriate segments while heating and cooling the film. Electrical contacts on the edge of such a label would allow the label to be addressed by a simple hand-held unit which would be programmed to charge the appropriate segment while providing the current to heat the film. This would offer a fast, simple means of updating displayed retail prices.

The material of the invention can also be used to form multiplexed flat panel displays with a larger number of picture elements than can be obtained with devices without the memory feature of the present invention. The material of the present invention does not require an active matrix to maintain an image. Further, only the picture elements to be altered within an image need to be addressed. Clear picture elements are formed by warming and cooling in the presence of an external field, and opaque elements are formed by warming and cooling in the absence of an external field.

Figure 10 shows a matrix 170 which has microdroplets of smectic A liquid crystal 174. As shown in Figure 10 the liquid crystals are in the focal conic state with no preferred direction of alignment, so that the $n_e$ are randomly oriented within the matrix. Light incident on the material, as at $I_o$, detects a mismatch between $n_s$ and $n_e$ and is scattered, as at $I_s$. The material appears opaque.

Figure 11 shows the material of Figure 10 after the resin 180 containing smectic A liquid crystal micro-droplets 184 has been subjected to an electric field E in the illustrated direction, and the field removed. The layers are aligned perpendicular to the direction the field is applied and the long axis of the liquid crystal molecules are normal to the film surface. Normally incident light $I_o'$ detects no mismatch between the indices $n_o$ and $n_s$ and is transmitted through the material as $I_t$. The material of Figure 11 appears clear.

An important feature of the present invention provides for the preparation of liquid crystal-thermoplastic matrix materials having a very high ratio of liquid crystal to polymer. Such liquid crystal should exhibit positive dielectric anisotrophy and preferably is nematic. The ratio can be at least 1:1 and preferably is about 1.5-2.0:1. The high concentration of liquid crystal yields displays with high contrast between clear and opaque areas, making easily readable displays. Table IA summarizes the ratios of polymer to liquid crystal for various materials made in accordance with the invention as in Example XXX below. Table IB lists the properties of the electrically

switchable cells fabricated with the materials and ratios of Table IA.

Table IA

| | Polymer | Liquid Crystal | Ratio |
|---|---|---|---|
| 1. | poly(vinyl acetate) | E7 | 1:<1 |
| 2. | poly(vinyl acetate) | E7 | 1:1.5 |
| 3. | poly(vinyl formal) | E7 | 1:0.6 |
| 4. | poly(vinyl formal) | E7 | 1:1.8 |
| 5. | polycarbonate | E7 | 1:1.8 |
| 6. | poly(vinyl butyral) | E7 | 1:1.5-2.0 |
| 7. | poly(vinyl methyl ketone) | E31 | 1:2.0 |
| 8. | poly(methyl acrylate) | E20 | 1:1.5 |
| 9. | poly(cyclohexyl methacrylate) | E31 | 1:2.0 |
| 10. | polyisoprene | E20 | 1:2.0 |
| 11. | poly(ethyl methacrylate) (high M.W.) | E20 | 1:2.0 |
| 12. | poly(isobutyl methacrylate) | E20 | 1:2.0 |

Table IB

| | Polymer | Property of Cell |
|---|---|---|
| 1. | poly(vinyl acetate) | no phase separation |
| 2. | poly(vinyl acetate) | fair |
| 3. | poly(vinyl formal) | no phase separation |
| 4. | poly(vinyl formal) | excellent |
| 5. | polycarbonate | fair |
| 6. | poly(vinyl butyral) | excellent |
| 7. | poly(vinyl methyl ketone) | excellent |
| 8. | poly(methyl acrylate) | excellent |
| 9. | poly(cyclohexyl methacrylate) | good |
| 10. | polyisoprene | good |
| 11. | poly(ethyl methacrylate) (high M.W.) | good |
| 12. | poly(isobutyl methacrylate) | fair |

The properties of these cells listed in Table IB were assessed as follows:

| | fair | good | excellent |
|---|---|---|---|
| transparency | <60% | ~70-90% | >90% |
| switching time | 50-100 msec | 10-50 msec | <10 msec |
| contrast | medium | medium to high | high |

As seen in Table IB, ratios of polymer to liquid crystal greater than about 1:1 did not result in macroscopically visible phase separation for cells No. 1 and No. 3.

An important property of the liquid crystalline-polymeric material of the invention is that the phase separated polymer forms a coherent closed-cell type matrix around the microdroplets of liquid crystal. Figure 12 is a photomicrograph of the material of Example XXIII showing a honey comb-like structure formed by the phase separation of poly(methyl methacrylate) and liquid crystal E7. The closed cell type matrix maximizes the amount of liquid crystal entrapped in the material, yet yields a sturdy sheet or film that does not allow the liquid crystal to bleed out.

The index of refraction $n_p$ of the polymer is adjusted to a value of ns by the plasticizing with liquid crystal which occurs during phase separation and microdroplet growth. Transparency is affected by the relative values of $n_s$ of the matrix (with dissolved liquid crystal therein) and $n_o$ of the liquid crystal. For instance, in the case of devices using nematic liquid crystals of the cyanophenyl type, no $\simeq$ 1.51; therefore to achieve maximum transparency for normally incident light the matrix $n_s$ should be as near as possible to 1.51. Dissolved liquid crystal can tend to warp it towards such value.

Likewise, the relative values of $n_s$ and $n_o$ affect the electrical switching time of these devices having thermoplastic matrices with microdroplets of nematic liquid crystal (exhibiting positive dielectric anisotropy) from the ON (transparent) to the OFF (opaque) states. Tables IIA and IIB summarize the $n_p$ values and the properties of cells made with various polymers and liquid crystal E7 as in Example XXIII below.

Table IIA

| Polymer | $n_p$ | switch time |
|---|---|---|
| Poly(vinyl formal) | 1.501 | <1.0 msec |
| Poly(methyl methacrylate) | 1.49 | ~2.0 msec |
| Poly(vinyl butyral) | 1.485 | >2.0 msec |
| Polycarbonate | 1.585 | >10 msec |
| Poly(vinyl acetate) | 1.467 | ~10-20 msec |

Table IIB

| Polymer | transparency | Viewing angle |
|---|---|---|
| Poly(vinyl formal) | >95% | normal |
| Poly(methyl methacrylate) | ~95% | normal |
| Poly(vinyl butyral) | ~90% | normal |
| Polycarbonate | ~55% | 30° from normal |
| Poly(vinyl acetate) | ~70% | normal |

The effect of the dissolved liquid crystal is to increase or decrease the index of refraction $n_p$ of the polymer to yield an effective index of refraction $n_s$ for the matrix closer to that of the liquid crystal $n_o$.

The amount of dissolved liquid crystal in the polymer can be further controlled by the rate of cooling during the phase separation process. A rapid rate of cooling generally yields materials with small microdroplets and a larger amount of dissolved liquid crystal, whereas slow cooling rates generally yield large microdroplets with a lesser amount of dissolved liquid crystal in the matrix. Cyanobiphenyl liquid crystal solute such as E7 in the polymers tabulated in Table IIA have the effect of increasing the index $n_p$ of the straight, unadulterated polymer to an index $n_s$ of the actual polymer matrix; the degree of increase in $n_p$ depends on the concentration of dissolved liquid crystal and the initial value of $n_p$.

As illustrated in Figure 13A, in the case of displays which will be viewed straight on in direction A, a polymer with an index $n_p$ in the range of 1.49-1.50 is desired, so that the final index of refraction $n_s$ of the matrix is as close to $n_o \simeq 1.51$ as possible. For displays to be viewed from the side, as shown in Figure 13B, a polymer with an index of refraction $n_p$ greater than no, but usually less than $n_e$, is preferable so that $n_s$ of the matrix matches an effective index $n_x$ of the liquid crystal. Such a display is most easily readable in direction B, as shown in Figure 13B. As seen in Table IIB, polycarbonate, with $n_p$ = 1.585 yields a display best viewed about 30° from normal. Referring to Figure 13B, the effective index $n_x$ is approximated by the formula

$$n_x \simeq \frac{n_e \, v_o}{n_o^2 \sin^2 \alpha \, + \, n_e^2 \cos^2 \alpha}$$

where

$$\sin \alpha = \frac{\sin \theta}{n_s}.$$

θ is the viewing angle; a is the angle from $n_e$ to the effective $n_x$; C is the direction of polarization of the incident light.

An important feature of the present invention provides for materials with high resistivity and permittivity to yield long memory times. Cells incorporating the material hold a charge which, in turn, holds the optic axes of the microdroplets of the material in the aligned position until the charge is short circuited or decays. While the charge is held, the material exhibits an image memory not dependent on an external field. The principle of operation is that a film of the material placed between transparent conducting electrodes to form a cell acts as a capacitor of capacitance C and internal resistance R. Application of a voltage charges the capacitor and upon its removal the charge is maintained, holding the transparent state of the film for a period of time approximately equal to the product of R x C. The value of R x C does not, in general, depend on the size or configuration of the capacitor, but only on the electrical properties of the liquid crystal-polymeric matrix material: C = εA/d, where ε is the permittivity of the material, A the surface area of the film and d its thickness, and R = ρd/A where ρ is the resistivity of the material; thus, discharge time, the product of ε x ρ, is a material property and not a function of cell size or configuration. Table III summarizes memory time (ερ) for various materials made in accordance with the invention as in Example XXIII below.

Table III

| Polymer | Liquid Crystal | Ratio | Memory Time (ερ) |
|---|---|---|---|
| poly(methyl acrylate) | E20 | 1:2 | <1 sec |
| poly(cyclohexyl methacrylate) | E31 | 1:2 | >1 sec |
| polyisoprene | E20 | 1:2 | >1 sec |
| poly(isobutyl methacrylate) | E20 | 1:2 | >1 sec |
| poly(vinyl butyral) | E7 | 1:1.5-2.0 | >1 sec |
| poly(vinyl methyl ketone) | E20 | 1:2 | >1 sec |

Other liquid crystalline-polymer materials exhibiting extended memory appear in the examples.

The liquid crystal readily dissolves so that only gentle mixing is necessary to form a homogeneous solution. In order to remove air bubbles which may appear during mixing, the solution can either be centrifuged or placed in an evacuation chamber prior to solidifying the matrix. The size and spacing of the microdroplets depend

upon a number of factors such as the temperature of phase separation, rate of hardening, the types of polymer and liquid crystal material used, the relative proportions of those materials, and the manner and rate of solidifying as more fully appears below.

An equilibrium phase diagram of the binary mixture of liquid crystal and thermoplastic matrix-producing composition resin is shown schematically in Figure 14. $T_1$ is the temperature above which the liquid crystal-resin mixture forms a single phase, homogeneous solution at all compositions; $T_2$ is the temperature at which the mixture is solidified. Region B is the miscibility gap where phase separation and microdroplet formation occur before solidification. Region A, outside the miscibility gap, is the homogeneous solution. Point Y illustrates that a 50/50 mixture will enter the miscibility gap, i.e., start to phase separate and form in situ microdroplets, at $T_1$. Point $X_1$ illustrates that an approximately 67/33 mixture will be a homogeneous solution at $T_3$; point $X_2$ illustrates that the mixture will enter the miscibility gap or microdroplet formation stage at $T_4$ and point X3 illustrates the mixture will set at $T_2$.

For solvent evaporation phase separation, preferred thermoplastic resins are soluble in a solvent or mixture of solvents with which the liquid crystal is miscible. Figure 15 illustrates an equilibrium phase diagram of the ternary mixture of solvent, liquid crystal and resin. At proportions in region A, the mixture is homogeneous; at proportions in region B, the mixture has reached the miscibility gap and microdroplet formation occurs. Through solvent evaporation, a mixture starting at point $Z_1$, will proceed along line $Z_1$, $Z_2$ to form a film having final composition $Z_3$.

Solvent evaporation is useful for coating objects with a liquid crystal containing film. If, however, an electrically responsive device in the form of a sheet of liquid crystal-polymer material between transparent electrode plates is desired, it is difficult to form the sheet by evaporation of the solvent from between the plates. In this case, solvent evaporation can be used to form bulk thermoplastic material by phase separation. Such material is then placed between the plates, heated to flow between the plates and then cooled to solidify it.

The solvent evaporation technique is especially useful for resins having such a high transition temperature that at temperatures at or above $T_1$ on Figure 14, the liquid crystal is degraded. By forming bulk thermoplastic material by solvent evaporation the liquid crystal acts as a matrix plasticizer and lower the softening point of matrix to a temperature below the degradation temperature of the liquid crystal. For thermoplastics with high, destructive melting temperatures the homogeneous solution is preferably prepared by dissolving, by weight, 1 part polymer to at least 1 part liquid crystal in about 5 parts suitable solvent. Once the material is initially prepared by solvent evaporation, all subsequent manipulation of the material, such as cell construction or reworking, is accomplished by heat softening and cooling either to redissolve and reform or simply change the size of the microdroplets of liquid crystal. The plasticizing effect appears due to a portion of the liquid crystal remaining in solution in the matrix. Thus, in such instance, the plasticizing effect yields a material which can be softened and hardened repeatedly without degradation of the liquid crystal.

One suitable thermoplastic resin is a modified epoxy resin prepared to have a softening temperature in a desired temperature range. A normally thermosetting epoxy resin is converted to a thermoplastic resin having a selected softening temperature by substitution of a non-crosslinking binder (curing agent), such as a monoalkylamine, in the place of a cross-linking curing agent. The temperature at which softening occurs may be adjusted by the choice of the curing agent. Use of short chained monoalkylamines result in epoxy resin products with relatively higher softening points than those cured with long chain alkylamines, e.g., the use of propylamine will result in an epoxy resin product with a higher softening point than one bound with hexylamine. Alkyl branching affects the softening point by lowering it, e.g., epoxy resins formed from n-butylamine have a higher softening point than those formed from branched t-butylamine.

The ratio of uncured epoxy resin to monoalkylamine determines the chain length of the resultant cured resin. The main chain lengths are longest at a 1:1 ratio by equivalents of epoxy resin to the alkylamine. As the ratio diverges from 1:1 toward either more resin or more alkylamine, the main chain length shortens.

The ultimate properties of the matrix may be tailored to specific needs by the choice of the type of alkylamine as well as the proportions of alkylamine to epoxy resin. A relatively hard, stiff resin is obtained with longer main chain lengths and shorter alkylamine chain lengths. For instance a 1:1 product made with propylamine yields a stiffer cured resin than a 1:1 product made with hexylamine.

The softening temperature range determines the temperatures at which the write/erase phenomena can occur. In the sense used here, "write" means heating a liquid crystal-polymeric matrix material, applying a patterned field to align the optic axes of the microdroplets, and cooling in the presence of the field to write an image in the form of the pattern; "erase" means heating a material having an image written on it and cooling without a field to cause the optic axes to return to the random state. Higher write/erase temperatures are achieved with longer main chain lengths and shorter alkyl chain lengths. Decay time (storage time) of an image is increased under the same conditions which yield higher write/erase temperatures, i.e., long main chain and short alkyl chain.

Other agents than alkylamines may be used as long as they do not result in significant cross-linking so as to prevent softening. Such other suitable agents are those having only two active hydrogens, such as diols and diacids.

The effect of varying the main chain length of a cured resin material on its softening temperature range was assessed by making resins with various EPON 828 (Lot #8GHJ-52 - Miller Stephenson Co., Inc., Danbury, CT 06810) to hexylamine (HA) ratios as seen in Table I.

TABLE I

| MIXTURE | WT EPON (g) | WT HA(g) | EQ EPON/EQ HA |
|---|---|---|---|
| 1 | 1.850 | 0.715 | 1:1.374 |
| 2 | 2.492 | 0.770 | 1:1.100 |
| 3 | 2.489 | 0.734 | 1:1.050 |

Macroscopic observation of the three resultant resins cured at 65°C for three days and cooled to room temperature revealed that all were fairly equally hard solids. Macroscopic observation of the three resins heated in an oven to 82°C for 10 minutes is recorded in Table II.

TABLE II

| MIXTURE | RELATIVE HARDNESS | DESCRIPTION |
|---|---|---|
| 1 | softest | viscous liquid |
| 2 | medium | viscous liquid |
| 3 | hardest | rubbery solid |

The effect of varying the main chain length of the cured resin material containing liquid crystal on display characteristics was assessed by comparing mixtures containing about 33% liquid crystal E7 as in Example XIII, below, and about 67% EPON 828 with hexylamine (HA) in various EPON/HA ratios; the ratios of EPON to HA and percentage of liquid crystal are shown with the cured resin alone in the same ratios in Table III.

TABLE III

| MIXTURE | EQ EPON/EQ HA | % (by wt) E7 |
|---|---|---|
| 1 | 1:0.753 | 33.6 |
| 2 | 1:0.899 | 34.6 |
| 3 | 1:1.008 | 33.2 |
| 4 | 1:1.107 | 33.4 |
| 5 | 1:1.284 | 33.7 |
| 6 | 1:1.502 | 33.2 |
| 7 | 1:0.509 | 33.2 |

These mixtures were cured at 50°C for three days. Macroscopic observation of the EPON/HA mixtures at room temperature (R.T.) and at 50°C yielded the results shown in Table IVA. Table IVB describes the light scattering properties at 3°C, room temperature and 50°C, and the physical state at 3°C and room temperature of EPON/HA/E7 mixtures of Table III.

TABLE IVA

| Mixture | R.T. | 50°C |
|---|---|---|
| 1 | hard solid | easily deformed |
| 2 | hard solid | difficult to deform |
| 3 | hard solid | very difficult to deform |
| 4 | hard solid | difficult to deform |
| 5 | slightly sticky, rubbery | soft, drawable |
| 6 | flexible, rubbery | soft, drawable |
| 7 | sticky, rubbery | easily drawable |

TABLE IVB

| | Light Scattering | | | Physical State | |
|---|---|---|---|---|---|
| | 3°C | R.T. | 50°C | 3°C | R.T. |
| 1 | op | op | cl | hard | rubbery |
| 2 | op | op | cl | hard | hard, rubbery |
| 3 | op | op | cl | hard | soft |
| 4 | op | op | cl | hard | hard, rubbery |
| 5 | op | op | cl | hard, rubbery | soft, rubbery |
| 6 | op | op | cl | soft | viscous liqiud |
| 7 | pop | cl | cl | soft | viscous liquid |

op = opaque

cl = clear

pop = partially opaque

The effect of various amines on the light scattering properties, image storage times and write/erase temperatures of various liquid crystals in EPON 828 was assessed by preparing 33% liquid crystal (by weight) with 67% EPON/Amine in a 1:1 equivalent ratio. The various mixtures were cured in bulk at 65°C for 4 hours and allowed to cool to room temperature. Tables VA and VB summarize light scattering properties at room temperature. Resins made with straight chain propylamine through hexylamine (1, 2 and 4) were hard and difficult to deform at room temperature, whereas the heptylamine (5) resin was more easily deformed and the octylamine (6) resin was tacky.

TABLE VA

| | Amine | Liquid Crystal | | | | |
|---|---|---|---|---|---|---|
| | | E-7 | E-31 | E-44 | K-12 | K-18 |
| 1. | propylamine | S/PS | C | S/PS | C | X |
| 2. | n-butylamine | S/PS | X | S/PS | C | S |
| 3. | iso-butylamine | S/PS | C | S/PS | C | S/PS |
| 4. | hexylamine | S/PS | C | S | C | X |
| 5. | heptylamine | S | X | S | C | C |
| 6. | octylamine | C | C | C | C | C |

C = clear S = scattering
X = semi-clear S/PS = scattering with phase separation

The liquid crystals in Table VA were as follows:

E-7, as in Example 1, below, having a crystal to nematic liquid crystal phase transition temperature of -10°C and a liquid crystal to isotropic phase transition . temperature of 60.5°C.

E-31, a proprietary mixture of cyanobiphenyls and a non-cyano biphenyl ester available from EM Chemicals and having a crystal to nematic crystal phase transition temperature of -9°C and a liquid crystal to isotropic phase transition temperature of 61.5°C.

E-44, a proprietary mixture of cyanobiphenyls, a cyanoterphenyl and a non-cyano biphenyl ester available from EM Chemicals and having a crystal to nematic liquid crystal phase transition temperature of -60°C and a liquid crystal to isotropic phase transition temperature of 100°C.

K-12, 4-cyano-4′-butylbiphenyl, having a crystal to nematic liquid crystal phase transition temperature of 48°C.

K-18, 4-cyano-4′-hexylbiphenyl, having a crystal to nematic liquid crystal phase transition temperature of 14.5°C and a liquid crystal to isotropic phase transition temperature of 29°C.

TABLE VB

| | Amine | Liquid Crystal | | | | |
|---|---|---|---|---|---|---|
| | | K-21 | K-24 | M-15 | M-18 | M-24 |
| 1. | propylamine | S/PS | S/PS | C | S | S |
| 2. | n-butylamine | S | S/PS | C | S | S |
| 3. | iso-butylamine | S/PS | S/PS | C | C | S |
| 4. | hexylamine | S | S | C | S | S |
| 5. | heptylamine | X/PS | S | S | S | S |
| 6. | octylamine | C | C | C | C | S |

C = clear S = scattering
X = semi-clear S/PS = scattering with phase separation

The liquid crystals in Table VB were as follows:

K-21, 4-cyano-4′-heptylbiphenyl, having a crystal to nematic liquid crystal phase transition temperature of 30°C and a liquid crystal to isotropic phase transition temperature of 42.8°C.

K-24, 4-cyano-4′-octylbiphenyl, having a crystal to smectic A liquid crystal phase transition temperature of 21.5°C, a smectic C to nematic liquid crystal phase transition temperature of 33.5°C and a nematic liquid crystal to isotropic phase transition temperature of 40.5°C.

M-15, 4-cyano-4'-pentoxybiphenyl, having a crystal to nematic liquid crystal phase transition temperature of 48°C and a liquid crystal to isotropic phase transition temperature of 68°C.

M-18, 4-cyano-4'-hexoxybiphenyl, having a crystal to nematic liquid crystal phase transition temperature of 57°C and a liquid crystal to isotropic phase transition temperature of 75.5°C.

M-24, 4-cyano-4'-octoxybiphenyl, having a crystal to smectic A liquid crystal phase transition temperature of 54.5°C, a smectic A to nematic liquid crystal phase transition temperature of 67.0°C and a nematic to isotropic phase transition temperature of 80.0°C.

Aliquots for qualitative assessment of image storage times and write/erase temperatures were prepared with mixtures 1-2 and 4-6 between patterned electrode slides as in Example XVII, below. Storage time (decay of image) and write/erase temperatures decreased with increasing alkylamine length, and also with decreasing hardness of the resin.

The preparation of the light scattering materials of the invention involves the general sequence shown in Figure 16. Referring to Figure 16, it has been discovered that choice of starting materials and manipulation of the mixture after it enters phase separation but before solidification of the matrix permits the control of the microdroplet growth rate.

The nature of starting materials, i.e. liquid crystal and resin (polymer), affects the solubility of the liquid crystal in the polymer and determines both the composition of the homogeneous solution and the point at which the phase separation occurs and the rate at which it proceeds. The relative concentration of the starting materials also affects phase separation rate. Changes in the cure temperature change the solubilities, the rate of polymerization and the rate of diffusion of the liquid crystal out of the polymer into the microdroplets. The rate of cooling of a liquid crystal thermoplastic solution affects the rate of microdroplet growth.

Thermoplastics, such as thermoplastic modified epoxies resins, reversibly melt at different temperatures and cool into the solid state at different, controllable rates. When, by cooling a homogeneous solution of liquid crystal and thermoplastic, a temperature is reached wherein the liquid crystal and the polymer are immiscible, phase separation occurs. This temperature relates to the average molecular weight of the polymer and the concentration of liquid crystal. As best seen in Figure 17, slowly decreasing the temperature gives time for molecules to diffuse to their respective precipitation sites and results in larger microdroplets. The data in Figure 17 are taken from Examples XXXI and XXXII, below. With fast cooling time, the matrix solidifies long before thermodynamic equilibrium is reached so that the microdroplets do not have time to grow and a larger number of liquid crystal molecules remain trapped in the solid matrix. The cooling rate for thermoplastics plays a role similar to the temperature of cure or polymerization of thermosetting polymers.

Different thermosetting polymers, such as epoxy resins, which cure at different rates, may yield microdroplets differing by more than 2 orders of magnitude. Table V summarizes this effect in two epoxies.

TABLE V

| Epoxy Resin | Cure Time at 40°C | Liquid Crystal | Average Diameter |
|---|---|---|---|
| EPON828 | 24 hours | 35% E7 | .1.2 |
| Bostik | 1 hour | 35% E7 | .0.6 |

As seen in Table V, at the same concentration and temperature, EPON 828 yields microdroplets twice the size of Bostik. As more fully appears below in the examples, the relative concentration of liquid crystal does not contribute to size in these systems until a maximum of about 40% to 50% is reached, when channel formation begins.

The best modes of the invention are further illustrated and described by the following specific examples. Phase separation was practiced in each preparation of the light modulating material.

Examples I to IX and XXXIV and XXXV do not form part of the present invention and have been excluded by the wording of the present claims.

EXAMPLE I

A high contrast temperature responsive material was prepared using a two-component epoxy material sold under the trade designation Bostik 7575 by Emhart Chemical Group, Bostik Division and liquid crystal. Part A of the epoxy resin was an equimolar mixture of bisphenol A and epichlorohydrin. Part B was a fatty polyamine curing agent. The liquid crystal (available as E-8 from EM Industries) was a mixture consisting of (by weight): 4'n-pentyl-4'-cyanobiphenyl (5CB), 43 wt%; 4'-n-propoxy-4-cyanobiphenyl (3OCB), 17 wt%; 4'-n-pentoxy-4-

cyanobiphenyl (5OCB) 13 wt%; 4′-n-octyloxy-4-cyanobiphenyl (8OCB) 17 wt% and 4′-n-pentyl-4-cyanoterphenyl (5CT) 10 wt%.

Part A and part B of the epoxy resin and the liquid crystal were mixed in equal proportions by volume according to the prescription 33-1/3% part A, 33-1/3% part B and 33-1/3% liquid crystals. All three components were mixed together by gentle stirring for three minutes to form a homgeneous solution. The solution was then centrifuged for 1 minute to remove bubbles incorporated in the stirring process. Samples were prepared by spreading the uncured material with a uniform thickness on glass plates. After curing for 48 hours, the samples that were about 200 microns thick had a pure white opaque texture (opaque state). Samples having a film thickness between 10 and 200 microns were also white in appearance, but were less opaque. The films were peeled from the glass surfaces to yield a solid flexible material. When these films were heated to the nematic-isotropic phase transition temperature near 80°C, they abruptly become clear or transparent (clear state). The films remained clear at temperatures above 80°C and returned to a pure opaque condition when cooled below 80°C. The contrast between the opaque and clear states depended on the film thickness. Thickness of 200 ± 100 microns showed high visual contrast between the opaque and clear states. The nematic isotropic transition temperature exhibited by the clear and opaque states of the film was very near the nematic-isotropic transition temperature of the liquid crystal prior to disperison in the epoxy resin.

EXAMPLE II

An electrically responsive device using the same material described in Example I was constructed. In this example, the uncured mixture of Example I after centrifuging was sandwiched between two glass slides having indium oxide conductive coatings on their surfaces adjacent to the mixture. An insulating spacer (Teflon tape) was used between the glass slides to control the film thickness to approximately 75 microns. The film had a pure white opaque texture after 24 hours of curing (opaque state). When an a.c. voltage of 100 volts was applied to the conducting surfaces of the glass plates, the material turned clear (clear state). A film thickness of less than 10 microns showed less visual contrast between the clear and opaque states, and also required a smaller switching voltage. A dark or reflective background on the display was found to improve the on-off visual contrast. A sample of area 2.0 $cm^2$ with an applied voltage of 100 volts was observed to draw $5x10^{-8}$A in the clear state giving a driving power of $5x10^{-6}$ watts.

EXAMPLE III

An electrically responsive guest-host device that was an opaque blue in the opaque state and clear in the clear state was constructed by the addition of a blue dye to the liquid crystal mixture. The blue dye was 1-(p-n-butylphenylamino)-4-hydroxyanthraquinone. It was added to the liquid crystal mixture of Example 1, according to the proportion 1.5% by weight blue dye to 98.5% by weight liquid crystal. This mixture was then mixed with part A and part B of the epoxy resin of Example 1 in the proportion (by volume) 33-1/3% part A, 33-1/3% part B and 33-1/3% blue dye and liquid crystal. As in Example II, the material was allowed to cure between two glass slides with conductive surface coatings. In this example, a larger visual contrast between the clear and opaque states was obtained with smaller film thickness and hence lower voltages were applied to the conducting surfaces. A display having a thickness of about 10 microns was found to be driven into the clear state with an applied voltage of 25 volts.

EXAMPLE IV

A temperature responsive film was made using the liquid crystal mixture of Example I and a two-component fast curing epoxy resin (trade designation EP0-TEK 302) consisting of bisphenol A resin, part A, and an aliphatic curing agent (part B). The epoxy resin and liquid crystal were mixed in the proportion (by volume): 25% part A, 25% part B, and 50% liquid crystal. The film preparation procedure used was identical to that of Example I. After a curing time of two days the film had an opaque white texture at temperatures below the liquid crystal isotropic-nematic transition temperature (80°C), but was clear above that temperature.

EXAMPLE V

A mechanical stress and temperature responsive material with light polarizing properties was prepared by the dispersion of the liquid crystal 4′-octyl-4-cyanobiphenyl (available as K-24 from EM Industries) by mixing it with a two-component epoxy resin in the proportion (by volume): 33-1/3% part A, 33-1/3% part B, and 33-1/3% liquid crystal. The epoxy resin consisted of an equimolar mixture of bisphenol A and epichlorohydrin (part

A), and a fatty polyamide curing agent, part B, purchased from Bostik Division, Milano, Italy. Two samples were prepared, one using K-24 as the liquid crystal and another using a mixture (by volume) of 75% K-24 and 25% anisylidene-p-butylaniline. The stirring procedure of the mixture was identical to that of Example I. A film of thickness about 50 microns was prepared by letting the mixture cure between a microscope glass slide and a plastic cover slip. Once the mixture was cured, the plastic cover slip was easily removed so the film could be easily peeled off the glass substrate. A uniformly flat, shiny and flexible material was obtained that was opaque at room temperature.

Upon stretching this film unidirectionally, it became more transparent. The light passing through the stretched film was observed to be linearly polarized in a direction perpendicular to the stretching direction. Upon heating the material to a temperature whereby the liquid crystal was in the isotropic phase, the material became clear and no polarization was observed either in the free or in the stretched condition. Instead of a stretch, a shear or simply unidirectional pressure served to produce the same polarizing effect.

EXAMPLE VI

An electro-responsive cell with light polarizing properties was prepared by mixing the following substances in the following order: Epoxy part B, 32.5% (by weight); nematic liquid crystal, 33.5%; spacer material, 0.7%; Epoxy part A, 33.3%. The epoxy was the same as that described in Example V. The nematic liquid crystal (available as E-7 from EM Industries) was a mixture of (by weight) 4′-n-pentyl-4-cyano-biphenyl (5CB), 51%; 4′-n-heptyl-4-cyano-biphenyl (7CB), 21%; 4′-n-octoxy-4-cyano-biphenyl, 16%; and 4′-n-pentyl-4-cyano-terphenyl, 12%. The spacer material was a powder with a particle size of 26 um (supplied as Alufrit PS-26 by the Atomergic Chemicals Corporation). While the mixture of liquid crystal and epoxy was still in its uncured, fluid state it was placed between two glass slides with transparent conductive coatings to which a voltage could be applied. The material was then cured for five days at -24°C. Upon subsequent warming to room temperature, the disparate coefficients of expansion of the glass slides and the epoxy resin matrix caused the matrix and the microdroplets of the liquid crystals dispersed in the matrix to be strained so that light passing through the material was linearly polarized as evidenced by the extinction of light viewed through a crossed polarizing lens. A voltage of 30 volts a.c. was then applied to the conductive coatings and the responsive material was switched to a state in which transmitted light was only faintly polarized.

EXAMPLE VII

An electro-responsive cell was constructed from a flexible epoxy resin-liquid crystal sheet stretched and sandwiched between two transparent conducting surfaces. The flexible epoxy resin-liquid crystal sheet was prepared by first mixing liquid crystal with epoxy Part B, then adding Part A in 1:1:1 proportions. The liquid crystal was the same as in Example IV. Part A was an equimolar mixture of bisphenol A and epichlorhydrin; Part B was a chemical curing agent (both available from Bostic Division, Milan, Italy). The epoxy resin-liquid crystal mixture was allowed to cure between two plexiglass sheets spaced about 50um apart. After curing for one day, the resultant opaque white flexible sheet was removed from the plexiglass. The sheet was stretched by about 5 to 10% in one direction and sandwiched between two glass slides. Each slide was coated on one side with a transparent conductive coating. The sandwich was constructed so that the conductive coatings faced the stretched sheet. A linearly polarizing film was oriented with the sandwiched, stretched sheet to achieve maximum extinction of transmitted light and then attached to the sandwich.

Another cell was constructed as described, except that the opaque white flexible sheet was not stretched before being sandwiched between the conductive glass slides.

When a voltage of 200 volts was applied to the cell with stretched material, the response time between opaque and clear states was in the order of one millisecond. The cell with unstretched material responded in 25-40 milliseconds.

EXAMPLE VIII

A dispersion of liquid crystals in a flexible solid epoxy matrix was made by curing an epoxy-liquid crystal formulation by ultraviolet light. The epoxy formulation was a mixture of 3.8 grams of resin (Shell brand EPON resin 828), 0.4 grams of UV activated epoxy curative (3M brand FC-508) and 0.9 grams of trimethylene glycol. The liquid crystal was the same as that described in Example VI. A solution was made by first mixing 0.3 grams of the epoxy formulation with 0.1 grams of the liquid crystal. The solution was then cured for thirty minutes under an ultraviolet lamp. The cured material appeared an opaque white, but when heated turned clear at the nematic liquid crystal isotropic transition temperatures, thereby acting as a thermally responsive light switch.

The flexible solid, opaque dispersion material also became partially clear upon stretching. The transmissive light through the stretched material was observed to be linearly polarized and would extinguish light when a crossed polarizer was placed either in front or behind the stretched material. The material only needed to be stretched 5-10% of its original length to show polarization effects. A slight compression or other mechanical distortion also showed polarization effects. When viewed through a cross polarizer the material acted as a mechanically responsive light switch.

EXAMPLE IX

A scattering polarizer was made using the same liquid crystal described in Example VII and Bostik, parts A and B (Bostik S.p.A., Milan, Italy). The ratio of Bostik parts B and A was 1:0.94, respectively; a mixture of parts A and B and liquid crystal was made using 33 wt% of E-7. 0.1 wt.% spacer material was added to the mixture. The spacer material was a powder with a particle size of 26 um (supplied as Alufrit PS-26 by the Atomergic Chemicals Corporation). The mixture was stirred and centrifuged several times to achieve a homogeneous and gas-free solution which was then sandwiched between two conducting glass plates ten minutes after mixing the various components. The resulting 26 um film was placed in a 47 kGauss magnetic field in a direction containing the plane of the film (henceforth called the direction of cure) and left there for 41 hours at 15°C. After removal from the field and cooling to room temperature, the resulting solid film was observed to be opaque when viewed with a linear absorption polarizing filter whose polarization was parallel to the direction of cure. If the polarization of the filter was turned perpendicular to the direction of cure, the film appeared transparent.

The polarizing properties of the film were further measured using polarizing light from a high intensity light source at normal incidence. The ratio of the intensity of the transmitted light when the beam was polarized perpendicular to the direction of cure to the intensity of the transmitted light when the beam was polarized in a direction parallel to the direction of cure was measured to be 30. Upon application of an electric field in a direction normal to the film the material switched to a non-polarizing (transmitting) state. The response time was less than 0.3 milliseconds; the time required for the film to relax back to the polarizing state was less than 3.0 milliseconds. The intensity of the light transmitted by the film was reduced upon switching from the non-polarizing to the polarizing state. This reduction was 2 orders of magnitude in the case of incident light polarized in the direction of curing, but was only about 3 fold for incident light polarized in a direction perpendicular to the direction of curing.

EXAMPLE X

A polarizer similar to that of Example I was made except that a mixture of 67% E-20 (43.96% 4′-n-pentyl-4′-cyanobiphenyl; 40.78% 4′-n-heptyl-4′-cyanobiphenyl; 9.22% 4′-n-octyloxy-4-cyanobiphenyl; 6.05% 4′-n-pentyl-4-cyanoterphenyl; BDH Chemicals, Ltd.) and 33% 10CB (4′-methoxy-4-cyanobiphenyl), deuterated on the methoxy position, was used instead of E-7. This film showed the same polarizing properties as in Example I. A bulk sample with the same composition was cured in an NMR (Nuclear Magnetic Resonance) glass tube under the same conditions as Example I. Deuterium nuclear magnetic resonance spectra of this sample were taken at temperatures between 10°C and 45°C and with the directions of cure oriented both along the static magnetic field and perpendicular to it. Deuterium spectral patterns showed that the liquid crystal molecules preferred an average orientation such that the long molecular axis was along the direction of the magnetic field during the curing process.

EXAMPLE XI

Two films were made with the same compositions as in Example IX and were cured in an electric field at 9°C for 43 hours. During the curing process an a.c. voltage of 100 v, oscillating at a frequency of 1 KHz was applied to transparent conductors on the surfaces of one of the films. The other film was cured without the presence of an applied electric field. Following the curing process, the films were examined for their optical properties. At room temperature the film cured in the electric field was more transparent than the film cured without the elecric field. This demonstrated that the application of an a.c. electric field during the curing process locked in the orientation of the optic axes of the microdroplets in the cured medium.

EXAMPLE XII

A scattering polarizer was made by using E-7 as the liquid crystal and Conuthane Tu50A, parts A and B

(Conap Inc., Buffalo, New York), as the polyurethane. Part A is a prepolymer formed from the reaction of an excess of toluene diisocyanate and polyether glycols, and part B is a mixture of 4-4′-methylenebisisoorthochloroaniline and various polyols. Parts A and B were mixed in the ratio of 1:0.94 respectively. A mixture of 35% E-7 and 65% parts A and B was made. To this was added 26 um Alufrit spacers as in Example IX. The sample was centrifuged to remove gas bubbles. A 26 um film was made by sandwiching the mixture between conductive glass plates. The resulting sandwich was cured overnight at 65°C. Upon curing, microdroplets formed resulting in a device which was opaque and scattering at room temperature. A slight strain on the film resulted in the polarization of light passing through the film. When viewed with a linear absorption polarizing filter the device appeared opaque when the direction of polarization of the filter and the direction of the applied strain were aligned; the device appeared transparent when the directions were orthogonal. The device may be switched electrically. Approximately 26 volts must be applied across a film 26 um thick in order to completely switch from the scattering to clear state. In both the stressed and relaxed states, the application of an electric field caused the device to respond in about 4 milliseconds. The relaxation time of the device is highly dependent on the stress. A strained device relaxed in about 5 milliseconds, whereas an unstrained device required 18 milliseconds to relax.

EXAMPLE XIII

A switchable light scattering film was prepared by solvent evaporation from a solution of a bulk preparation containing liquid crystal and EPON 828 cured with hexylamine. 4 grams EPON 828 were mixed with 1.124 grams hexylamine (HA) (1:1 equivalent ratio). 1.179 grams of the EPON/HA mixture were added to 0.595 grams of liquid crystal E7; the mixture was cured at 65°C over night and allowed to cool to room temperature. A 0.0188 gram slug of the cured mixture was mixed with 1.925 gram acetone. The resultant solution was cloudy due to the immiscibility of E7 with acetone. Thereafter 0.206 grams methanol was added and the solution became clear. The solution was stirred for 5 minutes after which time the solution was clear with no apparent undissolved material. The solution was poured on a conductive glass substrate and allowed to dry for 3 minutes. The resultant dry film was light scattering and opaque. A switchable cell was constructed with the film by placing 26 um spacers on top of the film, and then clamping a second conductive surface on top of the spacers to form a sandwich. The resultant sandwich was heated at 85°C for 5 minutes until the second conductive surface could be clamped to contact the spacers, and then cooled to room temperature. The 26 um thick film scattered light and was opaque; application of 30 volts caused the film to switch to a clear state.

EXAMPLE XIV

Light scattering cells were prepared by heating clear polymer polyacetyl beads (Aldridge Chemicals) in a 10 ml vial to 200°C and then adding liquid crystal E-7 as in Example XIII in a 2:1 ratio by weight of polymer to liquid crystal. The mixture was stirred and allowed to cool to room temperature. The cooled material was opaque white. Two cells were prepared by cutting 20mg slugs from the bulk material and placing each slug between conducting plates with 10um spacers. The plates were clamped together and placed on a hot plate at 200°C until the material was clear. One cell was then rapidly cooled to 3°C. The other cell was slowly cooled overnight on the turned off hot plate. The cell rapidly cooled was less opaque and showed a bluish tint as compared to the cell slowly cooled. The bluish tint indicated a very small microdroplet size. This cell was switched to the clear state with a 100 volt current. The cell slowly cooled was switched to the clear state by a 50 volt current.

EXAMPLE XV

0.292 grams of polystyrene were shaved off a block of clear polystyrene and placed in a 10 ml vial with 0.143 grams E7 as in Example XIII. The vial was placed in an oven at 170°C for 15 minutes. The polystyrene did not melt, whereas the liquid crystal, in its isotropic state, appeared to be absorbed into the the polystyrene. The vial was cooled to room temperature, the material was removed and cut in half with a razor blade. A surface layer approximately 7 mm thick was observed to be opaque and scattering. The layer was shaved off onto a patterned electrode glass slide with 18 mm spacers, covered with a second glass slide and clamped to make a sandwich as in Example XIII. The sandwich was returned to 170°C, heated until the shaved off layer flowed to form a film and the glass slides could be clamped to contact the spacers and then allowed to cool to room temperature. At room temperature, a light scattering opaque film was observed which was switched to a clear state with 70 volts.

EXAMPLE XVI

A resin was prepared by mixing 1.850 g of EPON 828 with 0.715 g of hexylamine (1 equivalent EPON to 1.374 equivalents hexylamine). The mixture was cured in bulk in a 10 ml vial at 65°C for 3 days. At room temperature, the cured material was a hard solid; it was difficult to deform when heated to 50°C. The cured material was heated to 130°C for 10 minutes and became a flowable viscous liquid. Liquid crystal E7 as in Example XIII was heated to 130°C, above its isotropic transition temperature, and mixed with the viscous liquid cured material. One aliquot of the hot mixture was sandwiched between glass slides and allowed to cool to room temperature; another aliquot was sandwiched between glass slides and put immediately into a freezer at 0°C. The slide cooled to room temperature appeared opaque and light scattering. The slide cooled to 0°C was clear and transmissive. Both slides were then examined with a microscope at 320x. The film allowed to cool to room temperature contained micron sized microdroplets (about 0.7 to 1.5 microns) of liquid crystal; the film cooled to 0°C showed no microdroplets.

EXAMPLE XVII

A mixture of uncured resin and binder was prepared by thoroughly mixing one equivalent of EPON 828 with one equivalent of hexylamine. The liquid crystal E7 was added to the uncured resin-binder mixture to form a 33% by weight solution. The mixture was sealed in a 10 ml vial and cured in bulk overnight at 65°C. The resulting material was inelastic and milky white (scattering) in appearance at room temperature.

The material was softened to a flowable state by warming it in the vial and maintaining it at about 100°C for five minutes. An aliquot of the material was poured to form a film between glass slides spaced apart at 26um by 26um glass spacers. The glass slides were equipped with conducting electrodes laid out in a pattern to form the character ZERO. A electric field of 3 volts per micron thickness of film (about 80 volts) was established across the film. The film was then allowed to cool to room temperature and to reharden while the field was maintained. The field was removed and the resultant film displayed a clear transparent image of the ZERO pattern surrounded by an opaque, light scattering field. The ZERO remained clear for 2 days, showing no tendency to decay for 2 hours. Total decay and a return to the opaque state occurred after 7 days.

EXAMPLE XVIII

Bulk material was prepared and cured as in Example XVII. A 1 cubic centimeter slug of cured material was cut from the bulk with a razor blade, and placed on a patterned electrode bearing glass slide as in Example I with 26 um glass spacers. A second electrode bearing glass slide was placed over the slug and clamped in place to form a sandwich. The sandwich was heated with a hot air blower until the slug flowed to form a film and the glass slides could be clamped down to contact the spacers. An electric field of about 70 volts was establised across the film and the film was allowed to cool to room temperature to reharden. The resultant film behaved as the film described in Example XVII.

EXAMPLE XIX

The film of Example XVII having the image of the zero pattern was erased by warming for 2 minutes in a oven at about 100°C. When the film was cooled to room temperature in the absence of an applied field it appeared opaque. The cycle of imprinting a memory by the method of Example XVII and subsequently erasing the image by heating to 100°C and cooling without a field was repeated successfully 10 times over a period of 7 days with no apparent deleterious effects.

EXAMPLE XX

The film of Example XVII having the image of the zero pattern was heated in a oven to about 100°C to erase the image, and, imprinted with another zero pattern by a field of about 70 volts maintained across the film until it cooled to room temperature. The film exhibited a transparent image of zero surrounded by an opaque, light scattering field. The patterned electrodes were removed and the film placed in a freezer at 0°C. The zero pattern remained clear in the opaque field and showed no tendency to decay for 30 days.

EXAMPLE XXI

A light scattering film was prepared by mixing 20% by weight of ferro-electric liquid crystal W-7 (Display-

tech, Boulder, Colorado).

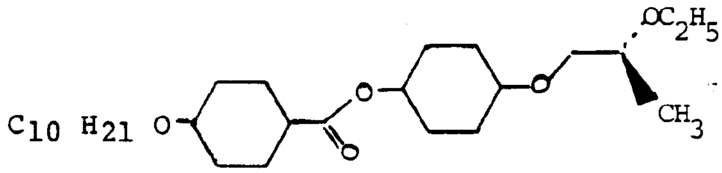

with 80% by weight of an equivalent EPON 828/hexylamine resin. The mixture was cured in bulk at 65°C for 4 hours. A film between glass slides was prepared by warming the cured mixture to a viscous fluid, allowing it to flow between glass slides spaced apart at 26um with 26um spacers, cooling to room temperature. The resultant film was opaque and light scattering.

EXAMPLE XXII

A light scattering film was prepared by mixing 2.893gm EPON (1.61 x $10^{-2}$ equivalents) with 0.812gm hexylamine (1.61 x $10^{-2}$ equivalents) and then taking a 0.327gm aliquot and further mixing it with 0.170gm liquid crystal M-24. This mixture was cured in bulk at 65°C overnight and a 26um cell was prepared as in Example XVIII. The resultant cell was opaque and scattering. It was switched to the clear state by the application of 1000v and remained in the clear state after the voltage was removed. The cell was then heated with a hot air gun and allowed to cool to room temperature so as to return to the opaque state. The same cell was reheated to the clear state and recooled in the presence of 400v. At room temperature the cell was clear and remained clear without the applied voltage for several hours.

EXAMPLE XXIII

Poly(vinyl formal) (from Aldrich Chemical Company, Inc., Milwaukee, Wisconsin) was mixed with liquid crystal E7 and chloroform in the ratio of 1:1.5:5.0 by weight and stirred until a clear homogeneous solution formed. The solution was poured out on a glass plate and the chloroform was evaporated to form an opaque, solid liquid crystalline-plastic material. The material was heated on a hot stage until it softened, sandwiched between glass slides with transparent conducting electrodes and allowed to cool at a moderate rate to room temperature to form an opaque scattering cell. A moderate cooling rate was achieved by wrapping the cell in a single piece of tissue paper (KIMWIPES, Kimberly-Clark Corp. Roswell, Ga.) for insulation and placing the cell between two aluminum blocks at room temperature.

The transparency of the film was measured by placing the cell in a chopped laser-beam with photodetector, switching the cell to a clear transparent state by the application of 50 volts, measuring the amount of light transmitted and comparing it to the amount transmitted by the glass slides alone. The poly(vinyl formal) cell yielded a transparency coefficient of 96%. The switching time from the ON to the OFF state was recorded by the photodetector at less than 1.0 millisecond at room temperature.

EXAMPLE XXIV

Poly(methyl methacrylate) (Aldrich) was mixed with liquid crystal E7 and acetone in the ratio of 1:1.5:5.0 by weight and an opaque cell formed as in Example XXIII. The transparency coefficient was greater than 90% and the switching time recorded at about 2.0 milliseconds at room temperature.

EXAMPLE XXV

Poly(vinyl formal) (Aldrich) cells as in Example XXIII were fabricated with liquid crystals E-20, E-31, and E-40 (all proprietary mixtures of cyanobiphenyls and esters available from EM Chemicals). Substantially similar switching times and transparencies as reported in Example XIII were observed.

EXAMPLE XXVI

Poly(vinyl formal) (Aldrich) was mixed with liquid crystal E-20 and chloroform in the ratio of 1.0:1.5:5.0 by weight to form a clear homogeneous solution. The solvent was evaporated to yield a bulk opaque material. Three aliquots of the material were placed between three sets of glass slides with transparent conducting electrodes. The slides were heated on a hot stage until the material softened and flowed evenly between the slides, and then cooled to form opaque, scattering cells as in Example XXIII. The thickness of the cells was measured by the amount of voltage needed to switch each cell from opaque to scattering. The three cells yielded switching voltage thresholds of 400V, 200V and 80V. At its switching voltage threshold, each cell became transparent in less than 1.0 millisecond. The voltage was removed and the cells remained transparent. The two thicker cells (400V and 200V) remained clear for about 1 minute before returning to the opaque state; the thinner cell (80V) remained clear for a few seconds. After the three cells returned to the opaque state, they were switched to clear again by the application of their respective threshold voltages and short circuited. Short circuiting the cells caused each to switch to the opaque state in less than 1.0 millisecond.

EXAMPLE XXVII

Poly(methyl methacrylate) (Aldrich) was mixed with liquid crystal E7 and trichloromethane in a ratio of 1:2:5 to form a homogeneous solution. The solvent was then evaporated and a cell formed as in Example XXIII, except that the transparent conducting electrodes were patterned with an alphanumeric character. A voltage of 200V applied to the cell switched the film from opaque to a clear alphanumeric character in an opaque field. The voltage was removed and the image of the character remained for about 10 seconds.

EXAMPLE XXVIII

Poly(methyl methacrylate) was mixed with liquid crystal E20 and trichloromethane in a ratio of 1:2:5. A cell constructed with the resultant material, as in Example XXVII, held an image of the alphanumeric character for about 10 seconds.

EXAMPLE XXIX

Poly(vinyl butyral) (Aldich) was mixed with liquid crystal E7 in a ratio of 1:2 by weight. The mixture was heated to about 150°C until a clear homogeneous solution formed. The solution was squeezed between glass slides with transparent electrodes and cooled to room temperature at a moderate rate as in Example XXIII. The transparency of the film was about 90% and the switching time was about 5 milliseconds.

EXAMPLE XXX

Electrooptic cells referred to in Tables IA and IB above were fabricated according to the method of Example XXIII with the following solvents at a ratio of about 1 part polymer to about 5 parts solvent.

| Polymer | solvent |
|---|---|
| Poly(vinyl acetate) | acetone |
| poly(vinyl formal) | chloroform |
| polycarbonate | chloroform |
| poly(vinyl butyral) | acetone |
| poly(vinyl methyl ketone) | chloroform |
| poly(methyl acrylate) | toluene |
| poly(cyclohexyl methacrylate) | methylene chloride |
| poly(isoprene) | chloroform |
| poly(ethyl methacrylate) (high M.W.) | acetone |
| poly(isobutyl methacrylate) | acetone |
| poly(methyl methacrylate) | acetone |

EXAMPLE XXXI

Microdroplet growth rate control by differential cooling of a thermoplastic-liquid crystal solution was measured by preparing a modified epoxy-liquid crystal cell. 1 equivalent EPON 828 (from Miller-Stephenson Company, Ct.) was mixed with 1 equivalent hexylamine and liquid crystal E7; to form a plastic to liquid crystal ratio of 60:40 by weight. The mixture was cured at 65°C in bulk overnight to form a solid, white material. A slug was cut from the bulk preparation and placed between glass slides spaced apart at 26µm and having transparent conducting electrodes. The slides were placed on a microscope hot stage (Mettler FP5) at 80°C and clamped down until the material flowed and the slides contacted the spacers. At 80°C the resultant cell was clear and transparent. The hot stage was programmed to cool at controlled rates. The results of heating the same cell to 80°C and cooling it at various rates are summarized in Table VI.

TABLE VI

| Rate of cooling (C°/minute) | Average Microdroplet Diameter (µm) |
|---|---|
| 0.2 | 8 |
| 1.0 | 3.9 |
| 2.0 | 2.8 |
| 4.0 | 2.5 |

As seen in Table VI, slow cooling results in very large microdroplets useful for modulating longer wavelengths of light, whereas faster cooling leads to smaller microdroplets useful for modulating shorter wavelengths.

EXAMPLE XXXI I

A modified epoxy-liquid crystal cell was prepared by mixing 40% by weight of liquid crystal to 60% by weight of a 1:1 by equivalents mixture of EPON 828 and t-butylamine, curing the mixture overnight at 60°C and preparing a cell as in Example XXXI. The cell was repeatedly heated and cooled at various rates. The results are summarized in Table VII.

TABLE VII

| Rate of cooling (C°/minute) | Average Microdroplet Diameter (µm) |
|---|---|
| 0.2 | 8 |
| 1.0 | 3.9 |
| 2.0 | 3.0 |
| 4.0 | 2.6 |

Uncontrolled cooling, e.g., placing the cell on an aluminum block, yielded microdroplets having a size too small to measure with an optical microscopic (<1µm).

EXAMPLE XXXIII

Microdroplet growth rate control by differential cure temperature of a resin-liquid crystal solution was measured by preparing epoxy-liquid crystal cells. EPON 828, Capcure 3-800 (Miller-Stephenson) and liquid crystal E7 were mixed in an equivalent ratio of 1:1:1, and the mixture placed between 4 sets of glass slides spaced apart at 26µm and having transparent conducting elecrodes. Each slide was placed in a temperature controlled oven and allowed to cure overnight until phase separation and curing were complete. The results of curing the cells at different temperatures are summarized in Table VIII.

TABLE VIII

| Microdroplet Size (um) | Cure Temperature 70°C % | 60°C % | 50°C % | 40°C % |
|---|---|---|---|---|
| >0.1 | 6.1 | - | - | - |
| 0.1-0.2 | 64.2 | - | - | - |
| 0.2-0.3 | 21.4 | 10.0 | 0.6 | 0.9 |
| 0.3-0.5 | 8.3 | 14.9 | 2.9 | 5.1 |
| 0.5-0.7 | - | 17.5 | 5.2 | 11.6 |
| 0.7-0.9 | - | 18.9 | 13.8 | 19.5 |
| 0.9-1.1 | - | 19.6 | 24.2 | 36.0 |
| 1.1-1.3 | - | 12.1 | 30.0 | 17.6 |
| 1.3-1.5 | - | 6.7 | 17.4 | 8.4 |
| 1.5-1.7 | - | 0.3 | 4.7 | 0.9 |
| 1.7-1.9 | - | - | 1.2 | - |
| 1.9 | - | - | - | - |
| | (% of microdroplets within range) | | | |
| Average Diameter | 0.2μm | 0.8μm | 1.1μm | 0.9μm |

As seen in Table VIII curing at 70°C accelerates the rate of curing of the resin and results in smaller microdroplets.

The results in Table VIII were calculated by counting the number of microdroplets in a unit square area and normalizing the number of microdroplets within a size range to yield the percentages shown. Curing at higher temperatures also affected the number of nucleation sites and the relative density of microdroplets in each cell, as seen in Table IX.

TABLE IX

| Cure Temperature | # of microdroplets per $(mm)^2$ |
|---|---|
| 60°C | 0.0138 |
| 50°C | 0.0154 |
| 40°C | 0.0203 |

EXAMPLE XXXIV

Microdroplet growth rate control by differential cure temperature and relative concentration was assessed by preparing epoxy-liquid crystal cells. Bostik (Bostik S.p.a., Milan Italy) 1:1 parts A and B was mixed with liquid crystal E7 to form 35% and 40% liquid crystal to plastic ratios by weight. The mixtures were poured between glass slides and cured until opaque at various temperatures. Table XI summarizes the range of microdroplet diameters in microns versus cure temperature for the two mixtures.

TABLE X

| | Cure Temperature | | | |
|---|---|---|---|---|
| | RT | 40°C | 60°C | 80°C |
| 35%E7 | $0.6^{+}-0.3$ | $0.6^{+}-0.3$ | $0.7^{+}-0.4$ | $0.5^{+}-0.2$ |
| 40%E7 | 4.0 | $2.5^{+}-1.0$ | $1.2^{+}-0.3$ | 0.8 |

35% E7 by weight resulted in nearly the same diameter microdroplet, about 0.6 microns, regardless of cure temperature, whereas 40% E7 by weight yielded microdroplets that decreased in size with increasing cure temperature.

EXAMPLE XXXV

Microdroplet growth rate control by relative concentration was assessed in epoxy-liquid crystal cells with Bostik, as in Example XXXIII. Mixtures ranging from about 10% to about 50% E7 by weight were prepared and cured at room temperature. Table XI summarizes the ranges of microdroplet size versus relative concentration of liquid crystal.

TABLE XI

| % Liquid Crystal | Diameter (mm) |
|---|---|
| F12 | no microdroplet formation |
| 14-16 | 0.2 |
| 22-35 | 0.5 |
| 37-43 | 1.0 |
| f44 | microdroplet coalescence |

Many modification and variations of the invention will be apparent to those skilled in the art in light of the foregoing detailed disclosure. Therefore, it is to be understood that, within the scope of the appended claims, the invention can be practiced otherwise than as specifically shown and described.

## Claims

### Claims for the following Contracting States : CH, DE, FR, GB, SE

1. A light modulating material, comprising microdroplets of liquid crystal material in a matrix of a solid light transmissive resin, characterised in that:

   said liquid crystal material has a nematic or smectic liquid crystal phase;

   said solid resin has a matrix forming precursor in which said liquid crystal material is soluble to form a homogeneous solution, solidification of said precursor inducing said microdroplets spontaneously to form from said homogeneous solution;

   solidification of said precursor is by curing;

   and the ordinary optical index of refraction of said liquid crystal phase, or the optical index of refraction of the isotropic phase of said liquid crystal material, is substantially matched to the index of refraction of the solid resin matrix, and wherein said resin is other than a curable epoxy resin material.

2. A light modulating material, comprising microdroplets of liquid crystal material in a matrix of a solid light transmissive resin, characterised in that:

   said liquid crystal material has a nematic or smectic liquid crystal phase;

   said solid resin has a matrix forming precursor in which said liquid crystal material is soluble to form a homogeneous solution, solidification of said precursor inducing said microdroplets spontaneously to form from said homogeneous solution; and wherein either

(a) said resin is thermoplastic, and is melted to provide said precursor in which the liquid crystal material is soluble, solidification of said precursor being by cooling; or

(b) said precursor is a solution of a thermoplastic resin in a solvent, and said solidification is by removal of the solvent; or

(c) said precursor comprises at least one polymerisable monomer, dimer, oligomer, or prepolymer, and solidification is by polymerisation;

and the rate of solidification is controlled to provide microdroplets of a size of 0.2 to 10 microns.

3. A light modulating material according to claim 1 or claim 2 wherein the liquid crystal phase exhibits positive dielectric anisotropy.

4. A light modulating material according to claim 3 wherein the liquid crystal material is a cyanobiphenyl.

5. A light modulating material according to any preceding claim wherein the resin is a thermoset resin.

6. A light modulating material according to any one of claims 1 to 3 wherein the resin is a thermoplastic resin.

7. A light modulating material according to claim 6 wherein the liquid crystal phase is present in an amount of at least 50 weight percent of the material.

8. A light modulating material according to claim 7 wherein the mathematical product of the resistivity and permittivity of the material equals at least a few seconds whereby the material will retain a charge for a time when placed between two electrodes.

9. A light modulating material according to any one of claims 1 to 4 wherein the resin is a polyurethane resin, ε polycarbonate resin, a polyvinylbutyral resin, a polyvinyl methyl ketone resin, a polyvinylformyl resin, or a polymer containing at least one sort of the following units: lower ($C_{1-8}$) alkyl substituted acrylic acid ester of a lower ($C_{1-8}$) alkanol, a substituted styrene, isoprene methylbutene, butadiene,isobutylene, or a vinyl ester of lower ($C_{1-4}$) alkanoic acid.

10. A light modulating material according to any preceding claim wherein the liquid crystal material has a liquid crystal to isotropic phase transition temperature above the softening temperature of the resin phase.

11. A light modulating material according to any preceding claim wherein the size of the liquid crystal microdroplets is from 0.2 to 1.5 microns.

12. A light modulating material according to any preceding claim wherein the liquid crystal directors are generally aligned in one direction by solidifying the matrix in the presence of an electric or magnetic field effective to cause such alignment, the material being responsive to an electric or magnetic field effective to change such alignment of the liquid crystal directors.

13. A light modulating material according to any one of claims 1 to 11 wherein the liquid crystal directors are normally randomly orientated so that incident light will be scattered, and are alignable in the presence of an electric or magnetic field so that at least one component of incident light will be transmitted through the material.

14. A method of making light modulating material, comprising mixing a selected liquid crystal material with a precurscr capable of solidifying to a selected solid light transmissive resin, and causing said precursor to solidify so as to form said modulating material as microdroplets of liquid crystal material interspersed in a matrix of said solid resin, characterised in that:

the selected liquid crystal material has a nematic cr smectic liquid crystal phase;

the selected resin has a refractive index substantially equal to the ordinary index of refraction of the liquid crystal phase or to the index of refraction of the isotropic phase of the liquid crystal material; and

the selected liquid crystal material is soluble in, and is dissolved in, said precursor to form a homogeneous solution, but is induced spontaneously to undergo phase separation to form microdroplets as a result of solidification of said precursor to said matrix, said solidification being brought about by curing; and wherein resin is other than a curable epoxy resin material.

15. A method of making light modulating material, comprising mixing a selected liquid crystal material with a

precursor capable of solidifying to a selected solid light transmissive resin, and causing said precursor to solidify so as to form said modulating material as microdroplets of liquid crystal material interspersed in a matrix of said solid resin, characterised in that:

the selected liquid crystal material has a nematic or smectic liquid crystal phase;

the selected resin has a refractive index substantially equal to the ordinary index of refraction of the liquid crystal phase or to the index of refraction of the isotropic phase of the liquid crystal material; and

the selected liquid crystal material is soluble in, and is dissolved in, said precursor to form a homogeneous solution, but is induced spontaneously to undergo phase separation to form microdroplets as a result of solidification of said precursor to said matrix, and wherein either

(a) said resin is thermoplastic, and is melted to provide said precursor in which the liquid crystal material is soluble, solidification of said precursor being by cooling; or

(b) said precursor is a solution of a thermoplastic resin in a solvent, and said solidification is by removal of the solvent; or

(c) said precursor comprises at least one polymerisable monomer, dimer, oligomer, or prepolymer, and solidification is by polymerisation;

and the rate of solidification is controlled to provide microdroplets of a size of 0.2 to 10 microns.

**16.** The method according to claim 15 wherein said solidification is effected by polymerisation of said precursor.

**17.** The method according to claim 15 wherein said precursor includes a solvent and said solidification is effected by abstraction of said solvent.

**18.** The method according to claim 15 wherein the liquid crystal material is dissolved in said precursor at an elevated temperature, and said solidification is effected by temperature reduction.

**19.** The method according to any one of claims 15 to 18 wherein the size of the microdroplets is controlled by ending phase separation when the microdroplets have grown to a selected diameter.

**20.** The method according to any one of claims 14 to 19 wherein the phase separated material is heated to re-dissolve the liquid crystal material in the resin material and thereafter cooled to induce phase separation of said liquid crystal material.

**21.** The method according to any one of claims 14 to 20 wherein the phase separated material is heated to soften the resin matrix, the liquid crystal directors are oriented, and the matrix is subsequently cooled.

**22.** The method according to any one of claims 14 to 21 wherein the resin is solidified in the presence of an electric or magnetic field sufficient to produce a significant alignment of the liquid crystal directors.

**23.** The method according to any one of claims 14 to 21 wherein stress is applied to the phase separated material to orientate the liquid crystal directors.

**24.** A light modulating device comprising a light modulating material according to any one of claims 1 to 13 and means for establishing an electric or magnetic field through the material to change the liquid crystal director orientation and alter the amount of light transmitted by the material.

**25.** A light modulating device according to claim 24 wherein the means for establishing an electric field through the material comprises electrodes on opposed surfaces of the material.

**26.** A light modulating device according to claim 25 as dependent on claim 11 wherein the liquid crystal directors are normally generally parallel to said opposed surfaces, and are alignable generally perpendicular to said surfaces in the presence of said field.

**27.** A light modulating device according to any one of claims 24 to 26 wherein the resin matrix has an index of refraction close enough to the ordinary index of refraction of the liquid crystal phase for the device to transmit at least 90% of normally incident light when said electric or magnetic field is established through the material.

**28.** A light modulating device according to any one of claims 24 to 26 wherein the resin matrix has an index

of refraction different enough from the ordinary index of refraction of the liquid crystal phase for the device to exhibit maximum transparency to light which is incident at an angle of less than 90° to the material surface when said electric or magnetic field is established through the material.

29. A light modulating device comprising a light modulating material according to any one of claims 1 to 13 and means for thermally addressing the material for establishing a temperature change therein, so that incident light can be selectively transmitted through the material or scattered according to the temperature of the liquid crystal material.

30. A device according to claim 29 where the temperature change is sufficient to convert the liquid crystal phase to the isotropic phase.

31. A device according to any one of claims 24 to 30 wherein the light modulating material is mechanically stressed so that it exhibits enhanced switching rate and contrast between a clear state and a scattering state.

**Claims for the following Contracting States : AT, BE, IT, LU, NL**

1. A light modulating material, comprising microdroplets of liquid crystal material in a matrix of a solid light transmissive resin, characterised in that:
   said liquid crystal material has a nematic or smectic liquid crystal phase;
   said solid resin has a matrix forming precursor in which said liquid crystal material is soluble to form a homogeneous solution, solidification of said precursor inducing said microdroplets spontaneously to form from said homogeneous solution;
   solidification of said precursor is by curing;
   and the ordinary optical index of refraction of said liquid crystal phase, or the optical index of refraction of the isotropic phase of said liquid crystal material, is substantially matched to the index of refraction of the solid resin matrix.

2. A light modulating material, comprising microdroplets of liquid crystal material in a matrix of a solid light transmissive resin, characterised in that:
   said liquid crystal material has a nematic or smectic liquid crystal phase;
   said solid resin has a matrix forming precursor in which said liquid crystal material is soluble to form a homogeneous solution, solidification of said precursor inducing said microdroplets spontaneously to form from said homogeneous solution; and wherein either
   (a) said resin is thermoplastic, and is melted to provide said precursor in which the liquid crystal material is soluble, solidification of said precursor being by cooling; or
   (b) said precursor is a solution of a thermoplastic resin in a solvent, and said solidification is by removal of the solvent; or
   (c) said precursor comprises at least one polymerisable monomer, dimer, oligomer, or prepolymer, and solidification is by polymerisation;
   and the rate of solidification is controlled to provide microdroplets of a size of 0.2 to 10 microns.

3. A light modulating material according to claim 1 or claim 2 wherein the liquid crystal phase exhibits positive dielectric anisotropy.

4. A light modulating material according to claim 3 wherein the liquid crystal material is a cyanobiphenyl.

5. A light modulating material according to any preceding claim wherein the resin is a thermoset resin.

6. A light modulating material according to any one of claims 1 to 3 wherein the resin is a thermoplastic resin.

7. A light modulating material according to claim 6 wherein the liquid crystal phase is present in an amount of at least 50 weight percent of the material.

8. A light modulating material according to claim 7 wherein the mathematical product of the resistivity and permittivity of the material equals at least a few seconds whereby the material will retain a charge for a time when placed between two electrodes.

**9.** A light modulating material according to any one of claims 1 to 4 wherein the resin is a polyurethane resin, a polycarbonate resin, a polyvinylbutyral resin, a polyvinyl methyl ketone resin, a polyvinylformyl resin, or a polymer containing at least one sort of the following units: lower ($C_{1-8}$) alkyl substituted acrylic acid ester of a lower ($C_{1-8}$) alkanol, a substituted styrene, isoprene methylbutene, butadiene,isobutylene, or a vinyl ester of lower ($C_{1-4}$) alkanoic acid.

**10.** A light modulating material according to any preceding claim wherein the liquid crystal material has a liquid crystal to isotropic phase transition temperature above the softening temperature of the resin phase.

**11.** A light modulating material according to any preceding claim wherein the size of the liquid crystal microdroplets is from 0.2 to 1.5 microns.

**12.** A light modulating material according to any preceding claim wherein the liquid crystal directors are generally aligned in one direction by solidifying the matrix in the presence of an electric or magnetic field effective to cause such alignment, the material being responsive to an electric or magnetic field effective to change such alignment of the liquid crystal directors.

**13.** A light modulating material according to any one of claims 1 to 11 wherein the liquid crystal directors are normally randomly orientated so that incident light will be scattered, and are alignable in the presence of an electric or magnetic field so that at least one component of incident light will be transmitted through the material.

**14.** A method of making light modulating material, comprising mixing a selected liquid crystal material with a precursor capable of solidifying to a selected solid light transmissive resin, and causing said precursor to solidify so as to form said modulating material as microdroplets of liquid crystal material interspersed in a matrix of said solid resin, characterised in that:

the selected liquid crystal material has a nematic or smectic liquid crystal phase;

the selected resin has a refractive index substantially equal to the ordinary index of refraction of the liquid crystal phase or to the index of refraction of the isotropic phase of the liquid crystal material; and

the selected liquid crystal material is soluble in, and is dissolved in, said precursor to form a homogeneous solution, but is induced spontaneously to undergo phase separation to form microdroplets as a result of solidification of said precursor to said matrix, said solidification being brought about by curing.

**15.** A method of making light modulating material, comprising mixing a selected liquid crystal material with a precursor capable of solidifying to a selected solid light transmissive resin, and causing said precursor to solidify so as to form said modulating material as microdroplets of liquid crystal material interspersed in a matrix of said solid resin, characterised in that:

the selected liquid crystal material has a nematic or smectic liquid crystal phase;

the selected resin has a refractive index substantially equal to the ordinary index of refraction of the liquid crystal phase or to the index of refraction of the isotropic phase of the liquid crystal material; and

the selected liquid crystal material is soluble in, and is dissolved in, said precursor to form a homogeneous solution, but is induced spontaneously to undergo phase separation to form microdroplets as a result of solidification of said precursor to said matrix, and wherein either

(a) said resin is thermoplastic, and is melted to provide said precursor in which the liquid crystal material is soluble, solidification of said precursor being by cooling; or

(b) said precursor is a solution of a thermoplastic resin in a solvent, and said solidification is by removal of the solvent; or

(c) said precursor comprises at least one polymerisable monomer, dimer, oligomer, or prepolymer, and solidification is by polymerisation;

and the rate of solidification is controlled to provide microdroplets of a size of 0.2 to 10 microns.

**16.** The method according to claim 15 wherein said solidification is effected by polymerisation of said precursor.

**17.** The method according to claim 15 wherein said precursor includes a solvent and said solidification is effected by abstraction of said solvent.

**18.** The method according to claim 15 wherein the liquid crystal material is dissolved in said precursor at an elevated temperature, and said solidification is effected by temperature reduction.

**19.** The method according to any one of claims 15 to 18 wherein the size of the microdroplets is controlled by ending phase separation when the microdroplets have grown to a selected diameter.

**20.** The method according to any one of claims 14 to 19 wherein the phase separated material is heated to re-dissolve the liquid crystal material in the resin material and thereafter cooled to induce phase separation of said liquid crystal material.

**21.** The method according to any one of claims 14 to 20 wherein the phase separated material is heated to soften the resin matrix, the liquid crystal directors are oriented, and the matrix is subsequently cooled.

**22.** The method according to any one of claims 14 to 21 wherein the resin is solidified in the presence of an electric or magnetic field sufficient to produce a significant alignment of the liquid crystal directors.

**23.** The method according to any one of claims 14 to 21 wherein stress is applied to the phase separated material to orientate the liquid crystal directors.

**24.** A light modulating device comprising a light modulating material according to any one of claims 1 to 13 and means for establishing an electric or magnetic field through the material to change the liquid crystal director orientation and alter the amount of light transmitted by the material.

**25.** A light modulating device according to claim 24 wherein the means for establishing an electric field through the material comprises electrodes on opposed surfaces of the material.

**26.** A light modulating device according to claim 25 as dependent on claim 11 wherein the liquid crystal directors are normally generally parallel to said opposed surfaces, and are alignable generally perpendicular to said surfaces in the presence of said field.

**27.** A light modulating device according to any one of claims 24 to 26 wherein the resin matrix has an index of refraction close enough to the ordinary index of refraction of the liquid crystal phase for the device to transmit at least 90% of normally incident light when said electric or magnetic field is established through the material.

**28.** A light modulating device according to any one of claims 24 to 26 wherein the resin matrix has an index of refraction different enough from the ordinary index of refraction of the liquid crystal phase for the device to exhibit maximum transparency to light which is incident at an angle of less than 90° to the material surface when said electric or magnetic field is established through the material.

**29.** A light modulating device comprising a light modulating material according to any one of claims 1 to 13 and means for thermally addressing the material for establishing a temperature change therein, so that incident light can be selectively transmitted through the material or scattered according to the temperature of the liquid crystal material.

**30.** A device according to claim 29 where the temperature change is sufficient to convert the liquid crystal phase to the isotropic phase.

**31.** A device according to any one of claims 24 to 30 wherein the light modulating material is mechanically stressed so that it exhibits enhanced switching rate and contrast between a clear state and a scattering state.

## Patentansprüche

### Patentansprüche für folgende Vertragsstaaten : CH, DE, FR, GB, SE

**1.** Licht-modulierendes Material, enthaltend Mikrotröpfchen eines flüssigkristallinen Materials in einem Stoff aus festem, lichtdurchlässigem Harz, **dadurch gekennzeichnet**, daß
- das flüssigkristalline Material eine nematische oder smektische flüssigkristalline Phase hat;

- das feste Harz einen einen Stoff bildenden Präkursor aufweist, in dem das flüssigkristalline Material löslich ist, um eine homogene Lösung zu bilden, wobei eine Verfestigung des Präkursors bewirkt, daß die Mikrotröpfchen sich selbstablaufend aus der homogenen Lösung bilden;
- der Präkursor durch Aushärtung verfestigt wird;
- und der normale optische Brechungsindex der flüssigkristallinen Phase oder der optische Brechungsindex der isotropen Phase des flüssigkristallinen Materials im wesentlichen an den Brechungsindex des festen Harz-Stoffes angepaßt und das Harz anders als ein aushärtbares Expoxydharz-Material ist.

**2.** Licht-modulierendes Material, enthaltend Mikrotröpfchen eines flüssigkristallinen Materials in einem Stoff aus festem, lichtdurchlässigen Harz, **dadurch gekennzeichnet**, daß
- das flüssigkristalline Material eine nematische oder smektische flüssigkristalline Phase hat;
- das feste Harz einen einen Stoff bildenden Präkursor aufweist, in dem das flüssigkristalline Material lösbar ist, um eine homogene Lösung zu bilden, wobei eine Verfestigung des Präkursors bewirkt, daß die Mikrotröpfchen sich selbstablaufend aus der homogenen Lösung bilden; und entweder
  (a) das Harz thermoplastisch und geschmolzen ist, um den Präkursor zu bilden, in dem das flüssigkritalline Material lösbar ist, und die Verfestigung des Präkursors durch Abkühlen erfolgt; oder
  (b) der Präkursor eine Lösung eines thermoplastischen Harzes in einem Lösungsmittel ist und die Verfestigung durch Entfernung des Lösungsmittels erfolgt; oder
  (c) der Präkursor wenigstens ein polymerisierbares Monomer, Dimer, Oligomer oder Prepolymer enthält und die Verfestigung durch Polymerisation erfolgt;
- und die Verfestigungsrate so gesteuert ist, daß Mikrotröpfchen mit einer Größe von 0,2 - 10 µm bereitgestellt werden.

**3.** Licht-modulierendes Material nach Anspruch 1 oder 2, in dem die flüssigkristalline Phase eine positive dielektrische Anisotropie bewirkt.

**4.** Licht-modulierendes Material nach Anspruch 3, in dem das flüssigkristalline Material ein Cyanobiphenyl ist.

**5.** Licht-modulierendes Material nach einem der vorangehenden Ansprüche, in dem das Harz ein hitzehärtbarer Plast ist.

**6.** Licht-modulierendes Material nach einem der Ansprüche 1 - 3, in dem das Harz ein thermoplastisches Harz ist.

**7.** Licht-modulierendes Material nach Anspruch 6, in dem die flüssigkristalline Phase mit einem Betrag von wenigstens 50 Gewichtsprozenten des Materials anwesend ist.

**8.** Licht-modulierendes Material nach Anspruch 7, in dem das mathematische Produkt aus dem spezifischen Widerstand und der Dielektrizitätskonstante des Materials wenigstens einige Sekunden beträgt, wodurch das Material für eine Zeit, in der es sich zwischen zwei Elektroden befindet, eine Ladung beibehält.

**9.** Licht-modulierendes Material nach einem der Ansprüche 1 - 4, in dem das Harz ein Polyurethan-Harz, ein Polykarbonat-Harz, ein Polyvinylbutyral-Harz, ein Polyvinylmethylketon-Harz, ein Polyvinylformyl-Harz oder ein Polymer ist, das wenigstens eine Gattung der folgenden Einheiten enthält: Schwächer ($C_{1-8}$) alkyl-substituierter Alcrylsäureester eines schwächeren ($C_{1-8}$) Alkanols, ein substituiertes Styren, ein isoprenes Methylbuten, ein Butadien, Isobutylen oder eines Vinylester aus einer schwächeren ($C_{1-4}$) Alkansäure.

**10.** Licht-modulierendes Material nach einem der vorangehenden Ansprüche, in dem das flüssigkristalline Material eine Übergangstemperatur von der flüssigkristallinen Phase zu der isotropen Phase oberhalb der Schmelztemperatur der Harzphase hat.

**11.** Licht-modulierendes Material nach einem der vorangehenden Ansprüche, in dem die Abmessung der flüssigkristallinen Mikrotröpfchen zwischen 0,2 bis 1,5 µm beträgt.

**12.** Licht-modulierendes Material nach einem der vorangehenden Ansprüche, in dem die flüssigkristallinen Direktoren durch Verfestigung des Stoffes in der Anwesenheit eines elektrischen oder magnetischen Feldes, das eine Ausrichtung bewirkt, in einer Richtung ausgerichtet werden, wobei das Material auf ein elektrisches oder magnetisches Feld anspricht, das eine Änderung einer derartigen Ausrichtung der flüssigkristallinen Direktoren bewirkt.

**13.** Licht-modulierendes Material nach einem der Ansprüche 1 - 11, in dem die flüssigkristallinen Direktoren normal zufallsausgerichtet orientiert sind, so daß das einfallende Licht gestreut wird, und unter der Anwesenheit eines elektrischen oder magnetischen Feldes derart ausrichtbar sind, daß wenigstens eine Komponente des einfallenden Lichtes durch das Material übertragen wird.

**14.** Verfahren zum Herstellen eines Licht-modulierenden Materials, in dem ein ausgewähltes, flüssigkristallines Material mit einem Präkursor gemischt wird, der in der Lage ist, sich auf ein ausgewähltes, festes, lichtdurchlässiges Harz zu verfestigen, und der Präkursor veranlaßt wird, sich zu verfestigen, um so das modulierende Material als Mikrotröpfchen eines flüssigkristallinen, in einem Stoff des festen Harzes durchsetzten Materials zu bilden, **dadurch gekennzeichnet**, daß

- das ausgewählte, flüssigkristalline Material eine nematische oder smektische flüssigkristalline Phase hat;
- das ausgewählte Harz einen Brechungsindex aufweist, der im wesentlichen gleich ist dem normalen Brechungsindex der flüssigkristallinen Phase oder dem Brechungsindex der isotropen Phase des flüssigkristallinen Materials; und
- das ausgewählte, flüssigkristalline Material lösbar ist in und gelöst ist in dem Präkursor, um eine homogene Lösung zu bilden, jedoch selbstablaufend ausgelöst wird, sich einer Phasentrennung zu unterziehen, um Mikrotröpfchen als Ergebnis der Verfestigung des Präkursors zu dem Stoff zu bilden, wobei die Verfestigung durch Aushärtung bewirkt wird und wobei das Harz anders ist als ein aushärtbares Expoxydharz-Material.

**15.** Verfahren zum Herstellen eines Licht-modulierenden Materials durch Mischung eines ausgewählten flüssigkristallinen Materials mit einem Präkursor, der geeignet ist, sich mit einem ausgewählten, festen, lichtdurchlässigen Harz zu verfestigen, und daß der Präkursor veranlaßt wird, sich zu verfestigen, um auf diese Weise das modulierende Material als Mikrotröpfchen eines in einem Stoff des festen Harzes durchsetzten flüssigkristallinen Materials zu bilden, **dadurch gekennzeichnet**, daß

- das ausgewählte, flüssigkristalline Material eine nematische oder smektische flüssigkristalline Phase hat;
- das ausgewählte Harz einen Brechungsindex hat, der etwa gleich ist dem normalen Brechungsindex der flüssigkristallinen Phase oder dem Brechungsindex der isotropen Phase des flüssigkristallinen Materials; und
- das ausgewählte, flüssigkristalline Material lösbar ist in und gelöst ist in dem Präkursor, um eine homogene Lösung zu bilden, jedoch selbstablaufend ausgelöst wird, sich einer Phasentrennung zu unterziehen, um Mikrotröpfchen als ein Ergebnis einer Verfestigung des Präkursors zu dem Stoff zu bilden, und worin entweder
  (a) das Harz thermoplastisch ist und geschmolzen wird, um den Präkursor zu erzeugen, in dem das flüssigkristalline Material lösbar ist, wobei die Verfestigung des Präkursors durch Abkühlung erfolgt; oder
  (b) der Präkursor eine Lösung eines thermoplastischen Harzes in einem Lösungsmittel ist und die Verfestigung durch Entfernung des Lösungsmittel erfolgt; oder
  (c) der Präkursor wenigstens ein polymerisierbares Monomer, Dimer, Oligomer oder Prepolymer enthält und die Verfestigung durch Polymerisation erfolgt;
- und die Verfestigungsrate so gesteuert ist, daß Mikrotröpfchen mit einer Abmessung von 0,2 - 10 µm erzeugt werden.

**16.** Verfahren nach Anspruch 15, in dem die Verfestigung durch Polymerisation des Präkursors bewirkt wird.

**17.** Verfahren nach Anspruch 15, in dem der Präkursor ein Lösungsmittel enthält und die Verfestigung durch Absonderung des Lösungsmittels erfolgt.

**18.** Verfahren nach Anspruch 15, in dem das flüssigkristalline Material in dem Präkursor bei einer erhöhten Temperatur gelöst wird und die Verfestigung durch eine Temperaturverringerung bewirkt wird.

**19.** Verfahren nach einem der Ansprüche 15 - 18, in dem die Abmessung der Mikrotröpfchen durch Beendigung der Phasentrennung gesteuert wird, wenn die Mikrotröpfchen auf einen ausgewählten Durchmesser

angewachsen sind.

**20.** Verfahren nach einem der Ansprüche 14 - 19, in dem das phasengetrennte Material erwärmt wird, um das flüssigkristalline Material in dem Harzmaterial wieder aufzulösen, und danach gekühlt wird, um die Phasentrennung des flüssigkristallinen Materials auszulösen.

**21.** Verfahren nach einem der Ansprüche 14 - 20, in dem das phasengetrennte Material zum Schmelzen des Harz-Stoffes erwärmt wird, die flüssigkristallinen Direktoren orientiert werden und der Stoff anschließend gekühlt wird.

**22.** Verfahren nach einem der Ansprüche 14 - 21, in dem das Harz in der Anwesenheit eines elektrischen oder magnetischen Feldes verfestigt wird, das ausreichend ist, eine nennenswerte Ausrichtung der flüssigkristallinen Direktoren zu bewirken.

**23.** Verfahren nach einem der Ansprüche 14 - 21, in dem eine mechanische Beanspruchung auf das phasengetrennte Material angewandt wird, um die flüssigkristallinen Direktoren zu orientieren.

**24.** Licht-modulierende Vorrichtung mit einem Licht-modulierenden Material nach einem der Ansprüche 1 - 13 und Mitteln zur Erzeugung eines elektrischen oder magnetischen Feldes durch das Material, um die Orientierung der flüssigkristallinen Direktoren und den Betrag des durch das Material übertragenen Lichtes zu ändern.

**25.** Licht-modulierende Vorrichtung nach Anspruch 24, in der die Mittel zur Erzeugung eines elektrischen Feldes durch das Material Elektroden an gegenüberliegenden Oberflächen des Materials enthalten.

**26.** Licht-modulierende Vorrichtung nach Anspruch 25 und abhängig von Anspruch 11, in der die flüssigkristallinen Direktoren normal im allgemeinen parallel zu den gegenüberliegenden Oberflächen liegen und im allgemeinen senkrecht zu den Oberflächen in der Anwesenheit des Feldes ausrichtbar sind.

**27.** Licht-modulierende Vorrichtung nach einem der Ansprüche 24 - 26, in der der Harz-Stoff einen Brechungsindex aufweist, der nahe genug an dem normalen Brechungsindex der flüssigkristallinen Phase für die Vorrichtung liegt, um wenigstens 90 % des senkrecht einfallenden Lichtes zu übertragen, wenn das elektrische oder magnetische Feld durch das Material erzeugt wird.

**28.** Licht-modulierende Vorrichtung nach einem der Ansprüche 24 - 26, in dem der Harz-Stoff einen Brechungsindex aufweist, der ausreichend unterschiedlich ist von dem normalen Brechungsindex der flüssigkristallinen Phase für die Vorrichtung, um eine maximale Durchlässigkeit für Licht, das bei einem Winkel von weniger als 90° auf die Materialoberfläche einfällt, zu bewirken, wenn das elektrische oder magnetische Feld durch das Material erzeugt wird.

**29.** Licht-modulierende Vorrichtung, enthaltend ein lichtmodulierendes Material nach einem der Ansprüche 1 - 13 sowie Mittel zum thermischen Behandeln des Materials zur Erzeugung einer Temperaturänderung in dem Material, derart, daß einfallendes Licht selektiv über das Material übertragen oder entsprechend der Temperatur des flüssigkristallinen Materials gestreut werden kann.

**30.** Vorrichtung nach Anspruch 29, in der die Temperaturänderung ausreichend ist, die flüssigkristalline Phase in eine isotrope Phase zu überführen.

**31.** Vorrichtung nach einem der Ansprüche 24 - 30, in der das Licht-modulierende Material mechanisch so beansprucht wird, daß es eine erhöhte Schaltrate und erhöhten Kontrast zwischen einem klaren Zustand und einem streuenden Zustand bewirkt.

**Patentansprüche für folgende Vertragsstaaten : AT, BE, IT, LU, NL**

**1.** Licht-modulierendes Material, enthaltend Mikrotröpfchen eines flüssigkristallinen Materials in einem Stoff aus festem, lichtdurchlässigem Harz, **dadurch gekennzeichnet**, daß
- das flüssigkristalline Material eine nematische oder smektische flüssigkristalline Phase hat;
- das feste Harz einen einen Stoff bildenden Präkursor aufweist, in dem das flüssigkristalline Material löslich ist, um eine homogene Lösung zu bilden, wobei eine Verfestigung des Präkursors bewirkt, daß die Mikrotröpfchen sich selbstablaufend aus der homogenen Lösung bilden;

- der Präkursor durch Aushärtung verfestigt wird;
- und der normale optische Brechungsindex der flüssigkristallinen Phase oder der optische Brechungsindex der isotropen Phase des flüssigkristallinen Materials im wesentlichen an den Brechungsindex des festen Harz-Stoffes angepaßt ist.

**2.** Licht-modulierendes Material, enthaltend Mikrotröpfchen eines flüssigkristallinen Materials in einem Stoff aus festem, lichtdurchlässigen Harz, **dadurch gekennzeichnet,** daß
- das flüssigkristalline Material eine nematische oder smektische flüssigkristalline Phase hat;
- das feste Harz einen einen Stoff bildenden Präkursor aufweist, in dem das flüssigkristalline Material lösbar ist, um eine homogene Lösung zu bilden, wobei eine Verfestigung des Präkursors bewirkt, daß die Mikrotröpfchen sich selbstablaufend aus der homogenen Lösung bilden; und entweder
  (a) das Harz thermoplastisch und geschmolzen ist, um den Präkursor zu bilden, in dem das flüssigkritalline Material lösbar ist, und die Verfestigung des Präkursors durch Abkühlen erfolgt; oder
  (b) der Präkursor eine Lösung eines thermoplastischen Harzes in einem Lösungsmittel ist und die Verfestigung durch Entfernung des Lösungsmittels erfolgt; oder
  (c) der Präkursor wenigstens ein polymerisierbares Monomer, Dimer, Oligomer oder Prepolymer enthält und die Verfestigung durch Polymerisation erfolgt;
- und die Verfestigungsrate so gesteuert ist, daß Mikrotröpfchen mit einer Größe von 0,2 - 10 μm bereitgestellt werden.

**3.** Licht-modulierendes Material nach Anspruch 1 oder 2, in dem die flüssigkristalline Phase eine positive dielektrische Anisotropie bewirkt.

**4.** Licht-modulierendes Material nach Anspruch 3, in dem das flüssigkristalline Material ein Cyanobiphenyl ist.

**5.** Licht-modulierendes Material nach einem der vorangehenden Ansprüche, in dem das Harz ein hitzehärtbarer Plast ist.

**6.** Licht-modulierendes Material nach einem der Ansprüche 1 - 3, in dem das Harz ein thermoplastisches Harz ist.

**7.** Licht-modulierendes Material nach Anspruch 6, in dem die flüssigkristalline Phase mit einem Betrag von wenigstens 50 Gewichtsprozenten des Materials anwesend ist.

**8.** Licht-modulierendes Material nach Anspruch 7, in dem das mathematische Produkt aus dem spezifischen Widerstand und der Dielektrizitätskonstante des Materials wenigstens einige Sekunden beträgt, wodurch das Material für eine Zeit, in der es sich zwischen zwei Elektroden befindet, eine Ladung beibehält.

**9.** Licht-modulierendes Material nach einem der Ansprüche 1 - 4, in dem das Harz ein Polyurethan-Harz, ein Polykarbonat-Harz, ein Polyvinylbutyral-Harz, ein Polyvinylmethylketon-Harz, ein Polyvinylformyl-Harz oder ein Polymer ist, das wenigstens eine Gattung der folgenden Einheiten enthält: Schwächer ($C_{1-8}$) alkyl substituierter Alcrylsäureester eines schwächeren ($C_{1-8}$) Alkanols, ein substituiertes Styren, ein isoprenes Methylbuten, ein Butadien, Isobutylen oder eines Vinylester aus einer schwächeren ($C_{1-4}$) Alkansäure.

**10.** Licht-modulierendes Material nach einem der vorangehenden Ansprüche, in dem das flüssigkristalline Material eine Übergangstemperatur von der flüssigkristallinen Phase zu der isotropen Phase oberhalb der Schmelztemperatur der Harzphase hat.

**11.** Licht-modulierendes Material nach einem der vorangehenden Ansprüche, in dem die Abmessung der flüssigkristallinen Mikrotröpfchen zwischen 0,2 bis 1,5 μm beträgt.

**12.** Licht-modulierendes Material nach einem der vorangehenden Ansprüche, in dem die flüssigkristallinen Direktoren durch Verfestigung des Stoffes in der Anwesenheit eines elektrischen oder magnetischen Feldes, das eine Ausrichtung bewirkt, in einer Richtung ausgerichtet werden, wobei das Material auf ein elektrisches oder magnetisches Feld anspricht, das eine Änderung einer derartigen Ausrichtung der flüssigkristallinen Direktoren bewirkt.

**13.** Licht-modulierendes Material nach einem der Ansprüche 1 - 11, in dem die flüssigkristallinen Direktoren normal zufallsausgerichtet orientiert sind, so daß das einfallende Licht gestreut wird, und unter der Anwesenheit eines elektrischen oder magnetischen Feldes derart ausrichtbar sind, daß wenigstens eine Komponente des einfallenden Lichtes durch das Material übertragen wird.

**14.** Verfahren zum Herstellen eines Licht-modulierenden Materials, in dem ein ausgewähltes, flüssigkristallines Material mit einem Präkursor gemischt wird, der in der Lage ist, sich auf ein ausgewähltes, festes, lichtdurchlässiges Harz zu verfestigen, und der Präkursor veranlaßt wird, sich zu verfestigen, um so das modulierende Material als Mikrotröpfchen eines flüssigkristallinen, in einem Stoff des festen Harzes durchsetzten Materials zu bilden, **dadurch gekennzeichnet**, daß

- das ausgewählte, flüssigkristalline Material eine nematische oder smektische flüssigkristalline Phase hat;
- das ausgewählte Harz einen Brechungsindex aufweist, der im wesentlichen gleich ist dem normalen Brechungsindex der flüssigkristallinen Phase oder dem Brechungsindex der isotropen Phase des flüssigkristallinen Materials; und
- das ausgewählte, flüssigkristalline Material lösbar ist in und gelöst ist in dem Präkursor, um eine homogene Lösung zu bilden, jedoch selbstablaufend ausgelöst wird, sich einer Phasentrennung zu unterziehen, um Mikrotröpfchen als Ergebnis der Verfestigung des Präkursors zu dem Stoff zu bilden, wobei die Verfestigung durch Aushärtung bewirkt wird.

**15.** Verfahren zum Herstellen eines Licht-modulierenden Materials durch Mischung eines ausgewählten flüssigkristallinen Materials mit einem Präkursor, der geeignet ist, sich mit einem ausgewählten, festen, lichtdurchlässigen Harz zu verfestigen, und daß der Präkursor veranlaßt wird, sich zu verfestigen, um auf diese Weise das modulierende Material als Mikrotröpfchen eines in einem Stoff des festen Harzes durchsetzten flüssigkristallinen Materials zu bilden, **dadurch gekennzeichnet**, daß

- das ausgewählte, flüssigkristalline Material eine nematische oder smektische flüssigkristalline Phase hat;
- das ausgewählte Harz einen Brechungsindex hat, der etwa gleich ist dem normalen Brechungsindex der flüssigkristallinen Phase oder dem Brechungsindex der isotropen Phase des flüssigkristallinen Materials; und
- das ausgewählte, flüssigkristalline Material lösbar ist in und gelöst ist in dem Präkursor, um eine homogene Lösung zu bilden, jedoch selbstablaufend ausgelöst wird, sich einer Phasentrennung zu unterziehen, um Mikrotröpfchen als ein Ergebnis einer Verfestigung des Präkursors zu dem Stoff zu bilden, und worin entweder
  (a) das Harz thermoplastisch ist und geschmolzen wird, um den Präkursor zu erzeugen, in dem das flüssigkristalline Material lösbar ist, wobei die Verfestigung des Präkursors durch Abkühlung erfolgt; oder
  (b) der Präkursor eine Lösung eines thermoplastischen Harzes in einem Lösungsmittel ist und die Verfestigung durch Entfernung des Lösungsmittel erfolgt; oder
  (c) der Präkursor wenigstens ein polymerisierbares Monomer, Dimer, Oligomer oder Prepolymer enthält und die Verfestigung durch Polymerisation erfolgt;
- und die Verfestigungsrate so gesteuert ist, daß Mikrotröpfchen mit einer Abmessung von 0,2 - 10 $\mu$m erzeugt werden.

**16.** Verfahren nach Anspruch 15, in dem die Verfestigung durch Polymerisation des Präkursors bewirkt wird.

**17.** Verfahren nach Anspruch 15, in dem der Präkursor ein Lösungsmittel enthält und die Verfestigung durch Absonderung des Lösungsmittels erfolgt.

**18.** Verfahren nach Anspruch 15, in dem das flüssigkristalline Material in dem Präkursor bei einer erhöhten Temperatur gelöst wird und die Verfestigung durch eine Temperaturverringerung bewirkt wird.

**19.** Verfahren nach einem der Ansprüche 15 - 18, in dem die Abmessung der Mikrotröpfchen durch Beendigung der Phasentrennung gesteuert wird, wenn die Mikrotröpfchen auf einen ausgewählten Durchmesser angewachsen sind.

**20.** Verfahren nach einem der Ansprüche 14 - 19, in dem das phasengetrennte Material erwärmt wird, um das flüssigkristalline Material in dem Harzmaterial wieder aufzulösen, und danach gekühlt wird, um die Phasentrennung des flüssigkristallinen Materials auszulösen.

21. Verfahren nach einem der Ansprüche 14 - 20, in dem das phasengetrennte Material zum Schmelzen des Harz-Stoffes erwärmt wird, die flüssigkristallinen Direktoren orientiert werden und der Stoff anschließend gekühlt wird.

22. Verfahren nach einem der Ansprüche 14 - 21, in dem das Harz in der Anwesenheit eines elektrischen oder magnetischen Feldes verfestigt wird, das ausreichend ist, eine nennenswerte Ausrichtung der flüssigkristallinen Direktoren zu bewirken.

23. Verfahren nach einem der Ansprüche 14 - 21, in dem eine mechanische Beanspruchung auf das phasengetrennte Material angewandt wird, um die flüssigkristallinen Direktoren zu orientieren.

24. Licht-modulierende Vorrichtung mit einem Licht-modulierenden Material nach einem der Ansprüche 1 - 13 und Mitteln zur Erzeugung eines elektrischen oder magnetischen Feldes durch das Material, um die Orientierung der flüssigkristallinen Direktoren und den Betrag des durch das Material übertragenen Lichtes zu ändern.

25. Licht-modulierende Vorrichtung nach Anspruch 24, in der die Mittel zur Erzeugung eines elektrischen Feldes durch das Material Elektroden an gegenüberliegenden Oberflächen des Materials enthalten.

26. Licht-modulierende Vorrichtung nach Anspruch 25 und abhängig von Anspruch 11, in der die flüssigkristallinen Direktoren normal im allgemeinen parallel zu den gegenüberliegenden Oberflächen liegen und im allgemeinen senkrecht zu den Oberflächen in der Anwesenheit des Feldes ausrichtbar sind.

27. Licht-modulierende Vorrichtung nach einem der Ansprüche 24 - 26, in der der Harz-Stoff einen Brechungsindex aufweist, der nahe genug an dem normalen Brechungsindex der flüssigkristallinen Phase für die Vorrichtung liegt, um wenigstens 90 % des senkrecht einfallenden Lichtes zu übertragen, wenn das elektrische oder magnetische Feld durch das Material erzeugt wird.

28. Licht-modulierende Vorrichtung nach einem der Ansprüche 24 - 26, in dem der Harz-Stoff einen Brechungsindex aufweist, der ausreichend unterschiedlich ist von dem normalen Brechungsindex der flüssigkristallinen Phase für die Vorrichtung, um eine maximale Durchlässigkeit für Licht, das bei einem Winkel von weniger als 90° auf die Materialoberfläche einfällt, zu bewirken, wenn das elektrische oder magnetische Feld durch das Material erzeugt wird.

29. Licht-modulierende Vorrichtung, enthaltend ein lichtmodulierendes Material nach einem der Ansprüche 1 - 13 sowie Mittel zum thermischen Behandeln des Materials zur Erzeugung einer Temperaturänderung in dem Material, derart, daß einfallendes Licht selektiv über das Material übertragen oder entsprechend der Temperatur des flüssigkristallinen Materials gestreut werden kann.

30. Vorrichtung nach Anspruch 29, in der die Temperaturänderung ausreichend ist, die flüssigkristalline Phase in eine isotrope Phase zu überführen.

31. Vorrichtung nach einem der Ansprüche 24 - 30, in der das Licht-modulierende Material mechanisch so beansprucht wird, daß es eine erhöhte Schaltrate und erhöhten Kontrast zwischen einem klaren Zustand und einem streuenden Zustand bewirkt.

## Revendications

### Revendications pour les Etats contractants suivants : CH, DE, FR, GB, SE

1. Matériau de modulation de lumière, comprenant des microgouttes de matière cristalline liquide dans une matrice d'une résine solide transmettant la lumière, caractérisé en ce que:
   - ladite matière cristalline liquide possède une phase en cristal liquide smectique ou nématique;
   - ladite résine solide possède un précurseur formant matrice dans lequel ladite matière cristalline liquide est soluble pour former une solution homogène, la solidification dudit précurseur induisant la formation spontanée desdites microgouttes à partir de ladite solution homogène;
   - la solidification dudit précurseur se fait par durcissement; et
   - l'indice optique ordinaire de réfraction de ladite phase en cristal liquide, ou l'indice optique de réfraction de la phase isotrope de ladite matière cristalline liquide, coïncide sensiblement avec l'indice de réfraction de la matrice de résine solide, et dans lequel ladite résine est autre qu'une matière de résine époxy durcissable.

2. Matériau de modulation de lumière, comprenant des microgouttes de matière cristalline liquide dans une matrice d'une résine solide transmettant la lumière, caractérisé en ce que:
   - ladite matière cristalline liquide possède une phase en cristal liquide smectique ou nématique;
   - ladite résine solide possède un précurseur formant matrice dans lequel ladite matière cristalline liquide est soluble pour former une solution homogène, la solidification dudit précurseur induisant la formation spontanée desdites microgouttes à partir de ladite solution homogène; et dans laquelle soit

   (a) ladite résine est thermoplastique, et est fondue pour fournir ledit précurseur dans lequel la matière cristalline liquide est soluble, la solidification dudit précurseur se faisant par refroidissement; soit
   (b) ledit précurseur est une solution d'une résine thermoplastique dans un solvant, et ladite solidification se fait par élimination du solvant; soit
   (c) ledit précurseur comprend au moins un monomère, un dimère, un oligomère ou un prépolymère polymérisable, et la solidification se fait par polymérisation;

   et la vitesse de solidification est maîtrisée pour fournir des microgouttes d'une taille de 0,2 à 10 $\mu$m.

3. Matériau de modulation de lumière selon la revendication 1 ou 2, dans lequel la phase en cristal liquide présente une anisotropie diélectrique positive.

4. Matériau de modulation de lumière selon la revendication 3, dans lequel la matière cristalline liquide est un cyanobiphényle.

5. Matériau de modulation de lumière selon l'une quelconque des revendications précédentes, dans lequel la résine est une résine thermodurcissable.

6. Matériau de modulation de lumière selon l'une quelconque des revendications 1 à 3, dans lequel la résine est une résine thermoplastique.

7. Matériau de modulation de lumière selon la revendication 6, dans lequel la phase en cristal liquide est présente à raison d'au moins 50 pourcent en poids du matériau.

8. Matériau de modulation de lumière selon la revendication 7, dans lequel le produit mathématique de la résistivité et de la permittivité du matériau est égal à au moins quelques secondes, le matériau conservant ainsi une charge pendant un moment une fois placé entre deux électrodes.

9. Matériau de modulation de lumière selon l'une quelconque des revendications 1 à 4, dans lequel la résine est une résine polyuréthanne, une résine polycarbonate, une résine polyvinylbutyral, une résine polyvinylméthylcétone, une résine polyvinylformyle ou un polymère contenant au moins une sorte des motifs suivants: ester d'acide acrylique substitué par un groupe alkyle inférieur (en $C_1$ à $C_8$) et d'un alcanol inférieur (en $C_1$ à $C_8$), un styrène substitué, l'isoprène, le méthylbutène, le budadiène, l'isobutylène ou un ester vinylique d'acide alcanoïque inférieur (en $C_1$ à $C_4$ ).

10. Matériau de modulation de lumière selon l'une quelconque des revendications précédentes, dans lequel la matière cristalline liquide possède une température de transition de phase cristal liquide en phase isotrope au-dessus de la température de ramollissement de la phase de résine.

11. Matériau de modulation de lumière selon l'une quelconque des revendications précédentes, dans lequel la taille des microgouttes de cristaux liquides est comprise entre 0,2 et 1,5 $\mu$m.

12. Matériau de modulation de lumière selon l'une quelconque des revendications précédentes, dans lequel les axes directeurs du cristal liquide sont généralement alignés dans une direction par solidification de la matrice en présence d'un champ magnétique ou électrique efficace pour provoquer un tel alignement, le matériau étant sensible à un champ magnétique ou électrique efficace pour changer un tel alignement des axes directeurs du cristal liquide.

13. Matériau de modulation de lumière selon l'une quelconque des revendications 1 à 11, dans lequel les axes directeurs du cristal liquide sont normalement orientés de façon aléatoire de sorte que la lumière incidente

sera diffusée, et sont alignables en présence d'un champ magnétique ou électrique de sorte qu'au moins une composante de la lumière incidente sera transmise à travers le matériau.

**14.** Procédé pour fabriquer un matériau de modulation de lumière, consistant à mélanger une matière cristalline liquide choisie avec un précurseur capable de se solidifier en une résine solide transmettant la lumière choisie, et à amener ledit précurseur à se solidifier de façon à former ledit matériau de modulation sous forme de microgouttes de matière cristalline liquide entremêlées dans une matrice de ladite résine solide, caractérisé en ce que:

- la matière cristalline liquide choisie possède une phase en cristal liquide smectique ou nématique;
- la résine choisie possède un indice de réfraction sensiblement égal à l'indice ordinaire de réfraction de la phase en cristal liquide ou à l'indice de réfraction de la phase isotrope de la matière cristalline liquide; et
- la matière cristalline liquide choisie est soluble dans, et est dissoute dans ledit précurseur pour former une solution homogène, mais est induite spontanément pour subir une séparation de phase en vue de former des microgouttes en résultat de la solidification dudit précurseur en ladite matrice, ladite solidification étant provoquée par durcissement; et dans lequel la résine est autre qu'une matière de résine époxy durcissable.

**15.** Procédé pour fabriquer un matériau de modulation de lumière, consistant à mélanger une matière cristalline liquide choisie avec un précurseur capable de se solidifier en une résine solide transmettant la lumière choisie, et à amener ledit précurseur à se solidifier de façon à former ledit matériau de modulation sous forme de microgouttes de matière cristalline liquide entremêlées dans une matrice de ladite résine solide, caractérisé en ce que:

- ladite matière cristalline liquide choisie possède une phase en cristal liquide smectique ou nématique;
- ladite résine choisie possède un indice de réfraction sensiblement égal à l'indice ordinaire de réfraction de la phase en cristal liquide, ou à l'indice de réfraction de la phase isotrope de la matière cristalline liquide, et
- la matière cristalline liquide choisie est soluble, et est dissoute dans ledit précurseur pour former une solution homogène, mais est induite spontanément pour subir la séparation de phase en vue de former des microgouttes en résultat de la solidification dudit précurseur à ladite matrice, et dans lequel soit

(a) ladite résine est thermoplastique et est fondue pour fournir ledit précurseur dans lequel la matière cristalline liquide est soluble, la solidification dudit précurseur se faisant par refroidissement; soit

(b) ledit précurseur est une solution d'une résine thermoplastique dans un solvant, et ladite solidification se fait par élimination du solvant; soit

(c) ledit précurseur comprend au moins un monomère, un dimère, un oligomère ou un prépolymère polymérisable, et la solidification se fait par polymérisation;

et la vitesse de solidification est maîtrisée pour fournir des microgouttes d'une taille de 0,2 à 10 $\mu$m.

**16.** Procédé selon la revendication 15, dans lequel ladite solidification est effectuée par polymérisation dudit précurseur.

**17.** Procédé selon la revendication 15, dans lequel ledit précurseur inclut un solvant et ladite solidification est effectuée par extraction dudit solvant.

**18.** Procédé selon la revendication 15, dans lequel la matière cristalline liquide est dissoute dans ledit précurseur à une température élevée, et ladite solidification est effectuée par abaissement de la température.

**19.** Procédé selon l'une quelconque des revendications 15 à 18, dans lequel la taille des microgouttes est maîtrisée par la fin de la séparation de phase quand les microgouttes ont crû à un diamètre choisi.

**20.** Procédé selon l'une quelconque des revendications 14 à 19, dans lequel la matière à phases séparées est chauffée pour redissoudre la matière cristalline liquide dans la matière de résine et ensuite refroidie pour induire une séparation de phase de ladite matière cristalline liquide.

**21.** Procédé selon l'une quelconque des revendications 14 à 20, dans lequel la matière à phases séparées est chauffée pour ramollir la matrice de résine, les axes directeurs du cristal liquide sont orientés et la matrice est ultérieurement refroidie.

**22.** Procédé selon l'une quelconque des revendications 14 à 21, dans lequel la résine est solidifiée en présence d'un champ magnétique ou électrique suffisant pour produire un alignement significatif des axes directeurs du cristal liquide.

**23.** Procédé selon l'une quelconque des revendications 14 à 21, dans lequel la tension est appliquée à la matière à phases séparées pour orienter les directeurs cristallins liquides.

**24.** Dispositif de modulation de lumière comprenant un matériau de modulation de lumière selon l'une quelconque des revendications 1 à 13 et moyen pour établir un champ magnétique ou électrique à travers le matériau pour changer l'orientation des axes directeurs du cristal liquide et modifier la quantité de lumière transmise par le matériau.

**25.** Dispositif de modulation de lumière selon la revendication 24, dans lequel le moyen pour établir un champ électrique à travers le matériau comprend des électrodes sur des surfaces opposées du matériau.

**26.** Dispositif de modulation de lumière selon la revendication 25 quand elle dépend de la revendication 11, dans lequel les axes directeurs du cristal liquide sont normalement en général parallèles auxdites surfaces opposées, et sont alignables en général perpendiculairement auxdites surfaces en présence dudit champ.

**27.** Dispositif de modulation de lumière selon l'une quelconque des revendications 24 à 26, dans lequel la matrice de résine possède un indice de réfraction assez proche de l'indice ordinaire de réfraction de la phase en cristal liquide pour que le dispositif transmette au moins 90% de la lumière en incidence normale quand ledit champ magnétique ou électrique est établi à travers le matériau.

**28.** Dispositif de modulation de lumière selon l'une quelconque des revendications 24 à 26, dans lequel la matrice de résine possède un indice de réfraction assez différent de l'indice ordinaire de réfraction de la phase en cristal liquide pour que le dispositif présente une transparence maximale à la lumière quand son angle d'incidence est inférieur à 90° par rapport à la surface du matériau quand ledit champ magnétique ou électrique est établi à travers le matériau.

**29.** Dispositif de modulation de la lumière comprenant un matériau de modulation de lumière selon l'une quelconque des revendications 1 à 13, et moyen pour attaquer thermiquement le matériau pour y établir un changement de température, de sorte que l'on peut sélectivement transmettre la lumière incidente à travers le matériau ou la diffuser selon la température de la matière cristalline liquide.

**30.** Dispositif selon la revendication 29, où le changement de température est suffisant pour convertir la phase de cristal liquide en phase isotrope.

**31.** Dispositif selon l'une quelconque des revendications 24 à 30, dans lequel le matériau de modulation de lumière est mécaniquement chargé de sorte qu'il présente une vitesse de commutation et un contraste améliorés entre un état transparent et un état diffusif.

**Revendications pour les Etats contractants suivants : AT, BE, IT, LU, NL**

**1.** Matériau de modulation de lumière, comprenant des microgouttes de matière cristalline liquide dans une matrice d'une résine solide transmettant la lumière, caractérisé en ce que:
- ladite matière cristalline liquide possède une phase en cristal liquide smectique ou nématique;
- ladite résine solide possède un précurseur formant matrice dans lequel ladite matière cristalline liquide est soluble pour former une solution homogène, la solidification dudit précurseur induisant la formation spontanée desdites microgouttes à partir de ladite solution homogène;
- la solidification dudit précurseur se fait par durcissement; et
- l'indice optique ordinaire de réfraction de ladite phase en cristal liquide, ou l'indice optique de réfraction de la phase isotrope de ladite matière cristalline liquide, coïncide sensiblement avec l'indice de réfraction de la matrice de résine solide.

**2.** Matériau de modulation de lumière, comprenant des microgouttes de matière cristalline liquide dans une matrice d'une résine solide transmettant la lumière, caractérisé en ce que:
- ladite matière cristalline liquide possède une phase en cristal liquide smectique ou nématique;
- ladite résine solide possède un précurseur formant matrice dans lequel ladite matière cristalline liquide est soluble pour former une solution homogène, la solidification dudit précurseur induisant la formation spontanée desdites microgouttes à partir de ladite solution homogène; et dans laquelle soit

(a) ladite résine est thermoplastique et est fondue pour fournir ledit précurseur dans lequel la matière cristalline liquide est soluble, la solidification dudit précurseur se faisant par refroidissement; soit

(b) ledit précurseur est une solution d'une résine thermoplastique dans un solvant, et ladite solidification se fait par élimination du solvant; soit

(c) ledit précurseur comprend au moins un monomère, un dimère, un oligomère ou un prépolymère polymérisable, et la solidification se fait par polymérisation;

et la vitesse de solidification est maîtrisée pour fournir des microgouttes d'une taille de 0,2 à 10 µm.

3. Matériau de modulation de lumière selon la revendication 1 ou 2, dans lequel la phase en cristal liquide présente une anisotropie diélectrique positive.

4. Matériau de modulation de lumière selon la revendication 3, dans lequel la matière cristalline liquide est un cyanobiphényle.

5. Matériau de modulation de lumière selon l'une quelconque des revendications précédentes, dans lequel la résine est une résine thermodurcissable.

6. Matériau de modulation de lumière selon l'une quelconque des revendications 1 à 3, dans lequel la résine est une résine thermoplastique.

7. Matériau de modulation de lumière selon la revendication 6, dans lequel la phase en cristal liquide est présente à raison d'au moins 50 pourcent en poids du matériau.

8. Matériau de modulation de lumière selon la revendication 7, dans lequel le produit mathématique de la résistivité et de la permittivité du matériau est égal à au moins quelques secondes, le matériau conservant ainsi une charge pendant un moment une fois placé entre deux électrodes.

9. Matériau de modulation de lumière selon l'une quelconque des revendications 1 à 4, dans lequel la résine est une résine polyuréthanne, une résine polycarbonate, une résine polyvinylbutyral, une résine polyvinylméthylcétone, une résine polyvinylformyle ou un polymère contenant au moins une sorte des motifs suivants: ester d'acide acrylique substitué par un groupe alkyle inférieur (en $C_1$ à $C_8$) et d'un alcanol inférieur (en $C_1$à $C_8$ ), un styrène substitué, l'isoprène, le méthylbutène, le budadiène, l'isobutylène ou un ester vinylique d'acide alcanoïque inférieur (en $C_1$ à $C_4$).

10. Matériau de modulation de lumière selon l'une quelconque des revendications précédentes, dans lequel la matière cristalline liquide possède une température de transition de phase en cristal liquide en phase isotrope au-dessus de la température de ramollissement de la phase de résine.

11. Matériau de modulation de lumière selon l'une quelconque des revendications précédentes, dans lequel la taille des microgouttes cristallines liquides est comprise entre 0,2 et 1,5 µm.

12. Matériau de modulation de lumière selon l'une quelconque des revendications précédentes, dans lequel les axes directeurs du cristal liquide sont généralement alignés dans une direction par solidification de la matrice en présence d'un champ magnétique ou électrique efficace pour provoquer un tel alignement, le matériau étant sensible à un champ magnétique ou électrique efficace pour modifier un tel alignement des axes directeurs du cristal liquide.

13. Matériau de modulation de lumière selon l'une quelconque des revendications 1 à 11, dans lequel les axes directeurs du cristal liquide sont normalement orientés de façon aléatoire de sorte que la lumière incidente sera diffusée, et sont alignables en présence d'un champ magnétique ou électrique de sorte qu'au moins une composante de la lumière incidente sera transmise à travers le matériau.

14. Procédé pour fabriquer un matériau de modulation de lumière, consistant à mélanger une matière cristalline liquide choisie avec un précurseur capable de se solidifier en une résine solide transmettant la lumière choisie, et à amener ledit précurseur à se solidifier de façon à former ledit matériau de modulation sous forme de microgouttes de matière cristalline liquide entremêlées dans une matrice de ladite résine solide, caractérisé en ce que:

- la matière cristalline liquide choisie possède une phase en cristal liquide smectique ou nématique;
- la résine choisie possède un indice de réfraction sensiblement égal à l'indice ordinaire de réfraction de la phase en cristal liquide, ou à l'indice de réfraction de la phase isotrope de la matière cristalline liquide, et
- la matière cristalline liquide choisie est soluble dans, et est dissoute dans ledit précurseur pour former une solution homogène, mais est induite spontanément pour subir une séparation de phase en vue de former des microgouttes en résultat de la solidification dudit précurseur en ladite matrice, ladite solidification étant entraînée par durcissement.

**15.** Procédé pour fabriquer un matériau de modulation de lumière consistant à mélanger une matière cristalline liquide choisie avec un précurseur capable de se solidifier en une résine solide transmettant la lumière choisie, et à amener ledit précurseur à se solidifier de façon à former ledit matériau de modulation sous forme de microgouttes de matière cristalline liquide entremêlées dans une matrice de ladite résine solide, caractérisé en ce que:

- la matière cristalline liquide choisie possède une phase en cristal liquide smectique ou nématique;
- la résine choisie possède un indice de réfraction sensiblement égal à l'indice ordinaire de réfraction de la phase en cristal liquide, ou à l'indice de réfraction de la phase isotrope de la matière cristalline liquide, et
- la matière cristalline liquide choisie est soluble, et est dissoute dans ledit précurseur pour former une solution homogène, mais est induite spontanément pour subir une séparation de phase en vue de former des microgouttes en résultat de la solidification dudit précurseur à ladite matrice, et dans lequel soit

(a) ladite résine est thermoplastique, et est fondue pour fournir ledit précurseur dans lequel la matière cristalline liquide est soluble, la solidification dudit précurseur se faisant par refroidissement; soit
(b) ledit précurseur est une solution d'une résine thermoplastique dans un solvant, et ladite solidification se fait par élimination du solvant; soit
(c) ledit précurseur comprend au moins un monomère, un dimère, un oligomère ou un prépolymère polymérisable, et la solidification se fait par polymérisation;

et la vitesse de solidification est maîtrisée pour fournir des microgouttes d'une taille de 0,2 à 10 $\mu$m.

**16.** Procédé selon la revendication 15, dans lequel ladite solidification est effectuée par polymérisation dudit précurseur.

**17.** Procédé selon la revendication 15, dans lequel ledit précurseur inclut un solvant et ladite solidification est effectuée par extraction dudit solvant.

**18.** Procédé selon la revendication 15, dans lequel la matière cristalline liquide est dissoute dans ledit précurseur à une température élevée, et ladite solidification est effectuée par abaissement de la température.

**19.** Procédé selon l'une quelconque des revendications 15 à 18, dans lequel la taille des microgouttes est maîtrisée par la fin de la séparation de phase quand les microgouttes ont cru à un diamètre choisi.

**20.** Procédé selon l'une quelconque des revendications 14 à 19, dans lequel la matière à phases séparées est chauffée pour redissoudre la matière cristalline liquide dans la matière de résine et ensuite refroidie pour induire une séparation de phase de ladite matière cristalline liquide.

**21.** Procédé selon l'une quelconque des revendications 14 à 20, dans lequel la matière à phases séparées est chauffée pour ramollir la matrice de résine, les axes directeurs du cristal liquide sont orientés, et la matrice est ultérieurement refroidie.

**22.** Procédé selon l'une quelconque des revendications 14 à 21, dans lequel la résine est solidifiée en présence d'un champ magnétique ou électrique suffisant pour produire un alignement significatif des axes directeurs du cristal liquide.

**23.** Procédé selon l'une quelconque des revendications 14 à 21, dans lequel une contrainte est appliquée à la matière à phases séparées pour orienter les axes directeurs cristal liquide.

**24.** Dispositif de modulation de lumière comprenant un matériau de modulation de lumière selon l'une quelconque des revendications 1 à 13 et moyen pour établir un champ magnétique ou électrique à travers le matériau pour changer l'orientation des axes directeurs du cristal liquides et modifier la quantité de lumière transmise par le matériau.

**25.** Dispositif de modulation de lumière selon la revendication 24, dans lequel le moyen pour établir un champ électrique à travers le matériau comprend des électrodes sur des surfaces opposées du matériau.

**26.** Dispositif de modulation de lumière selon la revendication 25 quand elle dépend de la revendication 11, dans lequel les axes directeurs du cristal liquide sont normalement en général parallèles auxdites surfaces opposées, et son alignables en général perpendiculairement auxdites surfaces en présence dudit champ.

**27.** Dispositif de modulation de lumière selon l'une quelconque des revendications 24 à 26, dans lequel la matrice de resine possède un indice de réfraction assez proche de l'indice ordinaire de réfraction de la phase en cristal liquide pour que le dispositif transmette au moins 90% de la lumière en incidence normale quand ledit champ magnétique ou électrique est établi à travers le matériau.

**28.** Dispositif de modulation de lumière selon l'une quelconque des revendications 24 à 26, dans lequel la matrice de résine possède un indice de réfraction assez différent de l'indice ordinaire de réfraction de la phase en cristal liquide pour que le dispositif présente une transparence maximale à la lumière quand son angle d'incidence est inférieur à 90° par rapport à la surface du matériau quand ledit champ magnétique ou électrique est établi à travers le matériau.

**29.** Dispositif de modulation de la lumière comprenant un matériau de modulation de lumière selon l'une quelconque des revendications 1 à 13, et moyen pour attaquer thermiquement le matériau pour y établir un changement de température, de sorte que l'on peut sélectivement transmettre la lumière incidente à travers le matériau ou la diffuser selon la température de la matière cristalline liquide.

**30.** Dispositif selon la revendication 29, où le changement de température est suffisant pour convertir la phase de cristal liquide en phase isotrope.

**31.** Dispositif selon l'une quelconque des revendications 24 à 30, dans lequel le matériau de modulation de lumière est mécaniquement chargé de sorte qu'il présente une vitesse de commutation et un contraste améliorés entre un état transparent et un état diffusif.

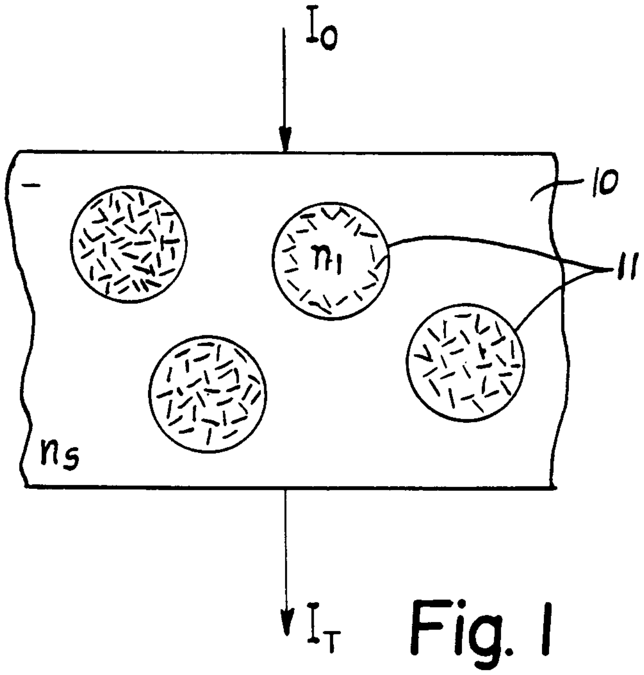


Fig. 1

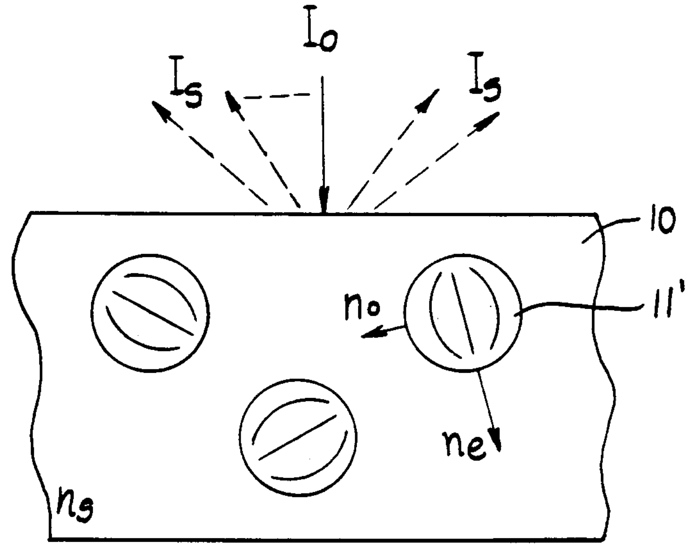


Fig. 2

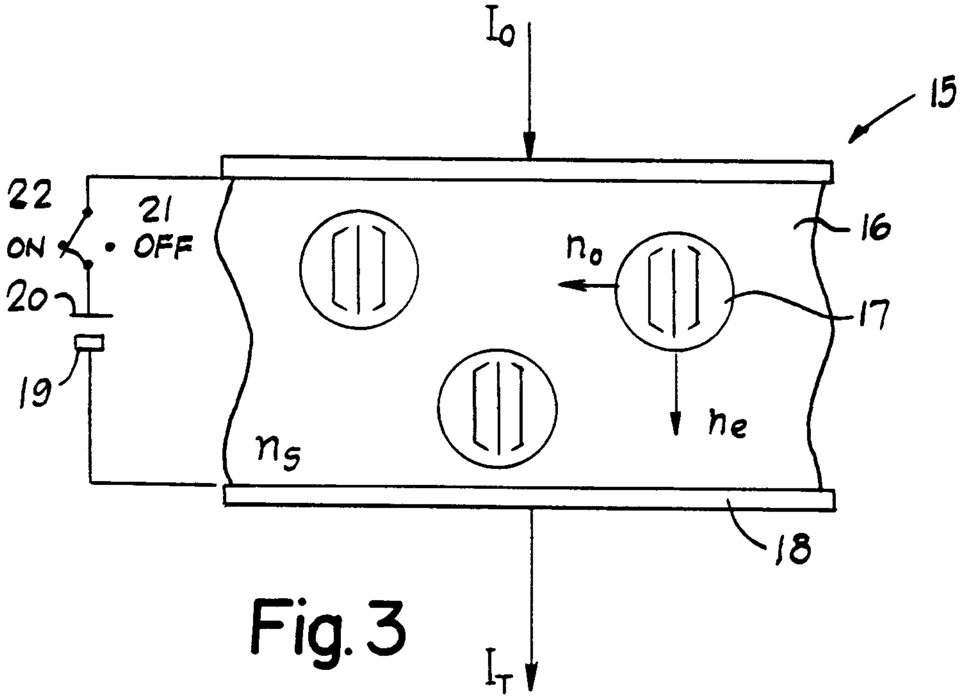
I0
15
22
21
ON
OFF
16
n0
17
20
19
ne
ns
18
IT

Fig. 3

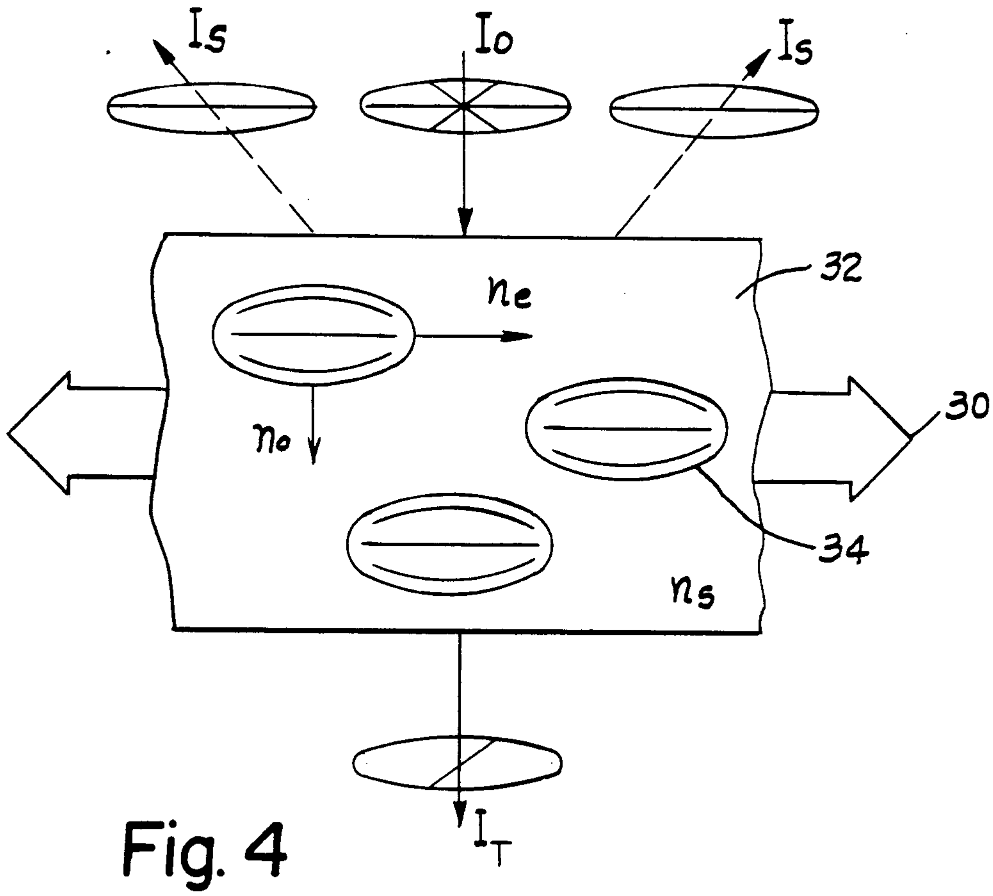
IS
I0
IS
32
ne
30
no
34
ns
IT

Fig. 4

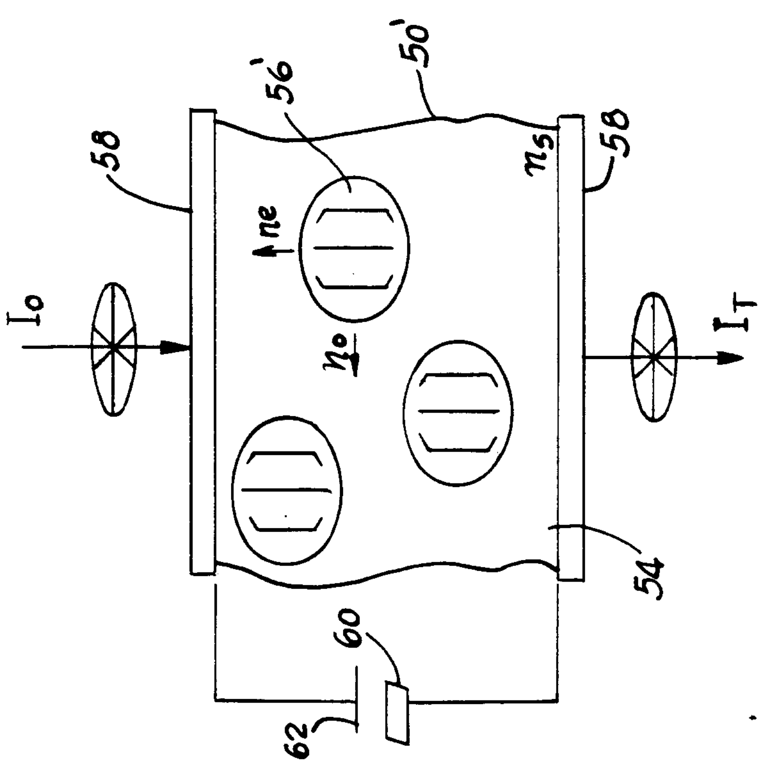


Fig. 5(b)

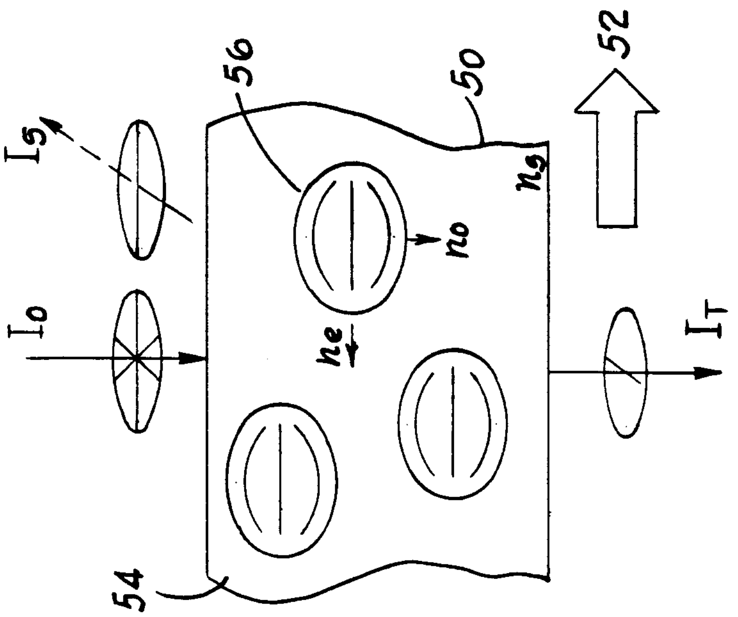


Fig. 5(a)

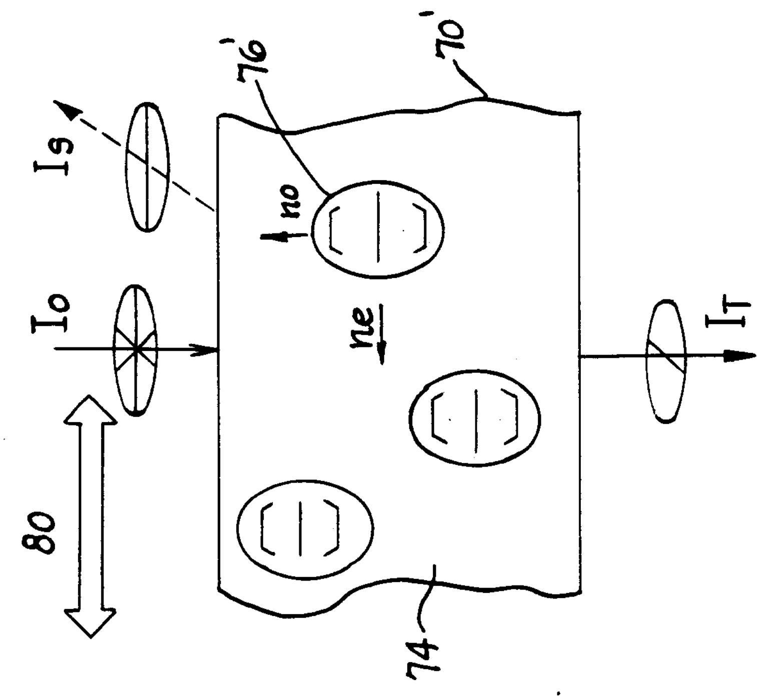


Fig. 6(b)

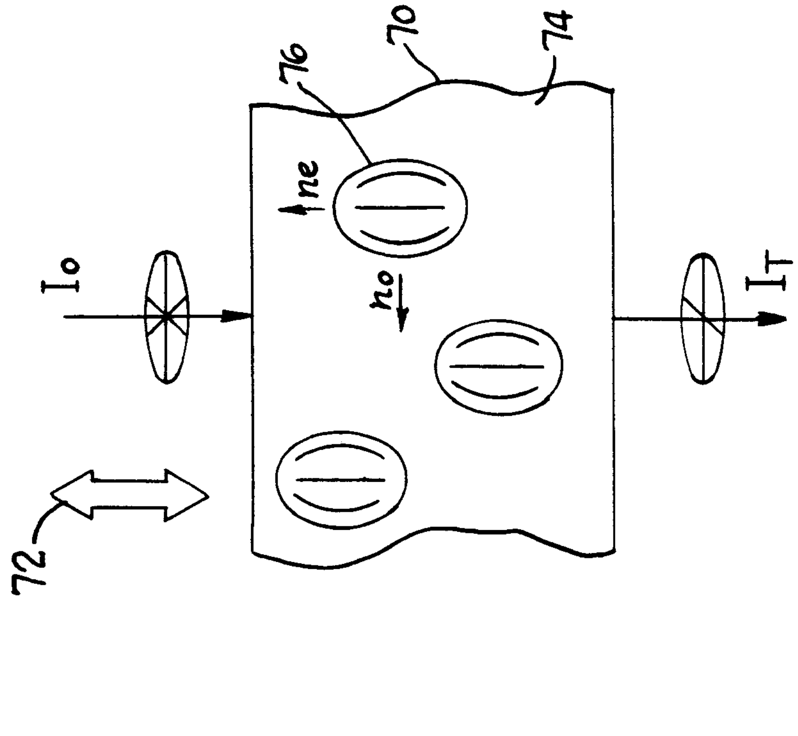


Fig. 6(a)

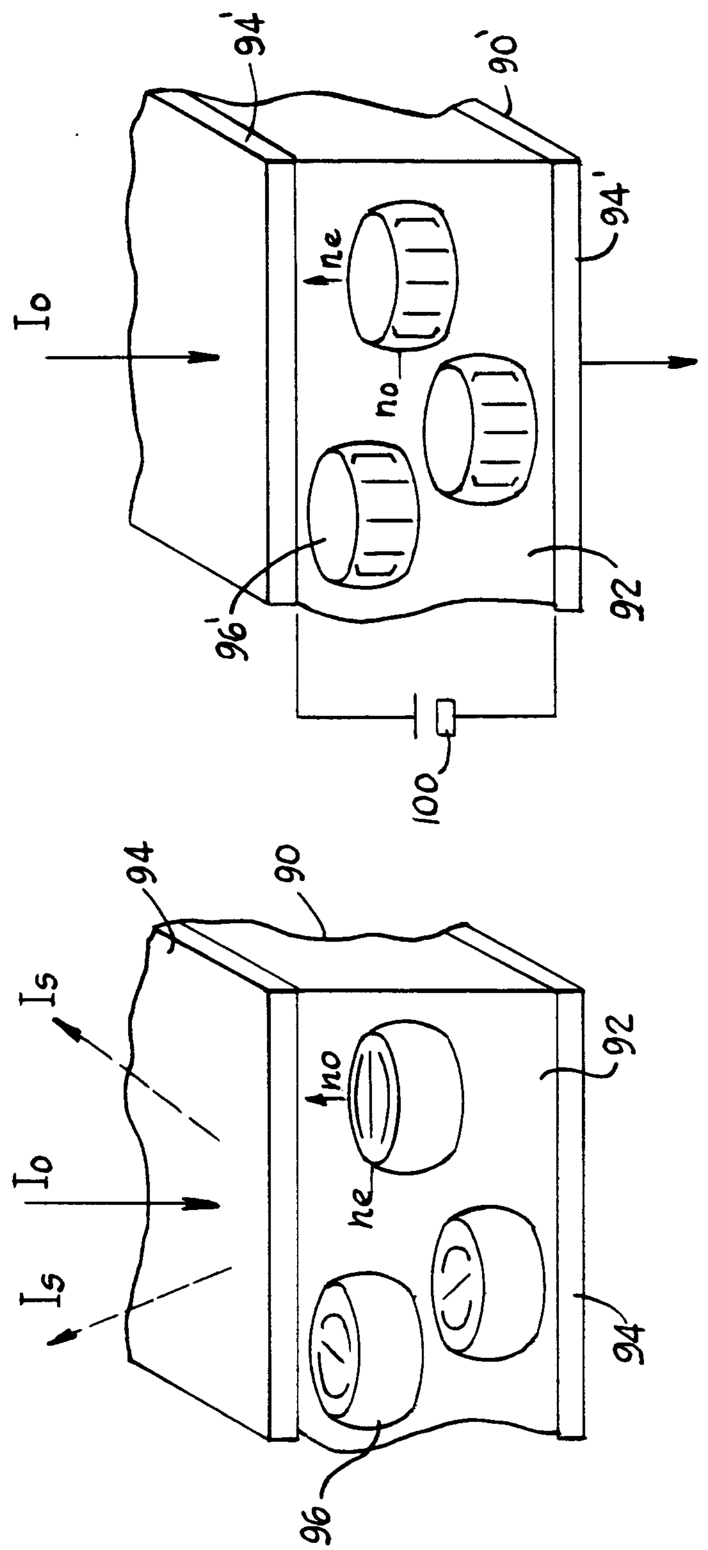


Fig. 7(a)

Fig. 7(b)

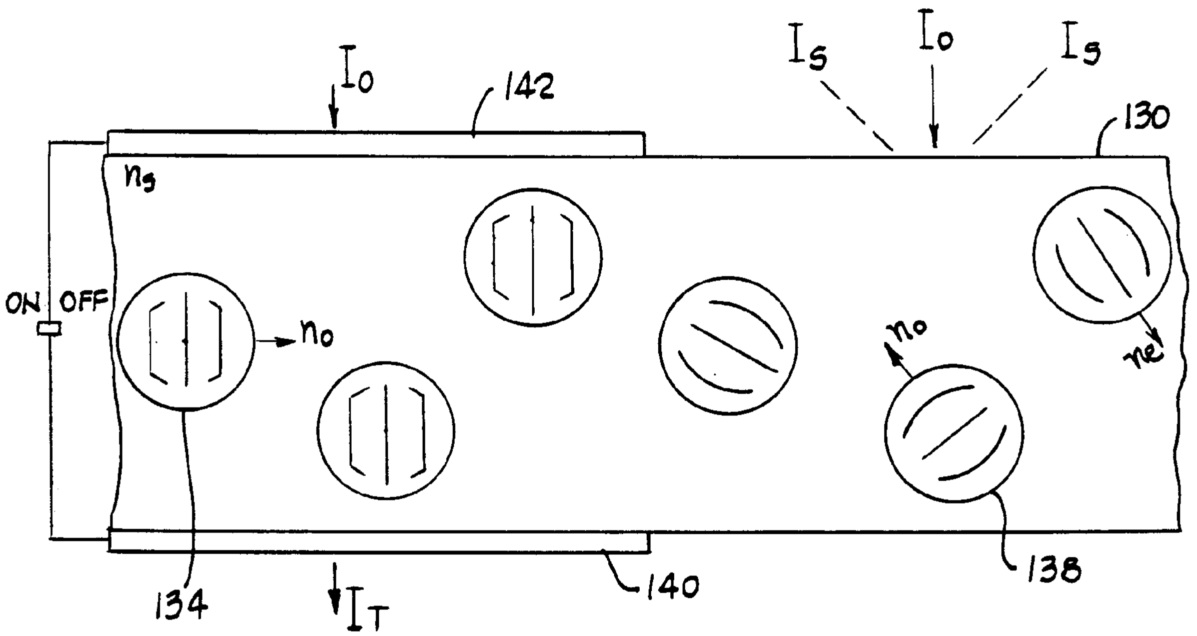

I0
142
Is
I0
Is
130
ns
ON
OFF
no
no
ne
138
134
IT
140


Fig.8

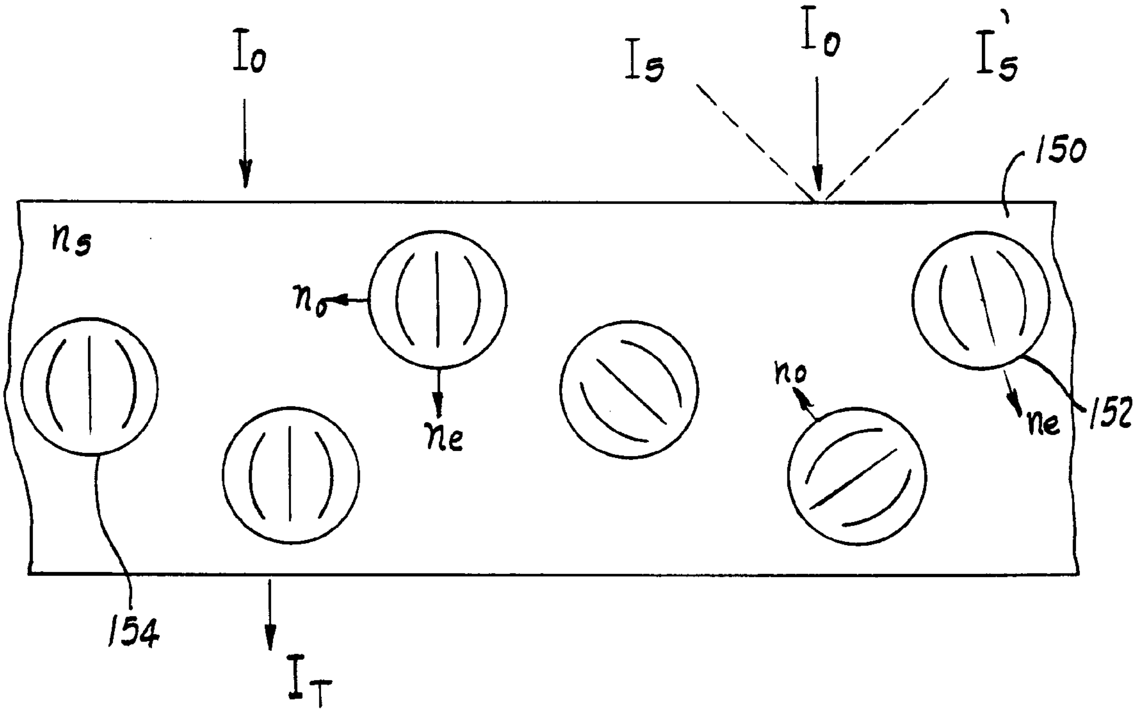

I0
Is
I0
I's
150
ns
no
ne
no
ne
152
154
IT


Fig.9

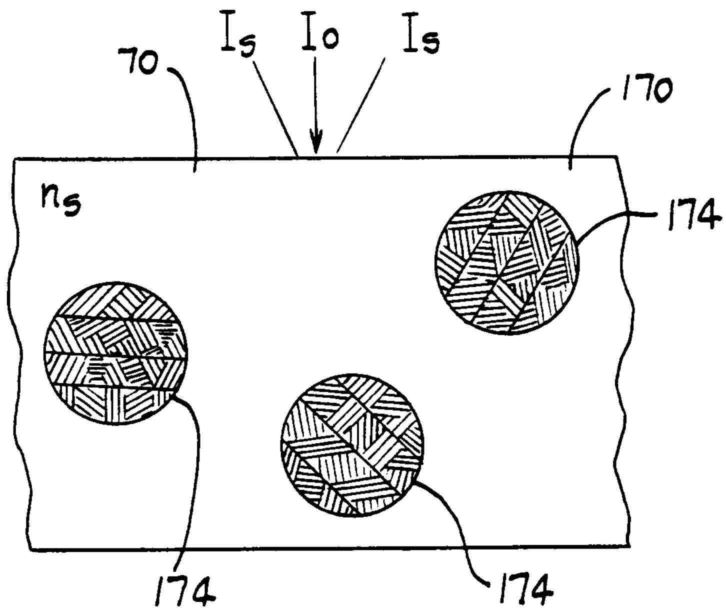
Is
Io
Is
70
170
ns
174
174
174
174

Fig. 10

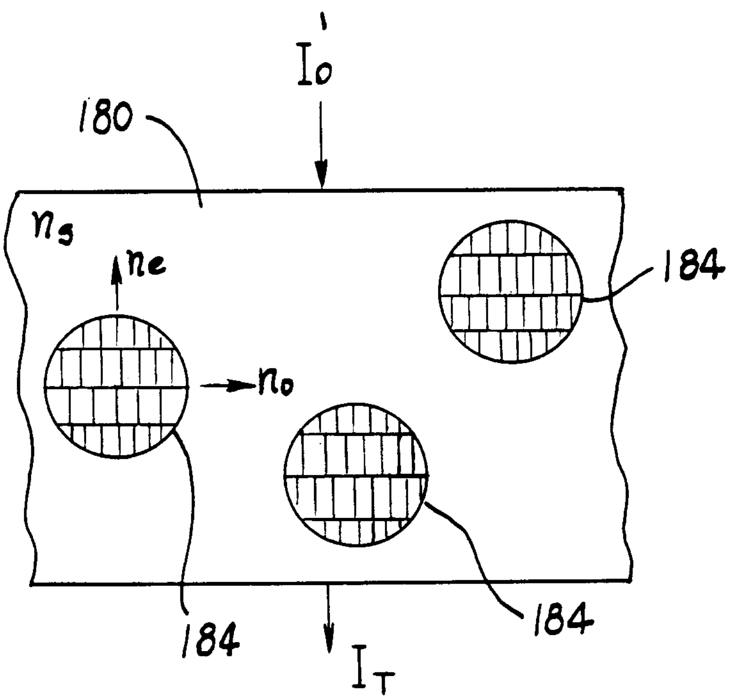
Io'
180
ns
ne
no
184
184
184
184
IT

Fig. 11

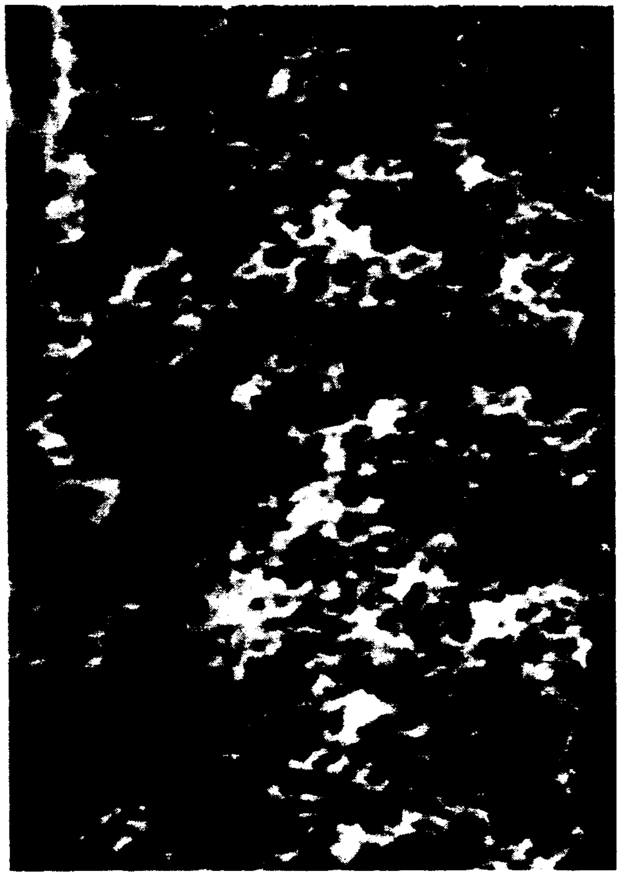

Fig. 12

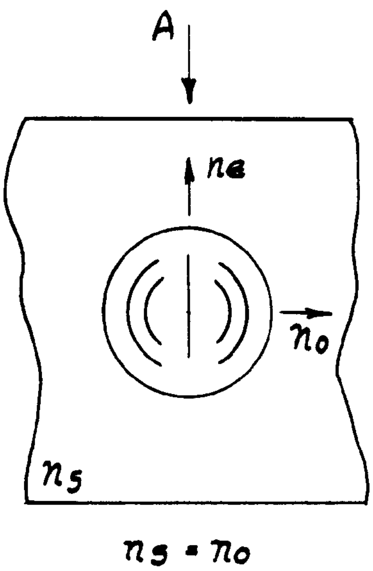


Fig. 13A

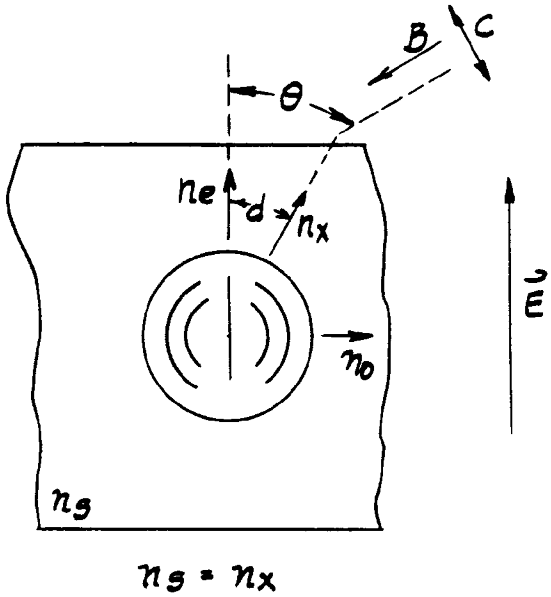


Fig. 13B

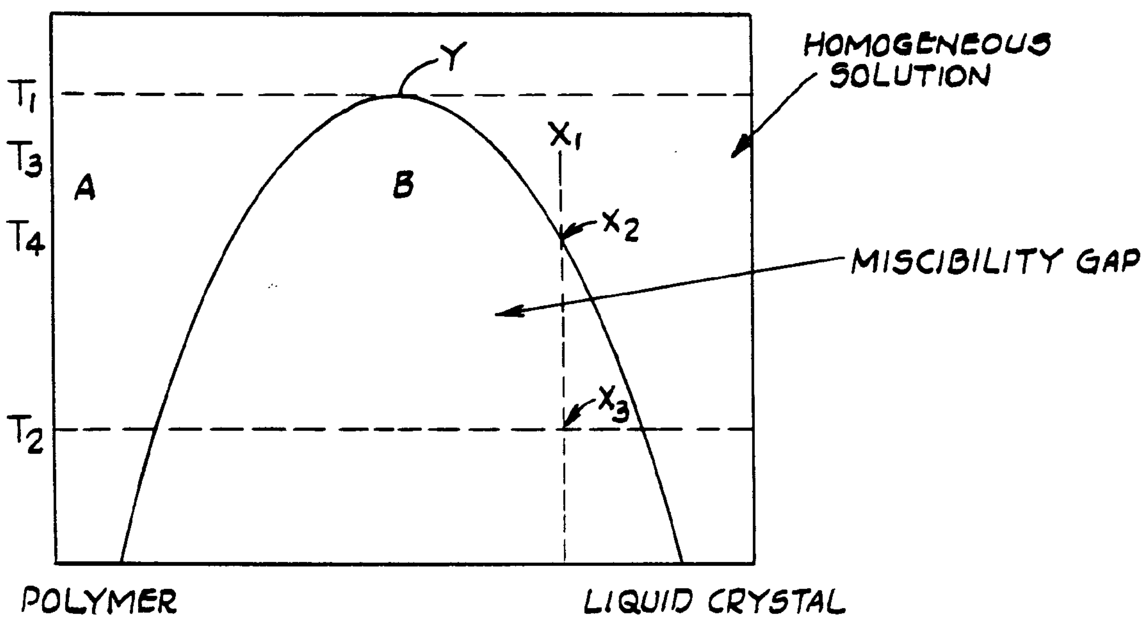


Fig. 14

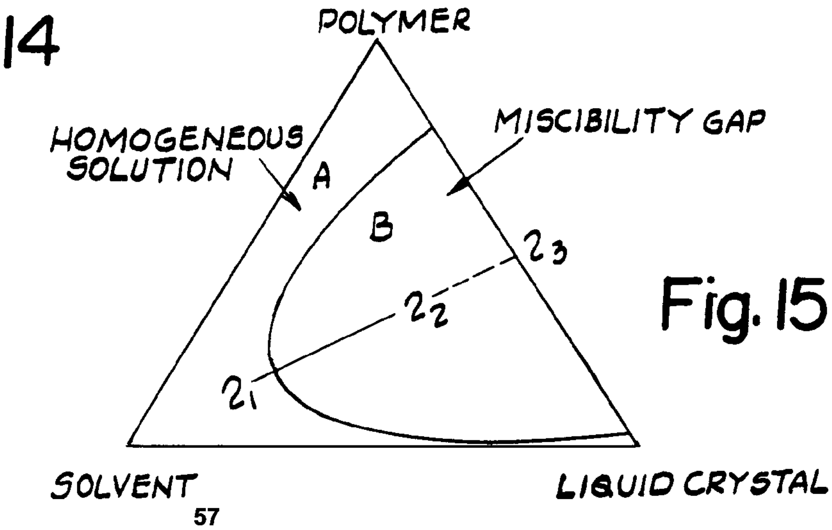


Fig. 15

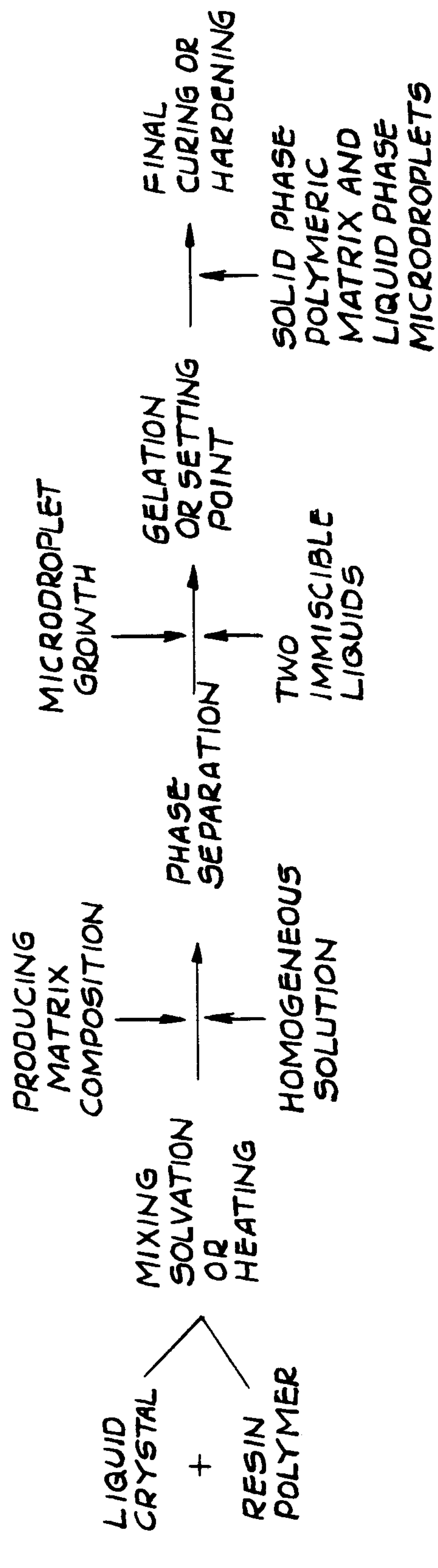
LIQUID CRYSTAL
+
RESIN POLYMER
MIXING SOLVATION OR HEATING
PRODUCING MATRIX COMPOSITION
HOMOGENEOUS SOLUTION
PHASE SEPARATION
MICRODROPLET GROWTH
TWO IMMISCIBLE LIQUIDS
GELATION OR SETTING POINT
SOLID PHASE POLYMERIC MATRIX AND LIQUID PHASE MICRODROPLETS
FINAL CURING OR HARDENING

Fig.16

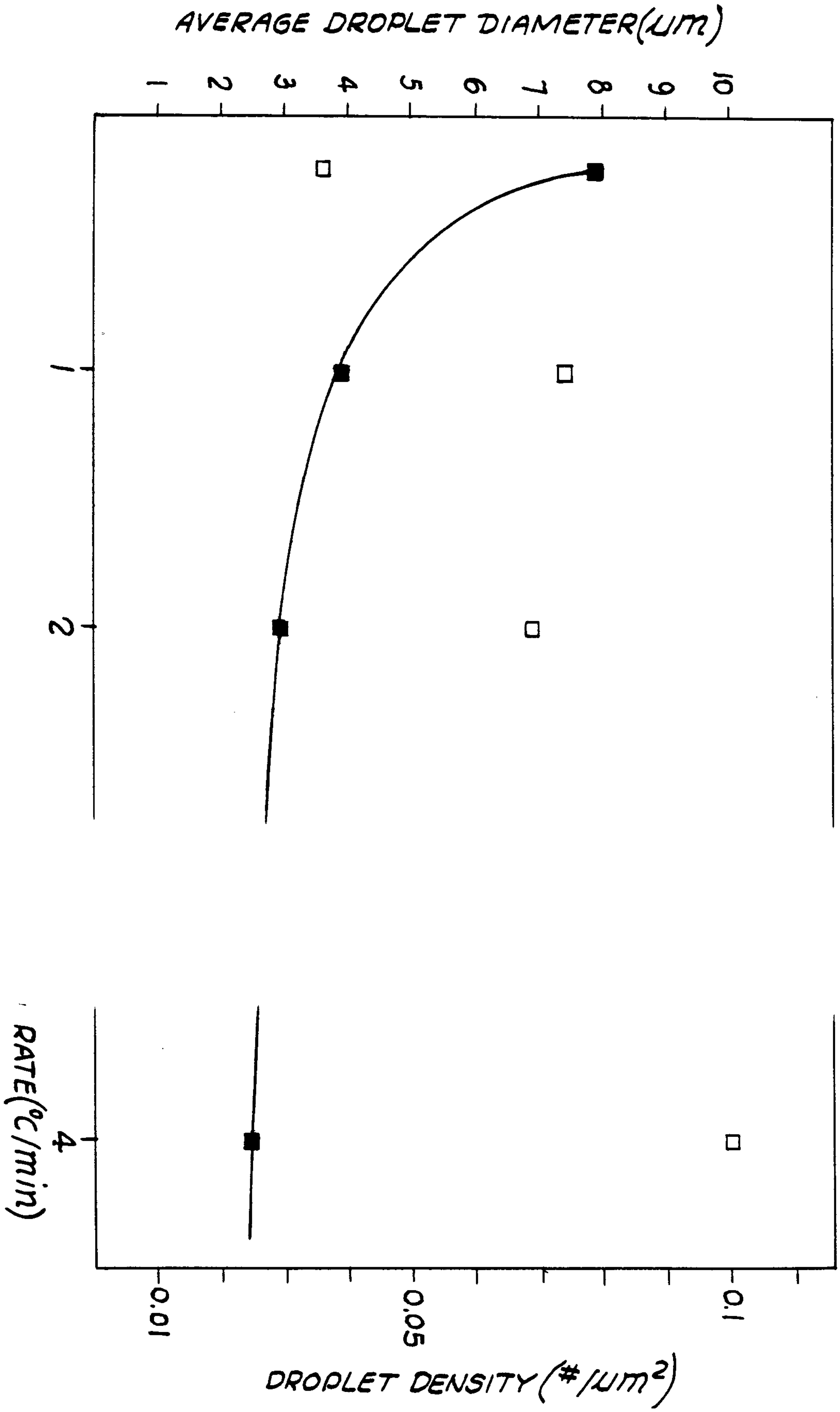
AVERAGE DROPLET DIAMETER(µm)
1
2
3
4
5
6
7
8
9
10
RATE(°C/min)
1
2
4
0.01
0.05
0.1
DROPLET DENSITY(#/µm²)

Fig.17